(19) Europäisches Patentamt
European Patent Office
Office européen des brevets

(11) **EP 1 709 128 B1**

(12) **EUROPEAN PATENT SPECIFICATION**

(45) Date of publication and mention
of the grant of the patent:
**04.10.2017   Bulletin 2017/40**

(21) Application number: **05705473.6**

(22) Date of filing: **12.01.2005**

(51) Int Cl.:
*C09G 1/00* *(2006.01)*          *C08K 3/20* *(2006.01)*

(86) International application number:
**PCT/US2005/000834**

(87) International publication number:
**WO 2005/071032 (04.08.2005 Gazette 2005/31)**

(54) **FLOOR FINISH COMPOSITION, LAMINATES, AND METHODES FOR TREATING FLOORS**

BODENPFLEGEMITTEL, LAMINATE SOWIE VERFAHREN ZUR BEHANDLUNG VON BÖDEN

COMPOSITION DE REVETEMENT DE SOL, STRATIFIES, ET PROCEDES DE TRAITEMENT DE SOLS

(84) Designated Contracting States:
**AT BE BG CH CY CZ DE DK EE ES FI FR GB GR HU IE IS IT LI LT LU MC NL PL PT RO SE SI SK TR**

(30) Priority: **12.01.2004   US 756120**
**12.04.2004   US 822636**
**11.05.2004   US 843014**
**11.01.2005   US 33029**

(43) Date of publication of application:
**11.10.2006   Bulletin 2006/41**

(73) Proprietor: **ECOLAB INC.**
**St. Paul, MN 55102-2233 (US)**

(72) Inventors:
• **LI, Minyu**
**Oakdale, MN 55128 (US)**
• **HEI, Robert, D., P.**
**Baldwin, WI 54002 (US)**
• **CARLSON, Lauren, K.**
**St. Paul, MN 55116 (US)**
• **GARDNER, James, P.**
**Stillwater, MN 55082 (US)**
• **MATTIA, Paul, J.**
**Prior Lake, MN 55372 (US)**

(74) Representative: **Godemeyer Blum Lenze
Patentanwälte
Partnerschaft mbB - werkpatent
An den Gärten 7
51491 Overath (DE)**

(56) References cited:
**EP-A- 0 911 463          EP-A- 1 209 191
US-A- 4 371 398          US-A- 4 594 363
US-A- 5 290 954          US-A- 5 965 686
US-A1- 2002 096 088**

## Description

### Technical Field

The invention relates to floor finish compositions, laminates prepared from a floor finish composition, and methods for treating floors.

### Background

Considerable effort is expended in maintaining the appearance of floors and floor finishes, including frequent washing, buffing, and periodic renewal. "Wet look" finishes are sometimes thought to have an especially desirable appearance, and some clear finishes are formulated to attain high gloss levels. Sometimes due to wear, high traffic, environmental conditions or other factors it is difficult to maintain an adequate protective coat atop a flooring substrate. In such instances ground-in or adsorbed dirt and debris can permanently stain or discolor the flooring substrate.

Many floor finishes are formulated to be as clear as possible to avoid yellowing, to avoid hiding the underlying flooring and to permit multiple layers to be applied over time, or are heavily pigmented to provide adequate coverage using thin coats. Clear finishes sometimes have a yellow coloration or may be prone to yellowing when weathered. Ground-in or adsorbed dirt and debris can cause discoloration of clear and pigmented finishes, as can overly aggressive use of chemical strippers.

Floor finish compositions are often provided as chemically strippable polymeric films that can be coated on the upper surface of flooring substrates (e.g., tiles, sheet vinyl goods, wood flooring and terrazzo) to extend the substrate use life and to provide the substrate with a desirable glossy appearance. The finish can be removed and replaced when it becomes worn or soiled. Patents involving floor finishes and mentioning pigments or colorants include U.S. Patent Nos. 4,680,237, 5,284,705, 5,851,618 and 6,472,027. Various black pigmented floor finishes have been marketed in the U.S., including ONYX™ black urethane modified acrylic sealer (from Perma, Inc.), BLACKJACK™ black plank floor finish (from JohnsonDiversey Inc.) and No. 402 glossy black floor finish (from Spartan Chemical Company, Inc.). A floor finish containing optical brightener is described in U.S. Patent No. 4,371,398. Various finishes containing optical brighteners have been marketed in the U.S., including ISHINE™ floor finish (25% nonvolatiles, from Spartan Chemical Co.) and BETCO BEST™ floor finish (32% nonvolatiles, from Betco Corp.). Floor finishes having an abrasive-containing surface finish, and said to be made using various abrasive particulates including titanium oxides such as titanium dioxide are described in U.S. Patent No. 5,445,670.

### Summary

We have found that inclusion of an appropriate amount of a lightness inducing agent in a transparent or translucent floor finish can impart to the floor a cleaner and more desirable perceived appearance. The present invention thus provides in one aspect a floor finish composition comprising a film former and sufficient lightness inducing agent to provide a hardened finish having an increased lightness value or whiteness index.

A floor finish composition is provided according to the invention. The floor finish composition includes a film former, 1 wt% to 30 wt% of a lightness inducing agent, and a diluent. The floor finish composition includes the lightness inducing agent in an amount sufficient for the composition to provide, when evaluated using a hardened finish having a thickness of about 0.005 mm on a LENETA™ Form 5C Opacity chart and a MINISCAN™ XE Plus color spectrophotometer having 45° illumination and a 0° viewing geometry:

a) an increased lightness value L* on the black portion of the chart and
b) a contrast ratio ($CR_{0.80}$) less than about 0.7 when evaluated on the black and white portions of the chart.

A laminate is provided according to the invention. The laminate includes a flooring substrate and a lightened dried coating provided over the flooring substrate. The lightened dried coating comprises a result of drying or curing the floor finish composition. An overcoat may be provided over the lightened dry coating, or the overcoat may be provided as the lightened dried coating.

A method for treating a floor is provided according to the invention. The method includes steps of stripping a finish from a flooring substrate to provide a stripped flooring substrate, and applying a lightened floor finish composition over the stripped flooring substrate.

An additional method for treating a floor is provided according to the invention. The additional method includes steps of cleaning a finish provided on a flooring substrate to provide a cleaned finish, and applying a lightened floor finish composition over the cleaned finish.

A kit is provided according to the invention. The kit includes a floor finish composition and at least one of an applicator head, a mop, a masking material, safety equipment, container opener, a backpack for holding the floor finish composition, instructions for using the floor finish composition, or mixing tools. The floor finish composition can be provided in a container that can be a flexible bag or a rigid container.

A further kit is provided according to the invention. The kit includes a film former provided in a first container, lightness inducing agent provided in a second container, and diluent provided in the first, second or both containers, together with instructions for mixing part or all of the contents of the first and second containers at an intended use site to provide a lightened floor finish composition.

**Brief Description of the Drawings**

Figs. 1(a)-(c) are diagrammatic views showing laminates of a floor and a series of coatings provided thereover according to the principles of the present invention.

Fig. 2 is a diagrammatic view showing a laminate of a floor and a series of coatings provided thereover according to the principles of the present invention.

Fig. 3 is a diagrammatic view showing a laminate of a floor and a series of coatings provided thereover according to the principles of the present invention.

Fig. 4 is a diagrammatic view showing a laminate of a floor and a series of coatings provided thereover according to the principles of the present invention.

Fig. 5 is a diagrammatic view showing a laminate of a floor and a series of coatings provided thereover according to the principles of the present invention.

Fig. 6(a) and Fig. 6(b) show containers that can be used for containing a floor finish composition according to the present invention.

**Detailed Description**

The phrase "floor finish composition" refers to a composition that is applied to a floor and allowed to dry or cure to form a hardened finish. The floor finish composition can be referred to more simply as the composition. A film or coating of the floor finish composition provided on a substrate (e.g., a flooring substrate), and prior to drying or curing, can be referred to as a "wet coating." It should be appreciated that the phrase "drying or curing" refers to drying, curing, or a combination of drying and curing. Similarly, the phrase "dried or cured" refers to a coating that has undergone drying, curing or a combination of drying and curing.

The phrase "hardened finish," refers to a floor finish that has sufficiently dried or cured so that the finish can be characterized as "tack-free." In general, a tack-free finish represents a level or degree of drying or curing of the floor finish composition so that one can walk thereover without causing unacceptable tracking. It is desirable for a floor finish composition to sufficiently dry or cure so that a person can walk across the hardened finish without sticking to the hardened finish and creating tracks, and so that a person can apply, if desired, an additional layer of floor finish composition thereover. The hardened finish can be referred to as a "dry coating" or as a "hardened coating." The phrase "floor finish composition" can refer to the composition when it is provided in a container for subsequent application to a substrate such as a floor, and it can refer to the composition when provided as a layer on a substrate such as a floor prior to curing or drying (a "wet coating").

Words of orientation such as "atop," "beneath," "on," "under," "upper," "uppermost," "lowermost," "between" and the like for the location of various layers in the disclosed finishes refer to the relative position of one or more layers with respect one another or where the context requires with respect to an underlying flooring substrate. The words of orientation are not intended to require that certain layers are adjacent or to exclude the presence of intervening layers between the identified layers.

The word "oligomer" is a polymerizable (e.g., crosslinkable) moiety containing a plurality (e.g., 2 to about 30) of monomer units. The phrase "film former" refers to the polymer or polymer forming component in the floor finish composition or the hardened finish that forms or facilitates the formation of a tack-free film on a substrate when applied to the substrate as a coating. The film former can be referred to as the binder. The film former may hold the lightness inducing agent in place in the wet coating or the dry coating. The phrase "film former" may refer to a polymer and may refer to components that form a polymer (e.g., monomer, oligomer, prepolymer, and crosslinking agent). In general, the phrase "film former" is not intended to refer to polymeric lightness inducing agents.

The phrase "hardening system" refers to a chemical or physical process (including solvent evaporation or other drying processes, photochemical reactions, electrochemical reactions, radical processes, thermal processes, ionic processes, moisture cure processes and multiple-component (e.g., two- or three-component) crosslinking processes) through which a composition becomes dried, crosslinked or otherwise cured to form a tack-free film.

The word "light" refers to electromagnetic radiation in the UV or visible range, approximately $2.5 \times 10^{-7}$ meters to $7.7 \times 10^{-7}$ meters.

The word "translucent" may be used to describe some of the disclosed floor finish compositions or hardened finishes. A hardened finish can be characterized as translucent if, when applied to a substrate using a No. 10 drawdown bar (available from Paul N. Gardner Co.) atop a patterned flooring substrate, the flooring substrate pattern remains discernible under normal daytime illumination to an observer standing on the floor. A floor finish composition can be characterized as translucent if, when so applied, the hardened finish is translucent. A No. 10 drawdown bar is assumed to provide a wet coating thickness of about 1 mil and, for a floor finish composition having a solids content of about 20 wt. %, it is assumed that the dry coating will have a thickness of about 0.2 mil (0.005 mm). Those skilled in the art will appreciate that other coating thicknesses may be employed, and that the dry coating thickness for a given floor finish composition will depend on the floor finish composition solids level and the applied wet coating thickness. The hardened coating translucency may also depend on the recommended application thickness. For example, a floor finish composition may provide a translucent hardened finish as a 0.2 mil thick dry coating but may provide an opaque hardened finish if the coating is applied thickly enough or built up in a sufficiently thick multilayer coating. Those skilled in the art will also appreciate that a floor finish composition that is characterized as translucent may in some instances be opaque when considered in bulk liquid form (such as in a container). Some of the disclosed floor finish compositions may have a milky appearance when provided in such bulk form.

The phrase "lightness inducing agent" refers to a material that imparts an increased lightness value L* or whiteness index WI when used in a hardened finish provided over a flooring substrate compared with an otherwise identical hardened finish except not containing the lightness inducing agent and provided over the same flooring substrate. The phrase "lightened floor finish composition" refers to a floor finish composition that contains a sufficient amount of lightness inducing agent to impart increased lightness value L* or whiteness index WI to a hardened finish provided over a flooring substrate compared with a hardened finish prepared from an otherwise identical floor finish composition except not containing the lightness inducing agent and provided over the same flooring substrate. The hardened finish formed from the lightened floor finish composition can be referred to as the "lightened dry coating" or the "lightened hardened finish".

The phrase "jobsite-renewable" refers to a hardened floor finish which, at such time as it may be desired to do so, can be removed from an underlying flooring substrate without removing substantial portions of the flooring substrate. This removal of the finish may use minimally abrasive measures such as a methylene chloride-free or acetone-free chemical stripper and a mop and detergent solution, mildly abrasive but flooring-safe measures such as a nonwoven floor scrub pad, or other measures such as peeling (and without requiring aggressive removal techniques such as sandblasting or a stripper based on methylene chloride or acetone), and then replaced with the same or a substantially similar finish and hardened to provide a visibly smooth tack-free film.

The phrase "coating system" refers to a coating over a substrate which includes at least two coating layers. The word "undercoat" refers to a layer or plurality of layers located between the flooring substrate and the topcoat. The words "topcoat" or "overcoat" refer to a layer or plurality of layers provided atop the flooring substrate and the undercoat. The word "sealer" refers to a layer or plurality of layers having sufficient substrate adhesion so that the sealer can be applied atop and adjacent the substrate to provide sealing properties. The phrase "sealer finish" refers to a sealer that exhibits some level of gloss and which may be burnished or buffed and used as a topcoat. Thus it should be understood that there is no requirement that the disclosed coating system should include both an undercoat and a topcoat. Furthermore, the lightened floor finish composition may be used to provide any one or more of the sealer, sealer finish, undercoat, and topcoat. In addition, the lightened floor finish composition may be used to provide one or more layers of any of the sealer, sealer finish, undercoat, or topcoat.

The word "laminate" refers to a structure having a substrate and at least one coating thereover. The substrate can be a flooring substrate. Exemplary flooring substrates include vinyl composition tiles, terrazzo, concrete, wood flooring, vinyl sheet flooring, linoleum, rubber sheeting, rubber tile, cork, synthetic sports floor, vinyl asbestos tile, bamboo, wood laminate, engineered wood products (e.g. wood epoxy blends, permanently coated substrates such as those available under the names PERGO™ and PARQUET™), stone, marble, slate, ceramic tile, grout, and dry shake floor. The coating can be provided as a wet coating or a dry coating, and can be provided as one layer or multiple layers. At least one of the layers is a result of application of a lightened floor finish composition. In the case of multiple layers, two or more of the layers can be provided from the identical lightened floor finish composition, and an additional layer or layers may be present that are not the result of a lightened floor finish composition.

A floor can be coated with a lightened floor finish composition to provide the floor with a "cleaner appearance" than a floor coated with a floor finish composition not containing the lightness inducing agent. It should be understood that a "cleaner appearance" refers to a subjective evaluation of the appearance of a floor after the floor has been treated with a floor finish composition containing lightness inducing agent. In general, the lightness inducing agent may provide an increased lightness value L* or whiteness index WI to the floor compared with an identical floor finish composition except not containing the lightness inducing agent. The lightened floor finish composition can be applied to a new floor and it can be applied to a used floor to provide a "cleaner appearance." In the case of a new floor, the lightened floor finish composition may have a greater effect on non-white floors such as beige floors and floors provided with a somewhat darker pattern. The lightened floor finish composition may be useful for used floors that have been worn as a result of foot traffic and may contain soiling as a result of traffic.

The lightened floor finish composition can be used in industrial or commercial floor finishing operations. In many industrial or commercial floor finishing operations, it is desirable to treat a floor in a single overnight period. For example, there is often a limited amount of time when employees and customers are not walking on a floor and during which that floor may be available for stripping, cleaning, and applying a new finish thereto. In certain environments that are open 24 hours a day, such as hospitals and grocery stores, it is desirable to treat the floors as quickly as possible. Conventional techniques for finishing a commercial or industrial floor include stripping the floor to remove the existing and worn coatings, and then applying multiple layers of a floor finish composition. By introducing at least one layer of a floor finish composition containing lightness inducing agent, the overall effect may be a cleaner perceived floor appearance. Multiple layers of lightened floor finish composition may increase or enhance such a cleaner appearance. In addition, it may be desirable to provide an overcoat over the lightened hardened finish, or to provide a sealer over the flooring substrate.

In a conventional floor treating operation for commercial or industrial applications, the floor is often cleaned to remove soil or stripped to remove existing floor coatings. One or more (typically one to about 20) coatings may be applied to the cleaned or stripped floor to provide a restored finish. In general, the number of coatings often depends on the time period available for treating the floor. In a single overnight period of about seven or eight hours, it may be difficult to apply more than seven or eight coatings. In addition, certain types of coatings may be considered more durable than others and it may not be necessary to apply more than one or two layers of more durable coatings to obtain the desired level of protection or gloss. Certain coatings may require multiple layers to achieve the desired level of protection or gloss. Furthermore, the applied floor finish compositions may be different and, as a result, may have different drying or curing rates.

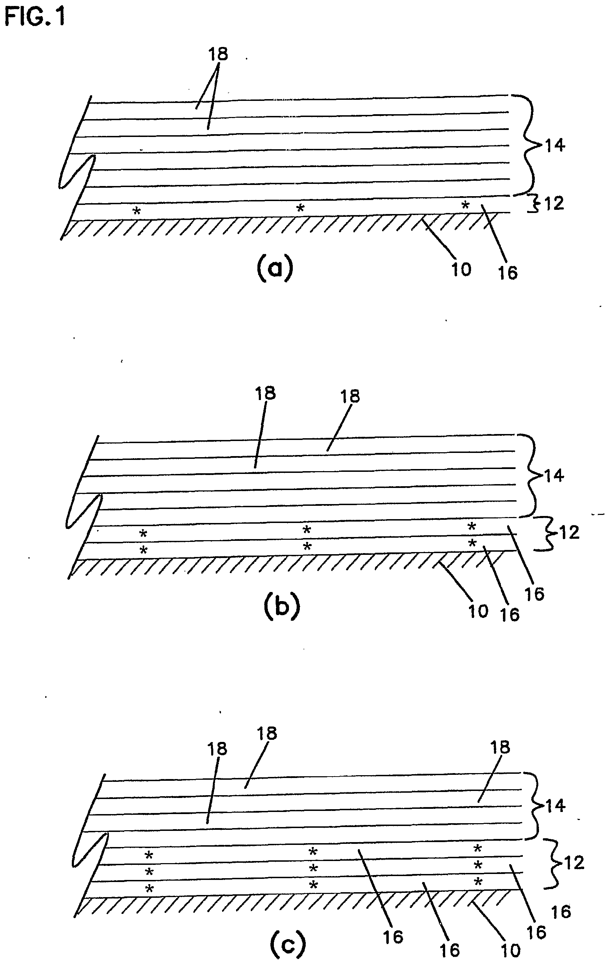

Now referring to **Figs. 1(a) - (c),** a flooring substrate **10** is shown having an undercoat **12** and an overcoat **14.** The undercoat **12** is shown in **Fig. 1(a)** as containing a single lightened dry coating **16.** In **Fig. 1(b),** the undercoat **12** is shown containing two lightened dry coatings **16,** and in **Fig. 1(c),** the undercoat **12** is shown containing three lightened dry coatings **16.** There may be as many lightened dry coating layers as desired. It should be appreciated that a lightened floor finish composition is applied to form each lightened dry coating **16** and the subsequent or upper layer may be applied after the underlying layer has become tack-free. Multiple layers of lightened dry coating **16** can be provided to generate a more even application of the lightened dry coating **16** across the flooring substrate **10** compared with a single layer, and may provide an enhanced "cleaner appearance" or lightened effect compared with a single layer. Multiple layers of lightened dry coating **16** may help reduce the existence of gaps, thin areas, or thick areas that may occur over the flooring substrate during application. By providing multiple layers, a more consistent and even application across the floor may be achieved. The overcoat **14** can include multiple dry coatings **18,** as desired. **Figs. 1(a) - (c)** disclose the presence of four to six dry coating layers **18.** It should be understood that there may be as few as one dry coating **18,** and as many dry coating layers as desired to provide a level of gloss or protection desired in a given application. In addition, it should be understood that the overcoat **14** can be omitted, if desired. For example, the undercoat **12** containing at least one lightened dry coating **16** may provide the desired level of gloss or protection for a given application. Similarly, the undercoat **12** can be omitted and the overcoat **14** can be provided containing at least one lightened dry coating.

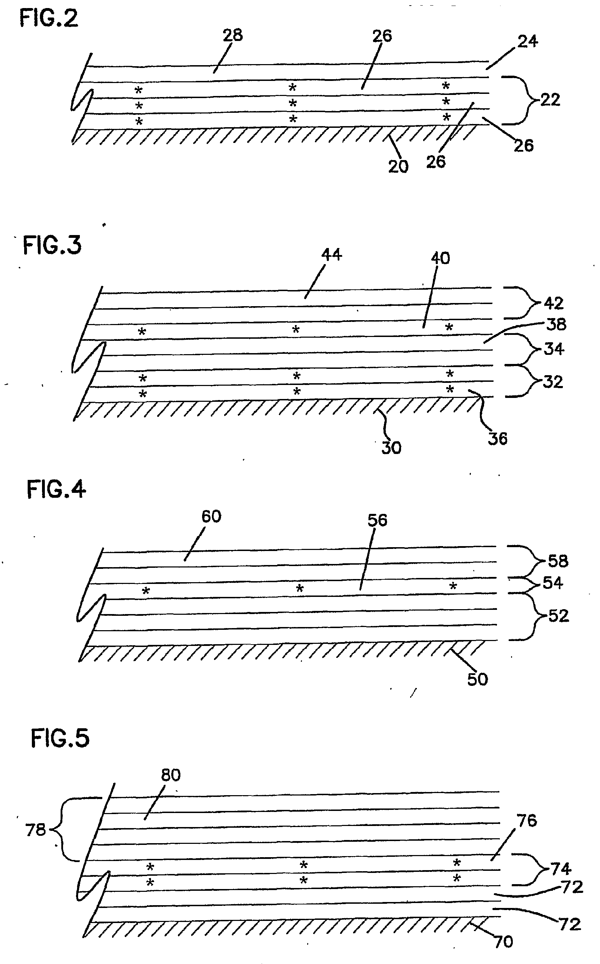

Now referring to **Fig. 2,** a flooring substrate **20** is shown having an undercoat **22** and an overcoat **24.** The undercoat **22** includes multiple lightened dry coatings **26** (although a single lightened dry coating **26** may be provided, if desired). The overcoat **24** includes a single dry coating layer **28.** The single dry coating layer **28** may be provided as a polyacrylate based waterborne coating or it may be provided as a relatively more durable type of coating such as a polyurethane coating, epoxy coating, or thermally or UV curable coating. Many of the relatively more durable coatings are often applied as a relatively thick layer with fewer coats to provide the desired level of protection or gloss. It should be understood that the overcoat **24** can be provided having multiple layers, and at least one of the overcoat layers can be provided as a lightened dry coating.

A floor resulting from a "scrub and recoat" technique is shown in **Fig. 3.** The flooring substrate **30** is shown having an undercoat **32** and an overcoat **34** provided thereover. By way of example, the undercoat **32** is shown having multiple lightened dry coatings **36,** and the overcoat **34** is shown having multiple dry coatings **38.** It should be understood that the undercoat **32** can have any number of lightened dry coatings **36** and the overcoat **34** can have any number of dry coatings **38.** After the flooring substrate **30** containing undercoat **32** and overcoat **34** has received a certain level of wear, the overcoat **34** may be cleaned and a new lightened floor finish may be applied thereover to form a lightened dry coating **40.** An advantage of the "scrub and recoat" technique is that stripping the overcoat **34** and the undercoat **32** from the flooring substrate **30** can be avoided. In addition, multiple lightened dry coating layers **40** may be applied to enhance the evenness of coverage or to increase the lightening effect. In addition, an overcoat **42** can be provided thereover and can include one or more dry coating layers **44.** Furthermore, the lightened dry coating layers **40** can be omitted and one or more of the dry coating layers **44** can be provided as a lightened dry coating.

An additional exemplary "scrub and recoat" technique is illustrated by **Fig. 4** where the flooring substrate **50** includes a first coating **52** that can include one or more undercoat layers or one or more overcoat layers wherein none of the undercoat layers or overcoat layers is a result of a lightened floor finish composition. That is, the first coating **52** can include one or more coating resulting from the same or different floor finish composition but none of the coatings being considered a lightened dry coating. The first coating **52** can be scrubbed and a lightened floor finish composition applied thereover to form an undercoat **54** containing a lightened dry coating **56**. An overcoat **58** can be provided thereover and can include one or more dry coating layers **60**. In addition, the undercoat **54** may be omitted and one or more of the dry coating layers **60** in the overcoat **58** may be provided as a lightened dry coating. An advantage of the "scrub and recoat" technique is that the lightening effect may be achieved on a worn or soiled floor without stripping the floor.

**Fig. 5** refers to a flooring substrate **70** that includes one or more sealer layers **72**. In the case of coating certain substrates such as concrete or terrazzo, it may be desirable to put down one or more sealer layers **72**. An undercoat can be provided thereover that includes at least one lightened dry coating **76**. An overcoat **78** can be provided thereover, and the overcoat **78** can include one or more dry coating layers **80.**

It should be understood that the various combinations of layers shown in **Figs. 1-5** are not exhaustive and are merely representative of various ways the lightened floor finish composition can be used in exemplary floor finish applications to provide a lightening effect. That is, the lightened floor finish composition may be used in combination with other floor finish compositions in overall techniques for treating a floor. In addition, although the lightened floor finish composition has been shown as forming the undercoat, it should be understood that other floor finish compositions may be used to form an undercoat that may or may not include a lightness inducing agent. Furthermore, the undercoat need not include a layer resulting from a lightened floor finish composition, and the lightened floor finish composition may be used in other components of the laminate including the sealer or the overcoat.

Several different types of floor finish compositions are commonly available on the market. One type of floor finish composition may be referred to as waterborne polyacrylate based compositions. In general, waterborne polyacrylate based compositions include polyacrylate or polyacrylate forming components. It should be understood that the term "polyacrylate" includes methyl or other alkyl substituted polyacrylate or polyacrylate forming components (e.g., polymethacrylates or polymethacrylate forming components). The compositions may or may not be dispersed in water. A waterborne polyacrylate based composition may be desirable due to their relatively low level of VOC emission as the composition dries or cures, and due to the ease with which such compositions may be mop-applied to flooring substrates. Additional types of floor finish compositions include polyurethane based compositions, epoxy based compositions, UV curable compositions, thermally curable compositions and others that will be familiar to those skilled in the art. These compositions may include higher VOC levels, may require mixing of different components or parts to create a cure reaction, or may utilize a certain type of light or heat to cause a cure reaction. It should be understood that this list is not comprehensive of the various types of floor finish compositions available or those that may become available in the future. In addition, it should be understood that these listed compositions are not mutually exclusive. The reference to a "floor finish composition" refers to any of the various types of floor finish composition unless the context of the description refers to a specific category.

A variety of lightness inducing agents can be used in the floor finish composition. In general, the lightness inducing agent will provide a hardened floor finish that has a lightening effect as demonstrated by an increased lightness value $L^*$ or an increased whiteness index WI compared with an otherwise identical hardened floor finish except not containing the lightness inducing agent. The level of increased lightness value $L^*$ may be quantified, if desired. For example, a floor finish composition may be characterized as providing an increased lightness value $L^*$ when the floor finish composition provides a lightness value $L^*$ of at least about 6 when measured at a dried coating thickness of about 0.2 mil (0.005 mm) on the black portion of a LENETA Form 5C Opacity chart using a MINISCAN XE Plus color spectrophotometer (from Hunter Associates Laboratory). Under the same test, the lightness value $L^*$ of the noncoated opacity chart and the lightness value $L^*$ of a conventional commercially available floor finish (e.g. GEMSTAR LASER™ finish from Ecolab Inc.) provide lightness values $L^*$ less than 6. Using the same test, the lightness value $L^*$ of the floor finish composition containing lightness inducing agent may for example be greater than about 10, greater than about 20, greater than about 30, or greater than about 40. The level of increased whiteness index WI may also be quantified, if desired. For example, a floor finish composition may be characterized as providing an increased whiteness index WI when the floor finish composition provides whiteness index WI greater than 2 when measured at a dried coating thickness of about 0.2 mil (0.005 mm) on the black portion of the LENETA Form 5C Opacity chart and using the MINISCAN XE Plus color spectrophotometer. The whiteness index of the black portion of the LENETA Form 5C Opacity chart has been measured at less than about 1 when uncoated or when coated with GEMSTAR LASER finish. Using the same test, the whiteness index WI of the floor finish composition containing lightness inducing agent may for example be greater than about 3, greater than about 5, greater than about 10, or greater than about 20.

Exemplary lightness inducing agents include pigments (e.g. organic and inorganic pigments), soluble salts, and crosslinking agents. The lightness inducing agents can be used individually or in combination in various floor finish compositions. The lightness inducing agents can include finely-divided particulates that may be obtained in dry form (e.g., powder, chips or flakes) or as emulsions, suspensions, lattices or other liquid or semi-solid forms. The lightness inducing agents may for example have a submicron average particle diameter, and may for example have a refractive index sufficiently different from that of the film former so that there will be greater diffuse or specular reflectance of incident light than that obtained in the absence of the lightness inducing agent.

Exemplary lightness inducing agents include materials designated as opaque or semi-opaque pigments by the National Association of Printing Ink Manufacturers in their NPIRI Raw Materials Data Handbook. Additional exemplary lightness inducing agents include materials designated as food grade materials that are compatible as an indirect or direct food additive or substance, such as those described in the Code of Federal Regulations (CFR), Title 21 - Food and Drugs, parts 170 to 186. Additional exemplary lightness inducing agents include organic materials such as functionally modified (e.g., hydrophobically-modified) polymers, polymeric particles (e.g., polymeric nanoparticles), hydrogels, and surface treated inorganic particles, and surface treated organic particles (e.g., polymers).

Core-shell polymer systems and sheathed polymer systems, especially those that have one visual form (e.g., clear or slightly opaque) when dissolved or suspended in the film former and another visual form (e.g., opaque, white or colored) when the film former is dried, crosslinked or otherwise hardened, may be used as lightness inducing agents. By creating a lightening effect when the floor finish composition dries or cures, a visual indication is available to help identify when the floor finish composition has sufficiently hardened so that another floor finish composition can be provided thereover. In addition, such lightness inducing agents may exhibit good resistance to sedimentation or other settling. Such lightness inducing agents may for example serve as complete or partial replacements for more sedimentation-prone lightness inducing agents such as titanium dioxide and zinc oxide. A variety of factors may be responsible for the above-described change in visual form. The lightness inducing agent may for example contain or be capable of forming internal microvoids when the film former is hardened. Such microvoided lightness inducing agents include sequentially emulsion polymerized dispersed particles of heteropolymers in which a polymeric acid "core" is at least partially encased in a polymeric "shell" or "sheath" that is permeable to a volatile base (e.g., ammonia or an organic amine) adapted to cause swelling of the core by neutralization. An aqueous dispersion of such particles may be useful in water-based coating compositions. Prior to coating application, an alkali (e.g., potassium hydroxide, ammonia or a lower organic amine) may be added to the particles or to a composition containing the particles, in order to at least partially neutralize the core (e.g., to a pH of about 6) and cause it to swell. When a coating composition containing the swollen particles is applied to a substrate and allowed or encouraged to dry, the cores may become unswollen and microvoids may form. A variety of core polymers may be employed in such lightness inducing agents, including, for example, polymers of ethylenically unsaturated monomers containing acid functionality such as acrylic acid, methacrylic acid, (meth)acryloxypropionic acid, itaconic acid, aconitic acid, maleic acid or anhydride, fumaric acid, crotonic acid, monomethyl maleate, monomethyl fumarate and monomethyl itaconate. A variety of shell or sheath polymers may also be employed in such lightness inducing agents, including, for example, polymers of unsaturated monomers such as styrene, o-chlorostyrene, 2,6-dichlorostyrene, alpha methyl styrene, divinyl benzene, vinyl naphthalene, pentachlorophenyl methacrylate or pentabromophenyl methacrylate. The core and shell or sheath may be formed in a single stage or in a plurality of stages. The amount of deposited polymer may be sufficient to provide heteropolymer particles having an average unswollen particle diameter (that is, a diameter before neutralization) of about 0.05 to about 5 micrometers, e.g., about 0.1 to about 3.5 micrometers or about 0.2 to about 2 micrometers. Further information regarding this class of lightness inducing agents may be found in U.S. Patent Nos. 4,427,836 and 4,594,363 and in copending Application Serial No. 10/857,593 filed on May 27, 2004, the disclosures of which are incorporated herein by reference.

Pigments designated as "pigment whites" in the Society of Dyers and Colourists Colour Index ("C.I.") and suitable for use in the disclosed floor finish composition include zinc oxide (Pigment White 4, C.I. 77947); lithopone (Pigment White 5, C.I. 77115), titanium dioxide (Pigment White 6, C.I. 77891); zinc sulfide (Pigment White 7, C.I. 77975); antimony oxide (Pigment White 11, C.I. 77052), zirconium oxide (Pigment White 12, C.I. 77990); barium sulfate (Pigment White 21, C.I. 77120); coprecipitated $3BaSO_4/Al(OH)_3$ (Pigment White 23, C.I. 77122) and bismuth oxychloride (C.I. 77163). Other inorganic pigments that may be suitable to induce enhanced lightness properties in the disclosed finishes include boron nitride; mixed titanium, chrome and antimony oxides (Pigment Brown 24, C.I. 77310); zinc sulfide (Pigment Yellow 35, C.I. 77205); mixed titanium, nickel and antimony oxides (Pigment Yellow 53, C.I. 77788); mixed titanium, nickel and niobium oxides (Pigment Yellow 161, C.I. 77895); and bismuth vanadate/bismuth molybdate (Pigment Yellow 184, C. I. 771740). Commercially available titanium dioxide pigments include TI-PURE™ pigments from E.I. DuPont de Nemours and Co. such as TI-PURE R-746 aqueous pigment dispersion and TI-PURE R-960 pigment; KEMIRA™ pigments and UV-TITAN™ pigments from Kemira Pigments Oy such as KEMIRA 660 alumina-silica-polyol surface treated rutile titanium dioxide, KEMIRA RDI-S alumina surface treated rutile titanium dioxide, KEMIRA RD3 alumina-zirconia surface treated rutile titanium dioxide and KEMIRA RDE2 and KEMIRA RDDI alumina-silica surface treated rutile titanium dioxide; TRONOX™ chloride process and TRONOX sulfate process titanium dioxide pigments from Kerr-McGee Corp.; and titanium dioxide pigments from Sun Chemical Corp. Commercially available zinc oxides include zinc oxide powders from U.S. Zinc. (available in a variety of surface areas), and "ultrafine zinc oxides" (zinc oxide having an average particle diameter or average crystallite size less than the shortest wavelength of visible light) such as NANOGARD™ zinc oxide, NANOPHASE™ zinc oxide and NANOTEK™ zinc oxide from Nanophase Technologies Corp.; NANOZINC OXIDE™ from Greencorp Magnetics Pty. Ltd.; UCD-1106E titanium dioxide From Rohm and Haas Co.; ZnO-310 and ZnO-350 ultrafine zinc oxide from Sumitomo-Osaka Cement Co. and ZINOX™ 350 ultrafine zinc oxide from American Chemet Corp.

Organic materials that may be suitable to enhance lightness properties in the disclosed finishes include ACUSOL™ opacifiers (believed to be water-based styrene/acrylic emulsions) such as ACUSOL OP301, OP302P, OP303P, OP304 and OP305 (all from Rohm and Haas Co.); ammonium nonoxynol-4 sulfate (believed to be available in a blend with diethanolamine/styrene/acrylates/divinylbenzene copolymer); HIQUE™ styrene acrylic polymer emulsion polymer microbeads such as HIQUE 821, HIQUE 168, and HIQUE 280S (all from Hankuck Lattices Co., Ltd.); hollow sphere plastic pigments such as HS 3000NA, HS3020NA and HSB 3042NA hollow sphere plastic pigment (all from Dow Chemicals, Inc.); polyacrylate block copolymers with alternating hydrophilic and hydrophobic blocks such as HYPAN™ hydrogels including SA-100H and SR-150H acrylic acid/acrylonitrogens copolymer, SS-201 ammonium acrylates/acrylonitrogens copolymer and QT-100 polyquaternium-31 copolymer (all from Lipo Chemicals, Inc.); KESSCO™ opacifiers such as KESSCO GMS PURE glyceryl stearate, KESSCO DGMS and KESSCO DGS NEUTRAL PEG-2 stearate, KESSCO DGDS PEG-2 distearate, KESSCO PGMS PURE propylene glycol stearate and KESSCO PEG 200-6000 mono- and di-laurates, oleates and stearates (all from Stepan Chemical Co.); LIPONYL™ polyamide powders such as LIPONYL 20 LL and 10 BN 6058 (both from Lipo Chemicals, Inc.); LIPOLIGHT™ OAP/C polydodecanamideaminium triazadiphenylethenesulfonate/polyvinyl alcohol copolymer (from Lipo Chemicals, Inc.); Lipo PE BASE G-55 glycerin and diglycol/cyclohexanedimethanol/isophthalates/sulfonated isophthalates copolymer (from Lipo Chemicals, Inc.); ORGASOL™ polyamide powders such as ORGASOL 2002 D Nat Cos, 2002 EX D Nat Cos, 2002 UD Nat Cos, 4000 EX D Nat Cos, 1002 EX D Blanc 10 Cos, 1002 D Nat Cos and 2002 EX D Nat Cos (all from Lipo Chemicals, Inc.); PARALOID™ impact modifiers such as PARALOID KM-342, PARALOID KM-342B and PARALOID KM-334 (all from Rohm and Haas Co.); ROPAQUE™ opaque polymer emulsions such as ROPAQUE OP-96, ROPAQUE AF-1055 and ROPAQUE ULTRA (all from Rohm and Haas Co.); and SUNSPHERES™ LCG styrene/acrylates copolymer (from Rohm and Haas Co.).

Waterborne solutions or dispersions of lightness inducing agents may be used, if desired, with waterborne floor finish compositions. Acrylic dispersions of lightness inducing agents may be desirably used in acrylic floor finish compositions. Mixtures of lightness inducing agents may also be employed.

Exemplary lightness inducing agents also include diluent soluble lightness inducing agents that provide a lightening effect once the diluent is removed. In general, the phrase "diluent soluble lightness inducing agents" refers to those lightness inducing agents having at least 10 g/L solubility in a diluent or diluents provided in the floor finish composition. Such solubility may for example be greater than about 50 g/L. The diluent may be, for example, water or one or more organic solvents.

Non-diluent soluble lightness inducing agents (e.g., some pigments) may have a tendency to settle in a floor finish composition containing that diluent. The extent of settling may be reduced by utilizing dispersing agents or dispersants. To reduce the amount of settling and to reduce the use of dispersants, the lightness inducing agent can be selected as an organic soluble lightness inducing agent that is soluble in the diluent of the floor finish composition. For example where the floor finish composition is waterborne, the lightness inducing agent may be water soluble. If the floor finish composition includes organics as a solvent or co-solvent, the lightness inducing agent can be provided so that it is soluble in the organic solvent or co-solvent.

Exemplary water soluble lightness inducing agents include salts such as potassium acetate, potassium citrate, potassium carbonate, sodium carbonate, potassium sodium carbonate, and mixtures thereof.

Another exemplary class of lightness inducing agents includes organometallic compounds that interact with film formers containing hydroxy or carboxyl groups to create an opacifying effect. Exemplary organometallic compounds include titanates and zirconates. Exemplary titanates and zirconates are available under the name TYZOR™ (from E.I. Du Pont De Nemours & Co.) including TYZOR LA (water based lactic acid titanium chelate ammonium salt for aqueous system applications), TYZOR 217 (aqueous sodium zirconium lactate), TYZOR 212 (zirconium chelate soluble in water) and TYZOR TEAZ (organic zirconium chelate with triethanolamine as chelating agent).

Sufficient lightness inducing agent may be used in the floor finish composition to impart to the hardened finish a noticeable increase in lightness without making the finish non-translucent. Lightness can be measured using a spectrophotometer that provides color values in the L\*A\*B color space (or values that can be converted thereto) from suppliers including Byk-Gardner, Color-Tec Associates, Inc., Konica Minolta, Hunter Associates Laboratory, X-Rite Inc. and others that will be familiar to those skilled in the art of color measurement. Lightness can also be assessed using the human eye, which typically is most sensitive to changes in hue and very sensitive to changes in chroma (saturation), but also is fairly sensitive to changes in lightness. As the lightness inducing agent level initially increases, the lightness value may also increase and the floor may have a cleaner yet perceptibly natural appearance. However, as the lightness inducing agent level increases, the coating translucency (and transmittance) may also be reduced. The less translucent the coating, the more the underlying tile surface or underlying pattern will be masked or obliterated. At high lightness inducing agent loading levels, the floor may take on an unnaturally white or even painted appearance. By balancing the lightness inducing agent loading level to attain an appropriate lightening effect and appropriate translucency, a cleaner-appearing yet discernible coated floor may be attained. The resulting "clean look" floor may have a more desirable appearance from a user's perspective and may require less cleaning or less regular maintenance from a custodial perspective.

The desired amount of lightness inducing agent may also depend on the chosen agent's hiding power. Hiding power can be evaluated for a floor finish composition by applying the floor finish composition to a LENETA Form 24B Gray Scale chart to provide dry coating thickness of about 0.015 mm (0.6 mil). Multiple layers can be applied to achieve the dry coating thickness. An observer located 3 meters from the coated gray scale chart identifies the first gray scale bar that can be clearly differentiated from a white background, and this corresponds to the hiding power for the floor finish composition. Higher gray scale bar values correspond to coatings with greater hiding power and a better capability to mask an underlying surface. Accordingly, one would understand that lightness inducing agents that provide a floor finish composition having high hiding power (e.g., titanium dioxide) may be used at relatively lower amounts. The floor finish composition may be formulated to provide a hiding power of less than about 3, and may be formulated to provide a hiding power of less than about 2. A further ratio can be calculated by dividing the lightness value L* by the hiding power. For the ratio of the lightness value L* to the hiding power, the lightness value L* and hiding power values may be based upon a dry coating thickness of about 0.015 mm obtained from dry coatings on a LENETA Form 5C Opacity Chart and a LENETA Form 24B Gray Scale chart. The lightness value L* is measured over the black part of the Opacity chart and the hiding power is determined as the first gray scale bar that can be clearly differentiated from the white background on the Gray Scale chart. It should be noted that the lightness value L* used for the ratio of the lightness value L* to the hiding power is determined somewhat differently from the lightness value L* previously discussed.

If added to a topcoat, the lightness inducing agents preferably are added at levels that do not objectionably reduce the coating 20° gloss level as hardened (or if need be, as buffed or burnished). The degree of gloss reduction that may be objectionable will vary depending on the particular application. As a general numeric guide, gloss level reductions less than 25 absolute points (on a 100 point scale), and more preferably less than 10 points are preferred. If added to an undercoat (or to a buried overlying layer that will be overcoated with a layer containing none or a lower level of lightness inducing agents, e.g., a gloss topcoat) then usually a greater degree of gloss reduction can be tolerated as it may be compensated for by application of the overlying layer or topcoat. Even if not coated with a higher gloss layer, the overall appearance improvement provided by the enhanced lightness level can sometimes offset a substantial degree of gloss reduction, yielding a finish that will be perceived as having a better appearance despite a considerably reduced gloss level.

In general, the total amount of lightness inducing agent in a floor finish composition should be sufficient to provide a dried coating or hardened finish, or a plurality of dried coating or hardened finish layers, having a desired lightness value L* and whiteness index WI for a particular application. That is, the level of lightness value L* or whiteness index WI may depend upon the floor substrate being coated and the subjective evaluation of a person desiring a sufficient cleaner or lighter floor appearance. The lightening agent is provided in the floor finish composition in an amount of 1wt% to 30wt% to achieve a lightness value L* and whiteness index WI effect on some floor substrates. It should be understood that the maximum amount of lightness inducing agent in the floor finish composition may also depend on the floor finish composition chemistry. Certain types of floor finish compositions may permit higher amounts of lightness inducing agent to achieve the desired lightness value L* and whiteness index WI properties while retaining translucency. For example, in a polyacrylate-based waterborne floor finish the amount of lightness inducing agent may be less than about 30 wt.%, may be about 1 wt.% to about 20 wt.%, or may be about 3 wt.% to about 15 wt.%. The desired amount may represent the total lightness inducing agent amount including inorganic lightness inducing agent(s), organic lightness agent(s), or combinations of inorganic and organic lightness inducing agents. The dried coating may for example contain about 1 wt.% to about 90 wt.% lightness inducing agent or about 5 wt.% to about 70 wt.% lightness inducing agent. Exemplary lightness inducing agents and exemplary ranges of use for several classes of lightness inducing agents (based on the weight percent of the lightness inducing agent in a hardened finish which has been dried or cured) are shown below in Table 1.

**Table 1: Exemplary Lightness Inducing Agents (wt. % Based on Solid Coating)**

| | Lightness Inducing Agent | Generic Examples | Specific Examples | 1st Range, wt.% | 2nd Range, wt.% | 3rd Range, wt.% |
|---|---|---|---|---|---|---|
| **Inorganics** | Pigment whites | Insoluble salts, minerals | titanium dioxide, zinc oxide, antimony oxide, boronitride, barium sulfate, bismuth oxychloride, zinc sulfide, zirconium oxide, mica, talc, limestone, marble | 0.5 - 95 | 2 - 40 | 5 - 35 |
| | Soluble and semi-soluble salts | Sulfates, carbonates, phosphates | Potassium carbonate | 2 - 90 | 5 - 70 | 10 - 50 |
| | Structured inorganic systems | Glass beads, glass bubbles, nanotubes, whiskers, glass flakes | 3M™ Scotchlite™ glass bubbles | 2 - 90 | 5 - 80 | 10 - 60 |
| **Organics** | Nonstructured | Hydrogels, semi-soluble polymers, semi-soluble oligomers, semi-soluble monomers | styrene acrylic copolymers, ACUSOL™ opacifers, ammonium nonoxynol-4-sulfate, ORGASOL™ polyamide powders glyceryl stearate, ethylene glycol distearate, propylene glycol stearate, LIPONYL™ polyamide powders, KESSCO™ opacifiers, HYPAN™ hydrogels | 1 - 95 | 10 - 90 | 20 - 80 |
| | Structured | Microbeads, core-shell polymers, core-sheath polymer, plastic spheres, hollow spheres | ROPAQUE™ opacifiers, hollow sphere plastic pigments HS series from Dow Chemicals, HIQUE™ polymer microbeads, SUNSPHERES™ | 1 - 95 | 2 - 50 | 5 - 35 |
| **Other** | Inorganic-Organic Hybrid Systems | organo metallics | organo titanates, organo zirconates | 0.5 - 97 | 1 - 50 | 1 - 25 |

A variety of film formers can be used in the floor finish composition. Various film formers that may be used may be characterized as solvent-borne, waterborne or 100% solids compositions. Film formers can include monomers, oligomers or polymers and may employ a variety of hardening systems. Waterborne film formers may be water soluble or water dispersible (as is or with a dispersing agent). Exemplary film formers include acid-containing polymers crosslinkable using transition metals, alkaline earth metals, alkali metals or mixtures thereof (e.g., zinc crosslinked acrylics); metal-free (e.g., zinc-free) acrylic finishes (e.g., acrylic copolymers); polyurethanes (e.g., radiation-curable polyurethanes, polyurethane dispersions, multipart polyurethanes, moisture cure polyurethanes, and latent one part polyurethane compositions containing a blocked isocyanate); acrylic urethanes; water-based (e.g., waterborne) latex emulsions; aziridine-crosslinkable dispersions; compositions crosslinkable with carbodiimides; wax emulsions; polyvinyl acetate copolymers (e.g., polyvinyl acetate-polyethylene copolymers); polyvinyl alcohol and its copolymers; polyvinylpyrrolidone and its copolymers; modified cellulose; sulfonated polystyrenes and a variety of other materials that will be familiar to those skilled in the art.

Representative commercially available film formers include DURAPLUS™ 2 modified acrylic low odor mixed-metal crosslinked polymer, DURAPLUS 3 zinc crosslinked acrylic dispersion, DURAGREEN™ MF1 metal free acrylic polymer emulsion, PRIMAL™ B-336AFK modified acrylic zinc crosslinked polymer, PRIMAL B-924ER zinc crosslinked, all acrylic polymer emulsion, PRIMAL E-2483 metal crosslinked acrylic polymer, PRIMAL E-3188 waterborne acrylic polymer dispersion, PRIMAL NT-2624 metal-free polymer, PRIMAL NT-6035 metal-free polymer, RHOPLEX™ B-924 all-acrylic metal-crosslinked floor polish polymer, RHOPLEX 1421 zinc crosslinked acrylic dispersion, RHOPLEX B-1604 metal-crosslinked modified acrylic polymer, RHOPLEX NT-2624 metal crosslinker-free modified acrylic polish, RHOPLEX 3479 low foaming metal-crosslinked modified acrylic polymer, ROSHIELD™ 3120 UV curable acrylate coating and UHS Plus™ metal-crosslinked modified acrylic polymer, all from Rohm & Haas Co.; MEGATRAN™ 205 zinc crosslinked acrylic dispersion and SYNTRAN™ 1580 zinc crosslinked acrylic dispersion from Interpolymer Corp.; MORGLO™ zinc crosslinked acrylic dispersion and MORGLO2™ acrylic styrene polymer emulsion, both from Omnova Solutions Inc.; LAROMER™ PE 22 WN polyester acrylate emulsion, LAROMER LR 8949 aqueous radiation curable aliphatic polyurethane dispersion and LAROMER LR 8983 aqueous radiation curable aromatic polyurethane dispersion, all from BASF Corp.; the ZVOC™ series of UV curable coatings from UV Coatings Limited; NEORAD™ NR-3709 UV curable aliphatic urethane coating from Zeneca Resins; VIAKTIN™ VTE 6155 aliphatic urethane acrylate, VTE 6165 aromatic urethane acrylate and VTE 6169 aliphatic polyester urethane radiation curing resins, all from Solutia, Inc.; 98-283W urethane acrylate from Hans Rahn & Co.; and materials such as those described in U.S. Patent Nos. 4,517,330, 4,999,216, 5,091,211, 5,319,018, 5,453,451, 5,773,487, 5,830,937, 6,096,383, 6,197,844, 6,228,433. 6,316,535 B1, 6,544,942 B1, U.S. Patent Application Publication No. US 2002/0028621 A1, and in the patents cited therein. Preferred film formers include water-soluble or water-dispersible film formers such as metal-free acrylic finishes, acid-containing polymers crosslinked using transition metals, and water-soluble or water-dispersible multicomponent (e.g., two component) polyurethanes. Mixtures of film formers can also be employed.

It may be convenient to prepare the finish by adding the lightness inducing agent to a commercially available floor finish material such as PADLOCK™, GEMSTAR LASER™, GEMSTAR POLARIS™, RIVET™, and TAJ MAHAL™ acrylic floor finishes, GLOSSTEK 100™ and ORION™ polyurethane floor finishes, and COURTMASTER II™, ISI STAR™, TUKLAR MEDICAL™ floor finishes, all from Ecolab Inc.; CORNERSTONE™ and TOPLINE™ acrylic floor finishes from 3M; BETCO BEST™ floor finish from Betco Corp.; HIGH NOON™ acrylic finish from Butchers; CITATION™ and CASTLEGUARD™ acrylic finishes from Buckeye International, Inc., COMPLETE™, SIGNATURE™, TECHNIQUE™ and VECTRA™ acrylic floor finishes from SC Johnson Professional Products; OVER AND UNDER™ floor sealer from S. C. Johnson Professional Products; SPLENDOR™, DECADE 90™, PRIME SHINE™ ULTRA and PREMIER™ acrylic finishes and FIRST ROUND and FORTRESS™ urethane acrylic finishes from Minuteman, International, Inc.; ACRYL-KOTE™ Seal and Finish and PREP Floor Seal from Minuteman, International, Inc.; ULTRA TC™ and UVI-FINISH™ UV-curable finishes from Minuteman, International, Inc; FLOORSTAR™ Premium 25 floor finish from ServiceMaster, Inc.; and UPPER LIMITS™ acrylic finish and ISHINE™ optically brightened floor finish from Spartan Chemical Co. Other suitable formulations that may be combined with the lightness inducing agent include No. AD200C1 polyester polyurethane formulation from Air Products and Chemicals, Inc.; No. MG98-040 polyester polyurethane formulation from Bayer AG; STAY-CLAD™ 5900 hydroxyl-functional acrylic polymer dispersion from Reichhold, Inc.; Nos. 979-1 and 980-3 polyester polyurethane formulations from U.S. Polymers, Inc.; and No. G-2029 acrylic polyurethane formulation from Zeneca Resins.

The lightness inducing agent, film former and diluent or any combination thereof can be combined using stirring, sonification or other mixing methods that will be apparent to those skilled in the art. Mixing may be done prior to use (e.g., when the finish is manufactured and packaged) or prior to use (e.g., when the finish is used at a job site).

Exemplary film formers that may be used in floor finish compositions are identified in Table 2. It should be understood that the reference in Table 2 to "polymers" includes metal containing polymers, metal-free polymers, homopolymers, or copolymers containing groups resulting from polymerization of other components (monomers, oligomers, polymers). For example, polyacrylate polymers can include polyacrylate homopolymers and polyacrylate copolymers. In addition, the film formers may be provided as polymers, oligomers, or monomers that form the indicated polymer. For example, thermally curable polymers and radiation curable polymers can refer to polymers, oligomers, and monomers.

**Table 2: Exemplary Film Formers**

| Category | Examples |
|---|---|
| Common floor finish polymers | polyacrylate polymers, polyacrylate polymer forming components, polyacrylic polymers, polyacrylic polymer forming components, maleic acid/styrene copolymers, polyurethane polymers, epoxy polymers, aziridine crosslinkable polymers, carbodiimide crosslinkable polymers, wax emulsions and polystyrene polymers |

(continued)

| Category | Examples |
|---|---|
| Other film-forming materials | PVP (polyvinylpyrrolidone) polymers, PVA (polyvinyl alcohol) polymers, polyamide polymers, polyimide polymers, calcium caseinate polymers, radiation curable polymers, thermally curable polymers, polyethylene vinyl acetate polymers, chloropolymers, fluoropolymers, polycarbonate polymers, cellulose polymers and silane-crosslinkable polymers |

The floor finish composition can include the film former component in an amount sufficient to provide the desired hardened finish. The amount of film former may vary depending upon the desired characteristics of the hardened finish and upon the desired application properties of the floor finish composition. For example, the hardened finish may contain about 0.5 wt.% to about 99.5 wt.%, about 10 wt.% to about 95 wt.%, or about 50 wt.% to about 90 wt.% film former based on the weight of the hardened finish after drying or curing. The maximum amount of the film former in the floor finish composition may depend on the chemistry of the floor finish composition. Certain floor finish compositions may contain a fairly small amount of diluent and may therefore accommodate a greater amount of the film former. Waterborne polyacrylate-based floor finish compositions may for example contain less than about 45 wt.% film former, or may contain about 10 wt.% to about 30 wt.% film former.

The lightened floor finish composition can include a diluent or it may be provided as "100% solids." In general, a 100% solids floor finish composition refers to a composition that contains less than about 5 wt.% evaporative solvent. That is, a 100% solids floor finish composition may, in fact, contain diluent although the amount of diluent may be relatively small compared with floor finish compositions that are characterized as waterborne or solvent borne. Waterborne or solvent borne floor finish compositions may for example include up to about 97 wt.% diluent. The diluent may for example be entirely water, entirely solvent, or a water/cosolvent mixture. In general, the amount of organic, evaporative solvent may for example be less than about 7 wt.% because of environmental regulations. Solvent borne floor finish compositions may include water as a co-solvent. In general, the amount of diluent (e.g., water or water and co-solvent) present in a waterborne floor finish composition may be about 30 wt.% to about 97 wt.%, may be about 40 wt.% to about 90 wt.%, or may be about 70 wt.% to about 85 wt.%. Polyacrylate based compositions may include the previously identified ranges of water and may include a water content of about 70 wt.% to about 80 wt.%. Non-polyacrylate-based floor finish compositions may include a lower amount of water such as about 10 wt.% to about 60 wt.%. Additional ranges of water that may be provided in a floor finish composition include about 15 wt.% to about 98 wt.%, about 25 wt.% to about 95 wt.%, about 60 wt.% to about 95 wt.%, or about 50 wt.% to about 89 wt.%.

The lightened floor finish composition and the lightened dry coating may be characterized by many different properties and the characterizations may vary depending upon particular applications, environments of use, customer preferences, and user requirements. The lightened floor finish composition and lightened dry coating may for example be characterized as translucent while providing a lightening or whitening effect. The various properties may vary widely. It should be understood that the lightened floor finish composition and the lightened dry coating need not satisfy all of the following listed properties. The lightened floor finish composition and the lightened dry coating may satisfy one or more of the following properties. Techniques for determining the properties are described or can be found in the examples.

The lightened floor finish composition may be characterized by the percent solids. The percent solids can be referred to as the "solids level" and refers to the weight percent of the non-diluent or non-solvent components in the lightened floor finish composition. The solids level of the lightened floor finish composition may vary widely depending on the level of diluent or solvent provided in the composition. A floor finish composition that is characterized as 100% solids may contain very little, if any, diluent or solvent. Waterborne or solvent borne floor finish compositions may contain a solids level that is sufficiently low to achieve desired application of the floor finish composition on the floor surface. In general, floor finish compositions are often applied using a mop. When applying the floor finish composition to a floor, it may be desirable to control the solids level to achieve the desired flow properties. For example, a waterborne or solvent borne floor finish composition may be provided having a percent solids of less than about 50 wt.%. The weight percent of solids may be less than about 40 wt.%, less than about 35% or less than about 30 wt.% to achieve desired flow properties. In general, the floor finish composition may be provided at a percent solids level that allows a film to form on a floor and provides the desired level of protection or gloss. In general, the floor finish composition may have a percent solids that is greater than about 3 wt.%. Generally higher solids contents such as those above about 50% may decrease drying time, which may be undesirable in applying a floor finish composition to a floor.

The floor finish composition may be characterized by its viscosity. In general, it is desirable for a floor finish composition to have a sufficiently low viscosity so that it may be applied to a floor using a conventional applicator such as a mop. Various mops that may be used to apply a floor finish composition to a floor include string mops, and mops having a pad that may be provided as a micro fiber pad, a cloth, or a sponge. For example, for mop application a floor finish composition may desirably have a viscosity of less than about 100 cps, less than about 50 cps or less than about 20 cps as measured using a Brookfield DV-II viscometer (using a UL-adaptor). Viscosities in excess of 100 cps may not perform well in floor finish applications using mops or pads commonly used in conventional floor finish applications.

The properties of specific gravity and binder:pigment ratio may be used to characterize a masking property of a composition over a substrate. That is, compositions such as paints having a relatively high specific gravity or a relatively low binder:pigment ratio have a greater tendency to mask a substrate over which they are applied. In contrast, a floor coating composition having a relatively lower specific gravity and a relatively higher binder:pigment ratio may have a tendency to remain translucent (that is, not mask the substrate over which it is applied) but yet provide a lightening or whitening effect. In general, it may be desirable to maintain a floor finish composition including a lightness inducing agent at a specific gravity of less than about 1.1, as measured using a METTLER TOLEDO™ DA-100M Density/Specific Gravity Meter (from Mettler Toledo International Inc.).

The property of "binder:pigment ratio" may be used to characterize the weight ratio of the film former component to the lightness inducing agent component. In general, this property can help characterize the general upper limit of the amount of pigment that may be provided in a floor finish composition so that the floor finish composition may be characterized as translucent. That is, if the binder:pigment ratio is too low (represented by a relatively large amount of pigment relative to the film former), a dried coating resulting from the floor finish composition may be too opaque. The "binder:pigment ratio" is often used as a property characterization in the field of paints. It should be understood that when used in the context of the disclosed floor finish compositions, the word "binder" refers to the film former and the word "pigment" refers to the lightness inducing agent. In addition, it should be understood that the term "binder" refers to the total amount of film former in a floor finish composition, and the term "pigment" refers to the total amount of the lightness inducing agent in the floor finish composition. In general, the binder:pigment ratio for a particular floor finish composition may depend on the amount of lightness inducing agent provided in the floor finish composition to achieve the desired lightness value L* or whiteness index WI for a particular floor finish composition. A floor finish composition may be provided having a binder:pigment ratio of greater than about 1.0. In addition, the binder:pigment ratio may be above about 1.5, or may be above about 2.0.

The floor finish composition may be provided having a rheology that allows it to be applied to a floor conveniently by application using a mop. A floor finish composition may be provided having a relatively Newtonian behavior, if desired. Relatively Newtonian behavior may be characterized as having a power law index (**n**) of greater than 0.9. An (**n**) value of 1 represents a Newtonian fluid. An (**n**) value significantly less than 1 (such as less than 0.9) represents a fluid exhibiting a shear thinning behavior. While a floor finish composition may exhibit shear thinning behavior (having a power law index of less than 0.9), it may be more desirable to apply a floor finish composition using a mop and a floor finish composition having a relatively Newtonian behavior. If desired, the floor finish composition may be formulated without a rheology modifier or a viscosity modifier. In addition, the floor finish composition may be formulated with a rheology modifier or viscosity modifier and the amount of rheology modifier or viscosity modifier may be controlled so that the composition has a power law index of greater than about 0.9. The power law index may be calculated as described in Brookfield, "More Solutions to Sticky Problems," Brookfield Engineering Labs, Inc., pages 1-50.

A floor finish composition that may be used in various commercial or industrial applications may be also characterized by various application properties. It should be understood that the application properties may depend on certain factors such as the selection of the components in the floor finish composition including the film former, the lightness inducing agent, the diluent, the substrate, or the various other components that may be present. For example, a floor finish composition containing mainly polyacrylate film formers may exhibit application properties similar to or different from those of a floor finish composition containing mainly polyurethane film formers. Specific application properties may also vary. For example, a floor finish composition (e.g., a polyacrylate-based floor finish composition) may have a coating rate greater than about 250 ft$^2$/gal (viz., one gallon of the floor finish composition may coat in excess of 250 ft$^2$ of floor surface in a single layer), greater than about 500 ft$^2$/gal or greater than 1,000 ft$^2$/gal. The floor finish composition (e.g., a polyacrylate-based floor finish composition) may have a coating rate less than about 5,000 ft$^2$/gal, or less than about 3,000 ft$^2$/gal. Certain floor finish compositions that may be characterized as "durable coating" compositions may for example be applied at a coating rate of about 300 ft$^2$/gal. to about 800 ft$^2$/gal. Exemplary durable coating compositions may include polyurethane compositions, epoxy compositions, and UV-curable compositions. It should be understood that the characterization of a composition as a "durable coating" generally refers to the general intention to apply a relatively thick layer of the composition to a substrate and it should not be construed that all polyurethane compositions are intended to be applied as relatively thick coatings. That is, those skilled in the art will understand that certain types of coatings are intended to be applied relatively thickly and other coatings are intended to be applied more thinly. In addition, a floor finish composition (e.g., a polyacrylate-based floor finish composition) may provide a relatively thin wet coating, e.g., less than about 2 mil or less than about 1.5 mil. Durable coating compositions may be applied at greater wet thicknesses, e.g., at greater than about 2 mil. In addition, the dry time of the floor finish composition may be sufficiently fast so that multiple coatings can be applied in one overnight period without leaving unsightly footprints, and with at least all but the last coat being walked on soon after application in order to apply the next coat.

The floor finish composition may be characterized by several dry coating properties, some of which may depend upon particular user preferences and the intended use environment. One dry coating property may be referred to as L*/hiding power, representing the ratio of lightness value L* to hiding power, where hiding power measures the ability to mask an underlying surface. In general, the lightened floor finish composition should enhance the lightness L* or the whiteness index WI effects while avoiding masking the substrate over which it is applied. Paints and certain types of stains are often formulated to provide a high level of masking or hiding power. Accordingly, the property L*/hiding power may be relied upon to show the relationship between the lightness L* effect and the hiding power. Compositions that are opaque tend to have a very low L*/hiding power ratio because they are very good at masking. For the purpose of calculating L*/hiding power, the properties of L* and hiding power may be determined by providing a final dry coating thickness of about 0.5 to 0.6 mils on a LENETA Form 5C Opacity chart and LENETA Gray Scale Form 24B chart. The lightness values may be determined over the black portion of the LENETA Form 5C Opacity chart using a MINISCAN XE Plus color spectrophotometer as described below in the Example section. The hiding power may be measured on the LENETA Gray Scale Form 24B chart as described below in the Example section. A lightened floor finish composition may for example provide an L*/hiding power ratio greater than about 30, greater than about 35, greater than about 40, or greater than about 50.

Another property that may be used to characterize the dry coating resulting from the lightened floor finish composition can be referred to as $\Delta L^*$. $\Delta L^*$ refers to the difference in lightness values measured using a MINISCAN XE Plus color spectrophotometer measured between similar soil spots or similar discoloration or similar darkened pattern spots on a floor wherein one location includes a dry coating thickness of at least 0.2 mil thereover, and the other location includes no coating thereover. A positive $\Delta L^*$ value indicates the presence of a lightened floor finish composition. It may be desirable to provide a lightened floor finish composition that provides a $\Delta L^*$ value of at least about 5%, or a $\Delta L^*$ value of at least about 10%, calculated as a percentage increase or decrease.

A floor finish composition may be provided having a desired degree of leveling effect. That is, once the floor finish composition is applied to a floor, it is desirable for the floor finish composition to level sufficiently to provide a relatively uniform wet coating thickness. Those who apply floor finish compositions to floors generally desire the resulting hardened finish to exhibit a pleasing lack of visible ridges or grooves that could be attributed to the applicator such as a string mop or a sponge. Two tests may be used to evaluate the leveling effect of a floor finish composition. One test can be referred to as the "X" test. The X test may be carried out on a vinyl substrate using black vinyl tiles (12 inch by 12 inch Forum SO-22 black vinyl tiles available from Congoleum Corp.) by coating 0.5 to 0.6 g of waterborne polyacrylate floor finish composition using a 1 inch by 2 inch microfiber pad to a 6 inch by 6 inch portion of the tile. The microfiber pad can then be used to draw an "X" across the entire coating area, and the composition can be allowed to dry. Excellent leveling can be observed when no "X" is detectable in the hardened finish. Very good leveling results when only a faint outline of the "X" is detectable but no ridges are observed in the hardened finish. Another leveling test can be referred to as the "ridge test." The ridge test can be carried out by applying the composition to an opacity chart (e.g., a BYKO chart, from Byk Gardner Corp.) using a No. 5.wire-wrapped drawdown bar from the Paul N. Gardner Company, and allowing the composition to dry. Desirable leveling results in a coating providing less than about three ridges in a 1 cm. x cm. box.

Tack-free times for floor finish compositions may be sufficiently low so that multiple applications of the floor finish composition can take place during an overnight period or other time when employees and customers are not walking on the floor surface. Tack-free times can be calculated by determining the time for a wet coating of the floor finish composition to become tack-free when applied to a LENETA Form 5C Opacity chart as a 2 mil thick wet coating. A 2 mil thick coating may approximate the thickest areas of wet coating when mop-applying a conventional polyacrylate-based floor finish composition such as GEMSTAR LASER™ finish from Ecolab Inc. At periodic time intervals from the time of application, a small (less than 1 cm. square) piece of cotton is placed on the surface and a 2 kg. weight is placed thereover for 30 seconds. A tack-free coating exhibits no residual cotton on the surface after the weight and piece of cotton are removed. In general, it is desirable for a floor finish composition to exhibit a tack-free time of less than about 2 hours. Tack-free times of less than about 1.5 hours, less than about 1 hour, or less than about 45 minutes are desirable.

The lightened floor finish composition may be characterized as providing a hardened finish that is translucent as defined above. The extent of translucency may, if desired, be quantified. For example, a translucent hardened finish may provide a contrast ratio ($CR_{0.80}$) of less than about 0.7 when applied at the desired coating rate to the black and white portions of a LENETA Form 5C Opacity chart and measured using a MINIS CAN XE Plus color spectrophotometer (45° illumination with 0° viewing geometry) as described below in the Example section. The contrast ratio may be about 0.05 to about 0.7, or may be about 0.1 to about 0.6.

Dispersing agents, rheology modifiers, suspending agents, chelating agents, lightness inducing-agent surface treatments and other measures (collectively referred to as "anti-settling agents") may be employed to assist in mixing the lightness inducing agent and film former, and to prevent or discourage settling or sedimentation during storage. The particle size of the lightness inducing agent may also be taken into account, since more finely divided lightness inducing agents may be more resistant to settling. A wide variety of anti-settling agents may be employed. Representative anti-settling agents are described in D. B. Brown and M. R. Rosen, The Rheology Modifier Handbook (ChemTec, 1999), the disclosure of which is incorporated herein by reference. Anti-settling agents that may be useful in the disclosed finishes include fumed silicas; starch and modified starches; hydroxyethylcellulose (HEC) and functionalized copolymers such as alkali swellable emulsions (ASE), hydrophobically modified alkali swellable emulsions (HASE) and hydrophobically modified ethoxylated urethane resins (HEUR). Commercially available anti-settling agents that may be useful in the disclosed finishes include the DREWTHIX™ series of rheology modifiers from Ashland Specialty Chemical Co.; the ANTISETTLE™ CVP, CRAYVALLAC™ series and FLOWTONE GST rheology modifiers from Atofina; the CAB-O-SIL™ series of fumed silicas from Cabot Corp.; the DISPEX™ series of dispersing agents and the VISCALEX™ and RHEOVIS™ series of rheology modifiers from Ciba Specialty Chemicals; the AEROSIL™ series of fumed silicas from Degussa; the UCAR™ POLYPHOBE™ series of alkali-swellable urethane-modified rheology modifiers from Dow Chemical Company; the AQUAFLOW™ series of nonionic and anionic associative polymers from Hercules Inc.; the NEOSIL™ series of fumed silicas from Ineos Silicas; the TAMOL™ series of polyacid and hydrophilic copolymer dispersants from Kia Inc.; the STRUCTURE™ series of modified starches from National Starch & Chemical; the CARBOPOL™ series of homopolymers and copolymers from Noveon and the ACRYSOL™, ACUSOL™ and ASE™ series of rheology modifiers from Rohm & Haas Co.

Although the lightened floor finish composition may include anti-settling agents, it should be understood that the presence of anti-settling agents is optional and the lightened floor finish composition may be provided without anti-settling agents or without an effective anti-settling amount of anti-settling agents. Floor finish compositions containing inorganic lightness inducing agents such as titanium dioxide and zinc oxide may be more inclined to settle as a result of storage compared to compositions containing more sedimentation-resistant lightness inducing agents such as polymeric lightness inducing agents. When the lightened floor finish composition has a relatively low viscosity (e.g., a viscosity of less than about 100 cps as measured using a Brookfield™ DV-II Series viscometer), the user may if desired mix the composition just prior to use without undue inconvenience, for example when some degree of settling or sedimentation may have taken place during storage. In general, if the lightened floor finish composition includes an anti-settling agent, the amount of anti-settling agent may be an amount sufficient for the lightness inducing agent to resist settling or sedimentation upon storage and to help enhance the distribution of the lightness inducing agent upon stirring or mixing. The floor finish composition may also be provided as a two part system where the first part includes a floor finish composition and the second part includes the lightness inducing agent and the user may combine and mix both parts prior to use.

The floor finish composition may include sufficient sedimentation resistant lightness inducing agent (e.g., an organic lightness inducing agent) so that a gallon of floor finish composition, after sitting on a shelf for one month at room temperature, exhibits less than 10% settling (by weight) of the lightness inducing agent. Preferably, the amount of settling may be less than about 5%. Another way of characterizing the lack of settling involves the lightness value created by the floor finish composition. For example, for a gallon of floor finish composition that has sat for one month at room temperature, the floor finish composition drawn off the upper portion of the gallon may exhibit a lightness value after application to a substrate that is within about 90% of the value exhibited by a freshly mixed floor finish composition.

Anti-settling agents may be entirely excluded from the composition, or used in limited amounts, e.g., below about 0.2 wt.%. Those skilled in the art will appreciated that different anti-settling agents may provide their properties at different concentrations. For example, when anti-settling agents are present to provide such properties, they may used in amounts of at least about 0.005 wt.%. Similarly, an exemplary concentration range for dispersing agents may be about 0.005 wt.% to about 5 wt.% and an exemplary range for thickeners or rheology modifiers may be about 0.005 wt.% to about 1 wt.%.

The floor finish composition may also contain an optional plasticizer or coalescent, including compounds such as benzyloxyethanol; an ether or hydroxyether such as ethylene glycol phenyl ether (available as "DOWANOL EPh" from Dow Chemical Co.) or propylene glycol phenyl ether (available as "DOWANOL PPh" from Dow Chemical Co.); dibasic esters such as dimethyl adipate, dimethyl succinate, dimethyl glutarate, dimethyl malonate, diethyl adipate, diethyl succinate, diethyl glutarate, dibutyl succinate, and dibutyl glutarate (including products available under the trade designations DBE, DBE-3, DBE-4, DBE-5, DBE-6, DBE-9, DBE-IB, and DBE-ME from DuPont Nylon); dialkyl carbonates such as dimethyl carbonate, diethyl carbonate, dipropyl carbonate, diisopropyl carbonate, and dibutyl carbonate; phthalate esters such as dibutyl phthalate, diethylhexyl phthalate, and diethyl phthalate; and mixtures thereof. If the floor finish composition includes a plasticizer or coalescent, the plasticizer or coalescent may be included in amounts intended to impart desired characteristics. For example, the plasticizer or coalescent may each be included in the composition in an amount of at least about 0.1 wt%, in amounts of less than about 10 wt.%, or in amounts of about 1 wt.% to about 7 wt.% based on the weight of the composition.

Cosolvents may optionally be added to the floor finish composition if desired to assist in formulating and applying the finish. Suitable cosolvents include Butoxyethyl PROPASOL™, Butyl CARBITOL™ acetate, Butyl CARBITOL™, Butyl CELLOSOLVE™ acetate, Butyl CELLOSOLVE™, Butyl DIPROPASOL™, Butyl PROPASOL™, CARBITOL™ PM-600, CARBITOL™ Low Gravity, CELLOSOLVE™ acetate, CELLOSOLVE™, Ester EEP™, FILMER IBT™, Hexyl CARBITOL™, Hexyl CELLOSOLVE™, Methyl CARBITOL™, Methyl CELLOSOLVE™ acetate, Methyl CELLOSOLVE™, Methyl DIPROPASOL™, Methyl PROPASOL™ acetate, Methyl PROPASOL™, Propyl CARBITOL™, Propyl CELLOSOLVE™, Propyl DIPROPASOL™ and Propyl PROPASOL™, all of which are available from Union Carbide Corp.; and mixtures thereof. If a cosolvent is included in the composition, it may for example be included in an amount of at least about 0.1 wt.%, in an amount of less than about 10 wt.%, or in an amount of about 1 wt.% to about 7 wt.% based on the weight of the composition.

The floor finish composition may optionally contain one or more catalysts, crosslinkers or initiators (e.g., UV initiators and thermal initiators) capable of hardening the film former. For example, depending in part on the chosen film former, the floor finish may contain transition metal compounds such as zinc or zirconium compounds; tin compounds such as dibutyl tin dilaurate, stannous octoate and FASCAT™ 4224 dibutyltin bis(1-thioglycerol) catalyst (available from ATOFINA Chemicals, Inc.); amines; other zinc compounds such as zinc crosslinked acrylic dispersions (described further in Application Serial No. 10/755,972 entitled AQUEOUS POLYURETHANE COATING SYSTEM CONTAINING ZINC CROSSLINKED ACRYLIC DISPERSION, filed January 12, 2004, the disclosure of which is incorporated herein by reference), ultrafine zinc oxide (described further in Application Serial No. 10/755,975 entitled POLYURETHANE COATING CURE ENHANCEMENT USING ULTRAFINE ZINC OXIDE, filed January 12, 2004, the disclosure of which is incorporated herein by reference), zinc carbonates including zinc tetraamine carbonate and zinc ammonium carbonate (described further in Application Serial No. 10/755,976 entitled POLYURETHANE COATING CURE ENHANCEMENT USING ZINC CARBONATE INITIATORS, filed January 12, 2004, the disclosure of which is incorporated herein by reference); and a variety of other materials that will be familiar to those skilled in the art. Exemplary UV initiators include IRGACURE™ 184, IRGACURE™ 369, IRGACURE™ 651, IRGACURE™ 907, IRGACURE™ 1700, DAROCURE™ 4265, and DAROCURE™ 1173 available from Ciba Specialty Chemicals. Exemplary thermal initiators or catalysts that may be used include peroxides and azo compounds. Exemplary peroxides include benzoyl peroxide, dicumyl peroxide, and t-butyl perbenzoate. Exemplary azo compounds include 2,2'-azobisisobutyronitrile, 1,1'-azobis(1-cyclo-hexanecarbonitrile), and 2,2'-azobis(isobutyramide) dihydrate.

The floor finish composition can contain a variety of other optional adjuvants to alter its performance or properties before or after application to a floor. Exemplary adjuvants include flatting agents, surfactants, surface slip modifiers, defoamers, wetting agents, leveling agents, antimicrobials, waxes, UV absorbers, light stabilizers, antioxidants, fragrances and adhesion promoters. The types and amounts of such adjuvants will be apparent to those skilled in the art. The finish may if desired be formulated to match the characteristics of current floor finish compositions with respect to properties such as gloss, odor, viscosity, resistance to foaming, compatibility with packaging materials, adhesion to substrates and to other finish layers, resistance to freeze/thaw cycles, freedom from hazardous air pollutants (HAPs) or other undesirable ingredients and other properties that will be apparent to those skilled in the art. An additional adjuvant includes inorganic or organic particles to enhance abrasion resistance, scratch resistance, wear resistance or strippability. Preferred inorganic particles are described in copending U.S. Patent Application Serial No. 09/657,420 filed September 8, 2000 and entitled SCRATCH-RESISTANT STRIPPABLE FINISH, the disclosure of which is incorporated herein by reference. It should be noted that the inorganic particles in the UV-curable finishes exemplified in the latter reference did not diffusely reflect light.

Additional types of adjuvants that can be provided in the floor finish composition include anti-flocculating and anti-clumping agents. Some anti-flocculating agents can also be characterized as anti-settling agents.

Optical brighteners may also be employed as adjuvants. It is believed that certain optical brighteners may contribute to floor finish composition yellowing over time. Accordingly, it may be desirable to exclude from the lightened floor finish composition quantities of such optical brighteners sufficient to cause objectionable yellowing.

Some stains contain penetrating oils or polymers designed to aid penetration into a substrate. If employed in the floor finish composition, such penetrating oils or polymers may undesirably lengthen the tack-free time. Accordingly, it may be desirable to exclude from the lightened floor finish composition quantities of such penetrating oils or polymers sufficient to cause the tack-free time to exceed about 2 hours, about 1 1/2 hours or about 1 hour.

An indicator (e.g., a color indicator) may be incorporated into the floor finish composition (or into other associated coating composition layers that may or may not contain lightness inducing agent) to assist in visualizing the thickness and coverage of the floor finish composition during application to a substrate. A difficulty with applying floor finish compositions in general relates to the application of a consistent thickness of the composition over the entire floor surface. Also, some lightened floor finish compositions may exhibit a "milky" appearance when provided in bulk, and may lose their milky appearance when applied as a coating. For example, compositions provided in the form of an emulsion may have a milky appearance when packaged in bulk in containers, and may lose that appearance when spread out to provide a coating. Thus it is sometimes difficult to judge when applying the composition whether certain areas are too thick or too thin. In addition, gaps sometimes occur where no composition is applied to the surface. Furthermore, when a floor finish composition is applied by an individual moving a mop in a typical S or "figure 8" pattern, there may be a tendency for build-up of the composition in certain areas (e.g., on the edges of the S or figure 8 pattern) due to mop movement. These areas of build-up may result in a shadowing effect as the lightened floor finish composition dries or cures. These various problems may be of particular concern when applying a lightened floor finish composition whose lightness value L* or whiteness index WI increases as the composition dries or cures. It thus may be difficult to judge the evenness or completeness of the coverage prior to drying or curing, and once the lightened floor finish composition has dried or cured differences in the evenness of application or the presence of gaps may become more readily apparent. An indicator may be included in the composition in an amount that allows the person applying the composition to judge whether or not there is a consistent applied thickness across the substrate. The presence of an indicator in the composition can allow the person applying the composition to detect gaps or areas of build-up and remove them prior to drying or curing to provide a more even coating. The indicator may be provided so that it essentially becomes transparent or invisible once the floor finish composition dries or cures. That is, the indicator may provide a color indication that allows one to judge the evenness of application as a wet coating, but then the indicator becomes less visible as the composition dries or cures. In addition, the indicator may allow the person applying the composition to know when the composition has sufficiently dried or cured to allow another layer of a floor finish composition to be applied thereover or to allow someone to walk over the hardened finish. Exemplary indicators that may be used include acid/base indicators, fluorescent indictors, redox indicators, metallochromic indicators, and photon sensitive dyes. Exemplary acid/base indicators include those color-changing indicators listed in Table 1 or 2 of Merck Index (12th Edition, Budavari, O'Neil, Smith, Heckelman, Kinneary, eds., 1996, Merck Research Laboratories) or Table 8.23 in Lange's Handbook of Chemistry (15th Edition, Dean, J.A., 1999, McGraw-Hill, Inc.) or Table on pages 8-13 of CRC Handbook of Chemistry and Physics (72nd Edition, Lide, ed., 1991, CRC Press). The disclosures of acid/base indicators in these references are incorporated herein by reference. Exemplary acid/base indicators that may be used in the floor finish composition also include methyl violet, bromophenol blue, tetrabromophenol blue, bromochlorophenol blue, Congo Red, alizarin sodium sulfonate, bromocresol green, chlorophenol red, bromocresol purple, bromophenol red, bromothymol blue, phenol red, rosolic acid, cresol red, tropeolin OOO, m-cresol purple, xylenol blue, alizarin yellow GG, alizarin yellow R, Nile Blue, tropeolin O, poirrier blue C4B, and indigo carmine. Other exemplary indicators that may change from colored to colorless when used in the floor finish composition include quinaldine red, 2,4-dinitrophenol ($\alpha$-dinitrophenol), nitramine, 1,3,5-trinitrobenzene, 1,3,5-trinitrobenzene, and 2,4,6-trinitrophenol. Other exemplary acid/base indicators that may change from color to colorless in a pH range of 4 to 10.5 that may be used include 2,5-dinitrophenol (y-dinitrophenol), p-nitrophenol, $\alpha$-naptholphthalein, quinoline blue, ethyl bis [2,4-dinitrophenyl] acetate, o-cresolphthalein, phenolphthalein, thymolphthalein, and ethyl red. Exemplary fluorescent indicators that may be used include those listed in Table 8.25 in Lange's Handbook of Chemistry (15th edition, Dean, J.A., 1999, McGraw-Hill, Inc.) or on pages 8-15 of CRC Handbook of Chemistry and Physics (72nd edition, Lide, ed., 1991, CRC Press). The fluorescent indicators disclosed therein are incorporated herein by reference. Other exemplary fluorescent indicators that may be used in the floor finish composition include esculin, benzoflavine, 3,6-dioxyphthalimide, eosine YS, eosine BN, coumarin, Schaffer's salt, SS-acid (sodium salt), cotarnine, $\alpha$-naphthionic acid, and anthranilic acid. Exemplary fluorescent indicators that change fluorescence over a pH range of 2 to 10 include chromotropic acid, 1-naphthoic acid, 1-naphthylamine-5-sulfonamide, Magdala Red, $\alpha$-naphthylamine, $\beta$-naphththylamine, salicylic acid, 5-aminosalicylic acid, o-methoxybenzaldehyde, P-phenylenediamine, morin, 3,6-dioxyxanthone, $\beta$-methylesculetin, Neville-Winther acid, brilliant diazol yellow, magnesium 8-hydroxyquinolinate, $\beta$-methyumbelliferone, 1-naphthol-4-sulfonic acid and derivatives thereof, umbelliferone, $\beta$-naphthol, resorufin, and luminol. Exemplary fluorescent indicators also include those that fluoresce green, yellow, or orange and include fluorescein, fluorescein derivatives (such as erythrosin B (tetraiodofluorescein), phloxin BA extra (tetrachlorotetrabromofluorescein), eosin (tetrabromofluorescein), dichlorofluorescein, diodofluorescein, carboxy fluorescein, fluorescein isothiocyanate (FITC), tetrabromosulfonefluorescein), Cleves Acid, coumaric acid, 3,6-dioxyphthalic dinitrile, orcinaurine, patent phosphine, thioflavine, acridine orange and naphthazol derivatives. Exemplary redox indicators that may be used include those listed in Table 8.26 in Lange's Handbook of Chemistry (15th edition, Dean, J.A., 1999, McGraw-Hill, Inc.), the disclosure of which is incorporated herein by reference. Exemplary redox indicators that may be used also include 2-carboxydiphenylamine, o,m'-diphenylaminedicarboxylic acid, p-nitrodiphenylamine, benzidine dihydrochloride, o-toluidine, diphenylamine-4-sulfonate (Na salt), 3,3'-dimethoxybenzidine dihydrochloride, N,N-diphenylbenzidine, diphenylamine, N,N-dimethyl-p-phenylenediamine (Wurster's Reagent), variamine blue B hydrochloride, N-phenyl-1,2,4-benzenetriamine, 2,6-dichloroindophenol (Na salt), brilliant cresyl blue, 2,6-dibromophenolindophenol, starch, induline scarlet, neutral red, gallocyanine, indigo derivatives (indigao-5,5',7-trisulfonic acid (Na salt), indigo 5,5',7,7'tetrasulfonic acid (Na salt), Indigo 5,5'-disulfonic acid (Na salt), Indigo-5-monosulfonic acid)), phenosafranine, Nile blue A, thionine, methylene blue, methyl blue (acid blue 93). Exemplary metallochromic indicators include calmagite, eriochrome black T, murexide, PAN, pyrocatechol violet, salicylic acid, and xylenol orange. Exemplary photon sensitive dyes include BASF dyes, basonyl green, basonyl blue, pylam blue, traylmethanes, flexo yellow, diarylmethane, FD&C#2 indigotene, FD&C#2 lake, FD&C#1, FD&C#3 red, FD&C#3 green, triphenylmethanes, methyl blue, FD&C#1 lake, FD&C#5 yellow, pyrazoline, erythrosine lake, and FD&C#5 yellow lake.

The floor finish composition may as mentioned include a sufficient amount of an indicator to allow one applying the composition to judge the relative thickness of the composition being applied and to determine whether or not any gaps are present in the wet coating. If used, the indicator may for example be at least about 0.001 wt.%, about 0.001 wt.% to about 5 wt.% or about 0.005 wt.% to about 1 wt.% of the weight of the floor finish composition.

The disclosed floor finishes can be applied to a variety of substrates, including wood, plastics, metals, concrete, wallboard and other mechanical or architectural substrates. The disclosed finishes are particularly well-suited for application to flooring substrates due to their clean appearance. Representative flooring substrates include resilient substrates such as sheet goods (e.g., vinyl flooring, linoleum or rubber sheeting), vinyl composite tiles, rubber tiles, cork and synthetic sports floors, and non-resilient substrates such as concrete, stone, marble, wood, ceramic tile, grout, terrazzo and other poured or "dry shake" floors. The coating can be jobsite-applied to a flooring substrate after the substrate has been installed (e.g., to monolithic flooring substrates such as sheet vinyl goods, linoleum, cork, rubber sheeting, synthetic sports floors, concrete, stone, marble, grout or Terrazzo, or to multipiece flooring substrates such as vinyl composite tiles, wood floorboards or ceramic tiles), or can be factory-applied to a flooring substrate before it is installed (e.g., to monolithic flooring substrates such as sheet vinyl goods in roll form, or multipiece flooring substrates such as vinyl composite tiles or wood floorboards). Jobsite application may be preferred, with suitable jobsites including indoor and outdoor sites involving new or existing residential, commercial and government- or agency-owned facilities.

The disclosed floor finish compositions can be applied using a variety of methods, including spraying, brushing, flat or string mopping, roll coating and flood coating. Mop application, especially flat mopping, is preferred for coating many floors. Suitable mops include those described in U.S. Patent Nos. 5,315,734, 5,390,390, 5,680,667 and 5,887,311. An additional type of mop that may be used can be referred to as a back pack floor mop such as those described in U.S. Patent No. 6,695,516 and U.S. Patent No. 6,550,998. The floor finish composition may be applied using a flat microfiber pad such as those disclosed in U.S. Patent No. 6,695,516 and U.S. Patent No. 6,550,998.

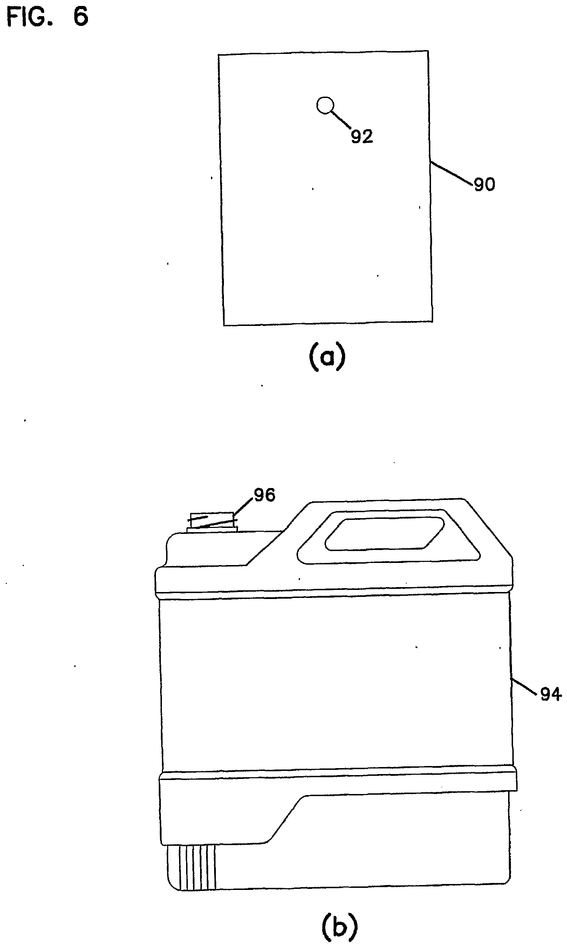

The floor finish composition can be provided in a variety of containers. Referring to **Fig. 6(a),** the floor finish composition may be provided in a flexible container **90** having an opening **92** for dispensing the floor finish composition therefrom. The flexible container **90** may be provided in a backpack floor mop such as those described in U.S. Patent Nos. 6,695,516 and 6,550,998, the disclosures of which are incorporated herein by reference. When provided in a backpack, the floor finish composition in the flexible container **90** may be worn by the user. In addition, the floor finish composition may be provided in a relatively rigid container **94** as shown in **Fig. 6(b).** The relatively rigid container **94** may include an opening **96** through which the floor finish composition may be dispensed therefrom.

The container for the floor finish composition can be labeled so that the user can distinguish between a lightened floor finish composition and another floor finish composition that does not include a lightness inducing agent. The labeling may be any indicia (e.g., words or colors) that allow the user to distinguish the lightened floor finish composition from other floor finish compositions.

Prior to applying a floor finish composition to a floor, the floor is often stripped or the floor is cleaned to remove any loose debris. A sealer or an undercoat may be applied to the floor or flooring substrate. In addition, an overcoat may be provided thereover. The sealer, undercoat, and overcoat may each be provided as single or multiple layers. Any of the layers provided as part or all of the sealer, undercoat, or overcoat may be provided from a lightened floor finish composition and the remaining layers may be floor finish compositions not containing a lightness inducing agent. Exemplary floor finish compositions not containing a lightness inducing agent include those floor finish compositions that are commercially available. An exemplary polyacrylate-based commercially available floor finish composition is GEMSTAR LASER™ floor finish composition from Ecolab Inc. When multiple undercoat layers are employed they may be the same or different. Each undercoat layer preferably will have a dry coating thickness of about 2.5 to about 25 $\mu$m, more preferably about 2.5 to about 15 $\mu$m. Preferably the overall undercoat dry coating thickness will be about 5 to about 100 $\mu$m, and more preferably about 5 to about 50 $\mu$m.

One or more (e.g., one to eight) topcoat layers may be applied to the floor or to the undercoat. Each topcoat layer preferably will have a dry coating thickness of about 2.5 to about 200 $\mu$m, more preferably about 2.5 to about 100 $\mu$m. Preferably the overall topcoat dry coating thickness will be relatively thin in order to reduce raw material costs, e.g., about 5 to about 150 $\mu$m, and more preferably about 5 to about 40 $\mu$m. Multilayer finishes preferably will have an overall dry coating thickness of about 10 to about 500 $\mu$m, and more preferably about 10 to about 80 $\mu$m.

The floor can be placed into service (or returned to service) once the finish has hardened sufficiently to support normal traffic without marring. As described further in the above-mentioned Application Serial No. 10/755,975, use of ultrafine zinc oxide in the undercoat or topcoat of a multilayer finish system employing a 2K polyurethane topcoat also promotes faster topcoat cure and enables the floor to be subjected to normal traffic much earlier than if ultrafine zinc oxide is not employed.

The finish can receive normal maintenance until such time as it is desired to remove and renew it. Normal maintenance may be characterized as periodic sweeping, cleaning, burnishing, buffing, or polishing. Removal can be carried out, for example, by cleaning the floor (using e.g., a brush or mop) followed by application of a stripper. Suitable strippers will be familiar to those skilled in the art, and include AIR STRIP™, CARESTRIP™ LO, HAWK™ and LIBERTY (all available from Ecolab Inc.); ARRIVA™, JUGGERNAUT™, LIQUID SHOVEL™, REVELATION™ and S.W.A.T. NA™ strippers from Buckeye International; and ATTACK™, BRAVO™, FREEDOM™, LINOSAFE™ and PRO STRIP™ strippers from Johnson Diversey. The stripper can contain a variety of adjuvants to alter its performance or properties before or after application to a cured finish. Useful adjuvants include abrasive particles, surfactants, defoamers, wetting agents, slip reducing agents, colorants and disinfectants. The types and amounts of such adjuvants will be apparent to those skilled in the art. The stripper should be allowed to stand for a suitable time (e.g., for a minute or more, preferably for two hours or less, and most preferably for between about 5 minutes and about 1 hour) while it softens the finish. After the finish softens sufficiently it can be removed using a variety of techniques including scrubbing, vacuuming, mopping, use of a squeegee, scraping, sweeping, wiping, mild abrasion or other measures that do not remove substantial portions of the floor. Removal will usually be made easier if water or a suitable detergent solution is applied to the softened finish.

Multilayer finishes may be sold in the form of a kit including the undercoat and topcoat in suitable containers or dispensers together with suitable instructions for mixing or dispensing any undercoat and topcoat components as needed and for applying the undercoat atop a floor and applying the topcoat atop the undercoat. If desired, the undercoat or topcoat could be packaged as concentrates intended to be mixed with water or another suitable solvent prior to application. The lightness inducing agent may be included in an undercoat or topcoat component or packaged separately and mixed with the topcoat or undercoat shortly before application to a floor. Optionally the kit may include a stripper concentrate in a suitable container. The stripper concentrate typically will be mixed with water or another suitable carrier at, for example, about 5 - 30 % by weight active ingredients prior to application. The kit can also contain additional undercoat materials (e.g., leveling coatings and sealing coatings) that can be applied to the floor before application of the undercoat and topcoat, or various additional materials (e.g., maintenance coats or wax finishes) that can be applied atop the topcoat. Maintenance coats typically will be applied when the initially-applied multilayer floor finish exhibits noticeable wear or loss of gloss, and may include sufficient lightness inducing pigment to restore or to provide a translucent hardened finish having an increased lightness value.

A kit can include different applicator heads for dispensing a floor finish composition. One applicator head can be identified in some manner (e.g., color coded) so that it can be associated for use in dispensing a lightened floor finish composition, and other applicators can be identified (e.g., color coded) for application of other floor finish compositions. Furthermore, the containers may include labeling (e.g., color coding) that allows a user to identify which floor finish composition includes a lightness inducing agent and which composition does not. In addition, the kit may include a masking material such as that available under the name SUREMASK™ from Try Products, Inc. The kit may contain additional safety equipment, such as gloves and glasses, and may contain other tools, such as a container opener and mixing tools. The kit can additionally contain a backpack for holding and dispensing the floor finish composition. Exemplary backpack floor mops are disclosed in U.S. Patent Nos. 6,695,516 and 6,550,998. Providing the floor finish composition in a flexible container, such as the flexible container **90** shown in **Fig. 6(a),** may be advantageous for including the floor finish composition in a backpack.

The kit can be provided having a floor finish composition in a first container and lightness inducing agent in a second container. Prior to use, the contents of the first container and the second container can be combined to form a lightened floor finish composition that can then be applied to a flooring substrate.

If desired, the multilayer floor finishes can also be factory-applied to a variety of flooring substrates. For example, when factory-applied to a multipiece flooring material, the pieces typically will be coated on at least the top surface and optionally coated or partially coated on the side or bottom surfaces.

Examples

The invention is further illustrated in the following non-limiting examples, in which all parts and percentages are by weight (wt.) unless otherwise indicated.

Tile Preparation

Evaluations were performed using both new and used vinyl composition tiles. New tile surfaces were cleaned and roughened until no longer shiny by rubbing with MAGICSCRUB™ mild abrasive cleaner (available from Ecolab Inc.) using a non-woven SCOTCH-BRITE™ green abrasive scrub pad (available from 3M Company). The cleaned new tiles were rinsed with tap water and dried at room temperature. This removed all factory applied coatings and surface soil, and provided a consistently reproducible surface. Used tile surfaces were stripped of residual finish and residue using a 1:8 dilution of the commercial stripper CARESTRIP™ LO (available from Ecolab Inc.). If that was not sufficient to remove the residual finish the tile surfaces were further stripped using a 13% dilution of the stripper shown below in Table 3:

**Table 3**

| Stripper | |
|---|---|
| **Ingredient** | **Parts** |
| Benzyl Alcohol[1] | 57.03 |

(continued)

| Stripper | |
|---|---|
| **Ingredient** | **Parts** |
| Monoethanolamine, 99%[2] | 22.81 |
| Diethylene glycol monobutyl ether[3] | 5.703 |
| Dipropylene glycol n-butyl ether[4] | 5.703 |
| Propylene glycol phenyl ether[5] | 5.703 |
| Surface active agent[6] | 1.901 |
| Wetting agent[7] | 0.115 |
| Deionized water | 1.035 |
| TOTAL | 100 |

1. Benzyl alcohol, technical grade, Velsicol Chemical.
2. Monoethanolamine, 99%, Dow Chemical.
3. Diethylene glycol monobutyl ether, 99%, Equistar.
4. Dipropylene glycol n-butyl ether, 98.5%, Dow Chemical.
5. Propylene glycol phenyl ether, Dow Chemical.
6. Linear Alcohol (C12-15) ethoxylate 9 EO, Rhodia.
7. ZONYL™ FSJ, 40% active, E. I. duPont de Nemours and Co..

The stripped used tiles were rinsed with tap water and allowed to dry at room temperature. This provided a cleaned surface like the surface that might be encountered under field conditions.

Percent Solids

Percent solids values for floor finish compositions were calculated based on the raw material percent solid values and their proportion in the formulated coatings. Percent solids values for commercial products (e.g., paints, primers, sealers and stains) not identified by the manufacturer were determined using a Model HB43 halogen moisture analyzer, (available from Mettler-Toledo International, Inc.) and a 105° C drying temperature, with the measurement being halted once the mean weight change fell below 0.1 mg/s. The percent solids refers to the percent nonvolatiles.

Specific Gravity

Specific gravity values for floor finish compositions and diluted commercially available products were measured with a Mettler Toledo Density/Specific Gravity Meter DA-100M (Mettler-Toledo). Specific gravity values for commercially available products were obtained from the relevant product material safety data sheet (MSDS) or technical data sheet (TDS).

Binder to Pigment Ratio

The binder to pigment ratio could be determined experimentally by the following technique as long as the pigment is not an organic pigment. In the case of an organic pigment, the binder to pigment ratio was not measured experimentally.
The weight percent of nonvolatile species in a composition was determined by weighing out a 2 gram quantity of the composition in an aluminum weighing pan. The mass of the pan and composition were recorded and the pan was placed in a 105°C vacuum oven for one hour. After one hour, the pan was removed from the oven and placed in a desiccator to cool. Once cool, the sample pan was reweighed and the sample weight loss, percentage weight loss, percent volatiles and percent nonvolatiles were calculated. The percent inorganics in the composition was determined in a similar manner, using a 2 gram quantity of the composition placed in a 605°C oven overnight and transferred to a desiccator for cooling. The weight percent organic in the composition was determined by subtracting the weight percent inorganic from the weight percent nonvolatiles. The ratio of the percent organic to the percent inorganic represents the percent binder to percent pigment for the composition, and is based upon an assumption that the pigment represents essentially all of the inorganics, and the binder represents essentially all of the non-volatile organics.

Coating Solution Viscosity

The viscosities of formulated coatings as well as commercial products (undiluted and diluted) were measured at ambient temperature using a Brookfield DV-II viscometer. For solutions with a viscosity less than 100 centipoise (cps), viscosity was measured in an 8 oz glass jar with an LV1 spindle at 60 rpm. For samples having a viscosity of 100 centipoise or greater, viscosities were measured in a 4 oz glass jar with an LV4 spindle at 60 rpm.

Coating Solution Rheology

The rheologies of formulated coatings and commercial products were characterized by a method from Brookfield, "More Solutions to Sticky Problems," Brookfield Engineering Labs., Ind., pages 1-50. According to this publication, a constant, called the power law index (**n**) represents the deviation of a composition's behavior from Newtonian. This index can be obtained by plotting the log of the shear stress versus the log of the shear strain rate and applying a linear equation to fit the data. The slope of the line is the power law index. Values of "n" less than one indicate that the liquid is shear thinning, or that the viscosity decreases as increased shear is applied to the system. Values of (**n**) equal to one indicate that the liquid is Newtonian, or that the viscosity is independent of the shear rate. Values of (**n**) greater than one indicate that the liquid is shear thickening, or that as shear is applied to the system, the viscosity actually increases.
Using a Brookfield DV-II viscometer, a viscosity profile over a range of spindle speeds at ambient temperature was recorded for a composition. The speeds ranged from 1-100 RPM. The spindle and solution vessel used for the viscosity profiles varied according to the approximate viscosity range of the composition being measured. For compositions with a viscosity in excess of 100 cps, an LV4 spindle was used and the sample was placed in a 4 oz glass jar. A UL adapter was used when the composition viscosity was less than about 100 cps. Spindles were chosen to minimize experimental error. For each rotational speed, the measurement was allowed to equilibrate for 60 seconds. Percent torque, viscosity, and rotational speed (rpm) were recorded. For each viscosity profile, the shear rate was calculated by multiplying the spindle rotation speed (rpm) by a proportionality constant called the shear rate factor. The shear rate factor is specific to the spindle used and was obtained from the Brookfield publication "More Solutions to Sticky Problems," Brookfield Engineering Labs., Inc., Appendix A.4. Table 4 lists the spindles used as well as the associated shear rate factors and spindle dimensions.

Table 4

| Spindle | Full Scale Torque (dyne/cm) | Shear Rate Factor, (sec-1) | Spindle Radius, (cm) | Effective Spindle Length (cm) |
|---|---|---|---|---|
| LV4 | 673.7 | 0.209 | 0.1588 | 3.396 |
| UL-Adapter | 673.7 | 1.224 | 1.2575 | 9.239 |

In addition to the shear rate, the shear stress was calculated from the measured torque by the following equation:

$$\text{Shear stress} = M/(2 \times \pi \times R_d^2 \times L)$$

Where M is the torque (%torque x full scale torque), $R_d$ is the spindle radius (cm), and L is the effective spindle length (cm). The log of the shear stress was then plotted versus the log of the shear rate and a straight line was applied to the data. The slope of the line was taken to be the power law index **(n).**

Wet and Dry Coating Thickness

The wet thickness of a coating is calculated from the wet coating rate, assuming that 1 gallon represents 0.134 ft$^3$. For example, a coating applied at a rate of 1600 ft$^2$/gallon will be 0.00008 ft thick, which represents 0.001 inch or 1 mil. The dry coating thickness was calculated by multiplying the wet coating thickness by the percentage solids of the formulation. In the above example, a 20% solids finish applied at 1600 ft$^2$/gallon would yield a 0.2 mil thick dry coating. This calculation is based upon the assumption that there is no penetration of coating into the substrate. The wet coating thickness may also be characterized by the gap provided by a drawdown bar and the solids level may be used to calculate the dry coating thickness. For example, a No. 10 drawdown bar (available from Paul N. Gardner Co.) provides an applied wet coating about 0.025 mm (1 mil) thick. For a floor finish composition having a solids content of about 20 wt. %, a No. 10 drawdown bar will provide a dry coating about 0.2 mil (0.005 mm) thick.

Film Evaluation

The coated substrates were evaluated to assess strippability, gloss, color, transparency, absorbance and visual appearance, as follows:

Strippability

Chemical-physical removability (strippability) was evaluated by affixing an adhesive-backed foam ring to the coating surface. The inner portion of each ring was filled with a diluted composition of the commercial stripper CARESTRIP™ LO (available from Ecolab Inc.). The diluted stripper was allowed to contact the coating surface for a period of time and then poured out of the ring. The coated or stripped surface was rinsed with tap water. The treated area was viewed in relation to the untreated area by peeling the foam ring away from the coating and briefly wiping with a paper towel to remove loose coating material. A visually determined percent coating removal was recorded, with higher removal values indicating more removable coatings and a 100 % value indicating complete removal.

Gloss

Film gloss was measured at 20° and 60° using a Micro-TRI-Gloss meter (available from Paul N. Gardner Co., Inc.). An average of readings at 4 to 6 discrete points on the coating surface was determined.

Coating Color Values

Coating color values were evaluated using a MINISCAN XE Plus color spectrophotometer (45° illumination with 0° viewing geometry) or a COLORQUEST™ XE color spectrophotometer (integrating sphere geometry) (both available from Hunter Associates Laboratory). The former instrument is a hand-held device that is especially useful for evaluating a coated floor, while the latter instrument is a bench top device that is especially useful for evaluating individual coated tiles. Both instruments measure the reflectance spectrum of a surface and output color values in L*A*B* coordinates. These coordinates can be used to calculate parameters including lightness (L*), Whiteness Index (WI), and yellow index (YI). A D65 illuminant was used at a 10° observer angle. All color values were determined from an average of readings at 6 to 8 discrete points on the coating surface or substrate.

Transmittance and Absorbance

Coating transmittance was measured by applying one or more coats of a composition at various wet coating thicknesses reported below onto a 0.0127 mm thick clear polyester sheet (from GE Polymershapes). The coating was allowed to air dry and its % transmittance measured at discrete wavelengths reported below using a SPECTRONIC GENESYS™ 5 UV-Visible spectrometer (from Thermo Electron Corp.). An uncoated polyester sheet (or in some instances a sheet coated with various unmodified finishes described below) was used as a reference or control sample. Absorbance values were calculated from the % transmittance values using the equation $A = -log(T)$ where A is the absorbance value and T is the absolute transmittance value (the percent transmittance divided by 100).

Hiding Power

Hiding power was determined by applying one or more layers of a composition to a LENETA Form 5C Opacity chart and a LENETA Gray Scale Form 24B chart. Dry coatings were provided having a thickness of about 0.5 to 0.6 mils (about 0.015 mm). The resulting coatings were allowed to air dry for at least 24 hours. The hiding power was measured on the LENETA Gray Scale Form 24B chart by having an observer located three meters from the chart record the first gray scale bar that could be clearly differentiated from a white background. Higher observed gray scale bar values corresponded to coatings with greater hiding power (better capability to mask an underlying surface). The lightness value L* was determined over the black portion of the LENETA Form 5C Opacity chart using a MINIS CAN XE Plus color spectrophotometer.

Contrast Ratio

Contrast ratio can be determined by applying one or more layers of a composition to LENETA Form 5C Opacity charts using a drawdown Bar (No. 5, 7, or 10 or some combination thereof) from the Paul N. Gardner Co. and air drying between layers, to provide coatings having an approximate overall dry coating thickness of about 0.015 mm. The resulting coatings were allowed to air dry for at least 24 hours, then evaluated by measuring the CIE tristimulus Y value over the black and white areas of the opacity chart using a MINIS CAN XE Plus color spectrophotometer (45 degree illumination with 0 degree viewing geometry). The instrument was set up to read the reflectance of the coating and a D65 illuminant was used at a 10° observer angle. All color values were determined from an average of 5 readings at discrete points on the coating. In addition, the Y stimulus values of the white and black portions of a blank (i.e. uncoated) LENETA chart were measured for reference. The Y value of the white area was 81.7 and the Y value of the black area was 0.51. A corrected contrast ratio ($CR_{O.80}$) was calculated using the following equation where $W_0$ is the Y stimulus value of the white part of an uncoated opacity chart, $R_0$ is the Y value of the coating over the black area of the opacity chart, and $R_W$ is the Y value of the coating over the white area of the opacity chart:,

$$CR_{0.80} = f(R_0, R_W, W) = \frac{WR_0(1 - 0.80\,R_0)}{R_0(W - 0.80) + 0.80\,R_W(1 - WR_0)}$$

wherein W = the reflectance of the white area of the test substrate,
$R_w$ = the reflectance of the film over a white area of reflectance W,
$R_0$ = the reflectance of the film over the black area, and
$CRC_{0.80} = R_0/R_{w'}$, the CR when W = 0.80.

**Example 1**

Two 1.4 m x 1.8 m sections of a laboratory hallway floor were stripped as described above in the section entitled Tile Preparation, then coated with two layers of an undercoat and a single layer of a two-component polyurethane topcoat. The hallway flooring material was 0.3 m x 0.3 m EXCELON™ vinyl composition tiles (from Armstrong World Industries, Inc.) having a beige background and a mottled/speckled surface pattern identified as pattern no. 51839. This hallway had been in use for over 5 years and had undergone normal wear and tear associated with moderate levels of foot traffic. The first floor section undercoat was formed from two layers of PADLOCK™ acrylic polymer floor finish (16% nonvolatiles, from Ecolab Inc.), applied using a commercially available microfiber pad and a 50 m$^2$/L wet coating rate. A 30 minute drying time was allowed between layers. The second floor section undercoat was formed from two layers made by mixing 11.5% of an aqueous dispersion of NANOTEK™ No. Z1021W ultrafine zinc oxide dispersion in water (52% nonvolatiles, from Nanophase Technologies Corp.) with 88.5% of PADLOCK acrylic floor finish. Following application of the undercoat, the coated hallway sections were allowed to air dry for 1.5 hours. Identical topcoats were then applied to each coated hallway section, using a single layer of the two-component polyurethane ("2K PUR") topcoat formulation shown below in Table 5. The polyurethane topcoat formulation was mixed prior to application by combining Part A and Part B according to the weight ratios shown below, mixing vigorously for 3 minutes and then allowing the mixture to stand for 10 to 12 minutes before application at a 16 to 18.4 m$^2$/L wet coating rate.

**Table 5**

| 2K PUR Topcoat | | |
| --- | --- | --- |
| | **Ingredient** | **Parts by Weight** |
| Part A | Polyester polyol [1] | 88.90 |
| | Silicone defoamer[2] | 0.13 |
| | Surface agent[3] | 0.06 |
| | Surface agent [4] | 1.16 |
| | Deionized water | 9.75 |
| Part B | Hexamethylene diisocyanate [5] | 39.78 |
| | Hydrophilic hexamethylene diisocyanate [6] | 100 |

(continued)

| 2K PUR Topcoat | | |
|---|---|---|
| | Ingredient | Parts by Weight |
| | | Parts by weight |
| Mix Ratios | Part A | 22.5 |
| | Part B | 7.5 |

1. BAYHYDROL™ XP-7093, 30% nonvolatiles, Bayer Corporation.
2. BYK™ 025, BYK Chemie.
3. BYK™ 348, BYK Chemie.
4. BYK™ 380, BYK Chemie.
5. DESMODUR™ N-3600, Bayer Corporation.
6. BAYHYDUR™ XP-7165, Bayer Corporation.

The topcoated hallway sections were allowed to dry overnight at room temperature. Both sections were observed to have a tack-free, glossy film surface and sufficient translucency to allow the underlying tile pattern to be discerned. However, the section undercoated with the zinc-oxide modified undercoat (viz., the second section) appeared to observers as being noticeably "lighter", "whiter" or "brighter" than the first section. The overall impression was that the second section was much cleaner than the first section.

**Example 2**

A visual survey was carried out in the same hallway two months after the finishes described in Example 1 were applied. Individual tiles in the two sections were compared to two tiles within the section coated with commercially available acrylic floor finishes containing optical brighteners atop a conventional acrylic floor finish, and one tile within the section coated only with the conventional acrylic floor finish. Each of these three comparison tiles was first coated with a single layer of GEMSTAR LASER™ acrylic finish (20% solids, from Ecolab, St. Paul, MN) and allowed to dry. All three tiles were next washed with water to provide a clean surface. Two of the tiles were further coated the day before the survey with two layers of ISHINE™ optically brightened floor finish (25% solids, from Spartan Chemical Co.) or two layers of BETCO BEST™ floor finish (32% solids, containing optical brightener, from Betco Corp.) using a microfiber pad, a 50 m$^2$/L wet coating rate and a one-hour drying time between layers.

On the following day the visual survey was performed. Six observers who were unfamiliar with the project and its goals were asked to rank the hallway section tiles and the three comparison tiles using the numerical whiteness ranking set out below in Table 6:

**Table 6**

| Rank | Description |
|---|---|
| 5 | Tile looks unnaturally white, and its underlying pattern is masked |
| 4 | Tile looks bright and clean and has white undertones |
| 3 | Tile looks clean; may still have beige to yellow tones |
| 2 | Tile has slight dinginess, but its overall appearance is okay |
| 1 | Tile is dirty; brown to yellow in color |

Each observer was first shown a "dirty" tile deemed to have a rank of 1 and a "white" tile deemed to have a rank of 5. The dirty tile was located in the same hallway near the above-mentioned first and second sections. It had been stripped two months earlier, not recoated, and subjected to normal hallway traffic for two months, causing it to become very discolored and dirty. The white tile was made by removing the factory applied finish from a new EXCELON tile as described above in the section entitled Tile Preparation and coating the thus-cleaned surface with two layers of Extra White CUPRINOL™ Solid Color Deck Stain (~56% solids determined as described above in the section entitled Percent Solids, from Sherwin Williams Co., diluted to 20% solids using water). The stain was diluted to 20% solids to provide a more even comparison with GEMSTAR LASER™ acrylic finish (20% solids). The diluted stain was applied using the same procedure used above to apply the optically brightened finishes. The underlying pattern on the resulting coated tiles was largely obliterated, with only a few remnants of the pattern being visible through the white coating. This tile was included in the survey in order to provide a coated white endpoint, not a desired appearance target, since the tile had a dead, unnatural appearance and its underlying pattern could no longer effectively serve its original ornamental and dirt- and debris-masking purposes. The visual survey ranking results and the measured Whiteness Index (using a MINISCAN™ XE Plus color spectrophotometer) and gloss values are shown below in Table 7.

**Table 7**

| Run No | Description | Average Survey Ranking | 60° Gloss 1 | 20° Gloss 1 | Whiteness Index, WI 2 |
|---|---|---|---|---|---|
| 2-1 | New untrammeled tile coated with 2 layers diluted CUPRINOL deck stain (20% solids) | 5 | 6.7 | 1.3 | 33.3 |
| 2-2 | Aged walked-upon tiles coated with 2 layers ZnO-modified PADLOCK finish and 1 layer 2K PUR finish | 4.1 | 75.0 | 35.4 | 21.87 |
| 2-3 | Aged walked-upon tiles coated with 2 layers PADLOCK finish and 1 layer 2K PUR finish | 3.1 | 82.6 | 54.2 | 13.53 |
| 2-4 | Tile freshly coated with 1 layer GEMSTAR LASER™ finish | 2.8 | 40.7 | 13.4 | 3.62 |
| 2-5 | Tile freshly coated with 2 layers ISHINE optically brightened finish over 1 layer GEMSTAR LASER™ finish | 2.1 | 87.8 | 60.5 | 14.53 |
| 2-6 | Tile freshly coated with 2 layers BETCO BEST optically brightened finish over 1 layer GEMSTAR LASER™ finish | 2.1 | 84.2 | 61.0 | 9.62 |
| 2-7 | Aged walked-upon bare, dirty tile | 1 | 9.2 | 1.4 | 1.06 |

1 = Average gloss reading of 6 different points on 304 mm x 304 mm tile.
2 = Average color value measurement of 8 different areas on 304 mm x 304 mm patterned beige vinyl tile.

The observers preferred the appearance of tiles coated with the zinc oxide-modified undercoat (Run No. 2-2) over all other tiles having a numerically lower or higher survey ranking. Surprisingly, the expressed appearance preferences did not completely correlate with gloss or whiteness measurements obtained for the various coatings. For example, tiles coated with ISHINE finish (Run 2-5) or with BETCO BEST finish (2-6) had much higher gloss than the floor section coated with the zinc oxide-modified undercoat (Run 2-2) or tiles coated with GEMSTAR LASER™ finish (Run 2-4), but the appearance of tiles coated with these optically brightened finishes was not preferred by the observers. Also, the white reference tile (Run No. 2-1) had a greater perceived whiteness than all other tiles, but its appearance was not preferred. The expressed observer preferences for the coating in Run No. 2-2 are believed to be due in large part to the combination of lightness and translucency imparted by the modified undercoat and a corresponding impression that the finish or tile is cleaner.

**Example 3**

Using the method of Example 1, a series of 1.4 m x 1.2 m floor sections in the Example 1 hallway were coated with two layers of an undercoat containing varying amounts of zinc oxide followed by a single layer of the polyurethane topcoat shown in Table 5. The zinc oxide used was NANOTEK™ No. Z1021W ultrafine zinc oxide dispersion in water (52% nonvolatiles) available from Nanophase Technologies Corp. The resulting multilayer finishes had sufficient translucency to allow the underlying tile pattern to be discerned. The Whiteness Index (using a MINIS CAN XE Plus color spectrophotometer) of each coating was recorded. The results are shown below in Table 8:

**Table 8**

| Run No. | ZnO (wt.% solid ZnO in dry coating) | | Whiteness Index (WI) |
|---|---|---|---|
| | Layer 1 | Layer 2 | |
| 3-1* | 0 | 0 | 3.89 |
| 3-2 | 0 | 30.0 | 4.89 |
| 3-3 | 0 | 40.0 | 8.57 |
| * Comparative example | | | |

The data in Table 8 show that higher zinc oxide levels in the undercoat provided whiter and perceptibly lighter and cleaner appearing coatings. All coatings remained translucent and the underlying tile pattern remained readily discernible.

**Example 4**

A series of acrylic floor finishes containing zinc oxide or titanium dioxide particle dispersions were formulated. The particle dispersion concentrations and number of coats applied were varied in order to illustrate effects upon the gloss, whiteness, and transparency of the resulting coatings. The particle dispersions were added to GEMSTAR LASER™ acrylic floor finish as employed in Example 2. The zinc oxide dispersion was the same as in Examples 1 and 3. The titanium dioxide dispersion was TI-PURE™ Slurry R-746, an aqueous pigment dispersion (76.4% nonvolatiles, from E. I. duPont de Nemours and Co.). Water was added to each undercoat formulation to maintain a constant 20% solids level. The formulations are shown below in Table 9.

**Table 9**

| Formulation No. | Lightness Inducing Agent | Particle Dispersion (wt.%) | Added Water (wt.%) | Pigment Particles in Dried Coating (wt.%) |
|---|---|---|---|---|
| 4-1 | ZnO | 1.9 | 3.0 | 4.9 |
| 4-2 | ZnO | 8.4 | 13.3 | 21.8 |
| 4-3 | $TiO_2$ | 1.3 | 3.6 | 5.0 |
| 4-4 | $TiO_2$ | 5.7 | 16.0 | 21.7 |

A commercially available deck stain (Extra White CUPRINOL™ Solid Color Deck Stain as used in Example 2, diluted to 20% nonvolatiles using water) and a deck seal (CUPRINOL UV Sun Block Deck and Wood Seal, clear base with 3503 white birch tint, 14% solids determined as described above in the section entitled Percent Solids, from Sherwin Williams Co.) were also evaluated. White vinyl composition tiles (from the Congoleum Corporation, cleaned as described above in the section entitled Tile Preparation) were coated with the Table 9 formulations or with the commercial products. The transmittance and absorbance of each coating formulation or commercial product was also evaluated as described above in the section entitled Transmittance and Absorbance. Formulations 4-1 through 4-4 were applied to four white tiles and four polyester sheets using 1, 2, 3 or 4 layers of the formulation and a No. 7 drawdown bar (0.018 mm wet thickness, from the Paul N. Gardner Co.), then overcoated with 3, 2, 1 or no layers of GEMSTAR LASER™ acrylic finish. At least 30 minutes drying time was allowed between layers. This procedure yielded test panels having a coating with an overall dry thickness of about 0.015 mm and in which 25%, 50%, 75% or 100% of the overall coating represented a modified acrylic finish containing a lightness inducing agent. A control coated white tile and a coated polyester sheet each bearing 4 similarly-applied layers of GEMSTAR LASER™ acrylic finish having an overall dry thickness of about 0.015 mm were also prepared. A comparison coated white tile and coated polyester sheet each bearing a similarly-applied layer of the commercial deck stain having an overall dry thickness of about 0.015 mm were also prepared. A comparison coated white tile and coated polyester sheet each bearing a single layer of the commercial deck seal applied using a No. 50 drawdown bar (0.127 mm wet thickness, from the Paul N. Gardner Co.) and having an overall dry thickness of about 0.018 mm were also prepared. The coated white tiles were evaluated to determine their Whiteness Index and gloss values, and the polyester sheets were evaluated to determine their transmittance and absorbance at 500 nm. A measure of merit was calculated by dividing the Whiteness Index by the 500 nm absorption value. Several of the finishes were also evaluated to determine their removability using a 1:8 dilution of CARESTRIP LO stripper and a 10 minute stripper contact period. Set out below in Table 10 are the Run No., Formulation No. employed (from Table 9), Number of Formulation layers applied ("No. of Mod. Coats"), Number of GEMSTAR LASERT™ acrylic finish layers applied ("No. of Unmod. Coats"), % Transmittance, Absorbance Coefficient at 500 nm, Whiteness Index (measured on white vinyl composition tiles), Whiteness Index/Absorbance Coefficient ratio (WI/A ratio), 20° Gloss, 60° Gloss and the % Removal (chemical strippability) result. The Whiteness Index was measured using a COLORQUEST™ XE Color spectrophotometer.

**Table 10**

| Run No. | Form. No. | No. of Mod. Coats | No. of Unmod. Coats | % Trans. | Absorb. at 500 nm | W.I | WI/A Ratio | 20° Gloss | 60° Gloss | % Removal |
|---|---|---|---|---|---|---|---|---|---|---|
| 4 | 4[A]* | 0 | 4 | 100 | -0.0013 | 45.23 | NM[B] | 30.9 | 75.0 | 100 |
| 4-1a | 4-1 | 1 | 3 | 96.8 | 0.014 | 46.32 | 3309 | 32.8 | 79.3 | NM |
| 4-1b | 4-1 | 2 | 2 | 92.8 | 0.033 | 45.99 | 1408 | 31.1 | 78 0 | NM |
| 4-1c | 4-1 | 3 | 1 | 87.1 | 0.060 | 46.71 | 779 | 29.3 | 75.6 | NM |
| 4-1d | 4-1 | 4 | 0 | 82.2 | 0.085 | 45.63 | 537 | 32.0 | 78.2 | 100 |
| 4-2a | 4-2 | 1 | 3 | 82.4 | 0.084 | 47.9 | 570 | 43.9 | 86.3 | NM |
| 4-2b | 4-2 | 2 | 2 | 66.2 | 0.18 | 49.84 | 278 | 38.2 | 82.3 | NM |
| 4-2c | 4-2 | 3 | 1 | 48.8 | 0.31 | 50.91 | 163 | 30.5 | 72.6 | NM |
| 4-2d | 4-2 | 4 | 0 | 34.1 | 0.47 | 52.24 | 112 | 11.3 | 309 | 100 |
| 4-3a | 4-3 | 1 | 3 | 82.5 | 0.083 | 46.94 | 563 | 39.6 | 85.2 | NM |
| 4-3b | 4-3 | 2 | 2 | 58.7 | 0.23 | 46.12 | 199 | 41.1 | 86.0 | NM |
| 4-3c | 4-3 | 3 | 1 | 48.0 | 0.32 | 46.16 | 145 | 31.7 | 79.9 | NM |
| 4-3d | 4-3 | 4 | 0 | 32.9 | 0.48 | 47.79 | 99 | 35.8 | 83.5 | 100 |
| 4-4a | 4-4 | 1 | 3 | 23,8 | 0,63 | 50.92 | 82 | 40.8 | 85.7 | NM |
| 4-4b | 4-4 | 2 | 2 | 8.6 | 1.06 | 5374 | 50 | 38.9 | 86.2 | NM |
| 4-4c | 4-4 | 3 | 1 | 1.6 | 1.8 | 58.32 | 32 | 39.9 | 85.9 | NM |
| 4-4d | 4-4 | 4 | 0 | 1.1 | 1.9 | 63.58 | 33 | 17.5 | 64.2 | 100 |
| 4-5 | Deck Stain * | 4 | 0 | 0.6 | 2.2 | 71.23 | 32 | 1.7 | 8.5 | 0 |
| 4-6 | Deck Seal * | 1 (#50 bar) | 0 | 0.7 | 2.2 | 57.1 | 27 | 3.9 | 24.4 | 20 w/wiping |

A. Unmodified GEMSTAR LASER™ finish.
B. NM = Not Measured in WI/A ratio because the absorbance was nearly zero.
* Comparative example.

Table 10 illustrates the relationship between particle type, particle loading, and the number of undercoats upon Whiteness Index and absorbance for several finishes. As the particle loading and number of undercoats increased, the Whiteness Index increased and the absorbance increased, and the resulting ratio of Whiteness Index to absorbance decreased.

A lightness evaluation was carried out by applying a single coat of each formulation to LENETA Form N2A opacity charts using a No. 7 drawdown bar to provide a dry coating having a thickness of about 0.004 mm. Coatings having a similar thickness were obtained by diluting the deck stain to 20% solids with water and coating the diluted stain on the LENETA chart using a No. 7 drawdown bar, and by applying the deck seal as is using a No. 10 drawdown bar. The color values of the coated areas applied to the black regions of the LENETA Chart were measured as described above in the section entitled Coating Color Values. The L* values are shown below in Table 11. The coating Color Values were determined using a COLORQUEST™ XE color spectrophotometer.

**Table 11**

| Formulation No. | Lightness Inducing Agent | Percent Lightness Inducing Agent (wt. % dry pigment in dry coating) | L* |
|---|---|---|---|
| 4A* | None | None | 26.42 |
| 4-1 | ZnO | 5 | 26.98 |
| 4-2 | ZnO | 22 | 28.48 |
| 4-3 | $TiO_2$ | 5 | 29.12 |
| 4-4 | $TiO_2$ | 22 | 37.56 |
| Deck Stain (20% solids) * | NM | NM | 55.85 |
| Deck Seal (#10 bar)* | NM | NM | 42.19 |
| A. Unmodified GEMSTAR LASER™ finish. NM = Not Measured. * Comparative example. | | | |

As shown in Table 11, the chosen lightness inducing agents increased the measured lightness values. The deck stain and deck seal products had yet higher lightness values but the coating translucencies were sufficiently low so that the underlying black background was noticeably masked.

**Example 5**

Using the general method of Example 4, floor finish compositions containing a resin based aqueous titanium dioxide dispersion (WFD-5006 aqueous $TiO_2$ dispersion, 73.3% solids, from Sun Chemical Corp.) or ultrafine zinc oxide as used in Example 4 were prepared. The formulations are shown below in Table 12.

**Table 12**

| Formulation No. | Lightness Inducing Agent | Pigment Dispersion (wt.%) | Added Water (wt. %) | Dry Pigment in Dry Coating (wt.%) |
|---|---|---|---|---|
| 5A | None | 0 | 0 | 0 |
| 5-1 | ZnO | 14.7 | 23.5 | 38.2 |
| 5-2 | ZnO | 23.8 | 38.1 | 61.9 |
| 5-3 | $TiO_2$ | 4.65 | 12.8 | 17.4 |
| 5-4 | $TiO_2$ | 8.2 | 22.7 | 30.9 |
| A. Unmodified GEMSTAR LASER™ finish, comparative example. | | | | |

A bare area of the Example 1 hallway floor was divided into seven 1.5 m x 2.4 m sections, and each was designated as a "Field". Five layers of each formulation were applied to each Field as shown below in Table 13, using microfiber mops and a 50 m²/L wet coating rate. In order to saturate the mops before use, 100g of extra finish was poured onto the floor and the mop was used to soak it up. Between coats, the saturated mops were stored in plastic bags. Each layer was allowed to dry until no longer tacky (about 30-45 minutes) before applying the next layer. The layers identified below as "Unmod." contained unmodified GEMSTAR LASER™ finish.

**Table 13**

| Field No. | Layer No. 1 | Layer No. 2 | Layer No. 3 | Layer No. 4 | Layer No. 5 |
|---|---|---|---|---|---|
| 5-1* | Unmod.A | Unmod. | Unmod. | Unmod. | Unmod. |
| 5-2 | 5-1 | 5-1 | Unmod. | Unmod. | Unmod. |
| 5-3 | 5-2 | 5-2 | Unmod. | Unmod. | Unmod. |

(continued)

| Field No. | Layer No. 1 | Layer No. 2 | Layer No. 3 | Layer No. 4 | Layer No. 5 |
|---|---|---|---|---|---|
| 5-4 | 5-3 | 5-3 | Unmod. | Unmod. | Unmod. |
| 5-5 | 5-4 | 5-4 | Unmod. | Unmod. | Unmod. |
| 5-6 | Unmod. | Unmod. | Unmod. | Unmod. | 5-1 |
| 5-7 | Unmod. | Unmod. | Unmod. | Unmod. | 5-3 |
| A. Unmodified GEMSTAR LASER™ finish. * Comparative example | | | | | |

Fields with undercoats containing a lightness inducing agent (Fields 5-2 through 5-5) had a much cleaner and lighter appearance than the field coated with 5 coats of unmodified finish (Field 5-1) yet the tile pattern remained clearly discernible under normal daytime lighting conditions to an observer standing on the Field. Fields 5-2 and 5-3 appeared to be very similar to one another despite their differing zinc oxide levels. However, Fields 5-4 and 5-5 had noticeably different appearances (viz., noticeably different apparent lightness levels). Fields topcoated with one coat of a finish containing lightness inducing agents (Fields 5-6 and 5-7) also had a cleaner and lighter appearance than the field coated with five coats of unmodified finish (Field 5-1), but the effect was more subtle and somewhat less noticeable than the fields containing lightness inducing agents in the undercoats (Fields 5-2 through 5-5). This may however have been caused by the use of two modified undercoat layers in Fields 5-2 through 5-5 whereas Fields 5-6 and 5-7 employed only one modified topcoat layer.

Two commercially available paints (VALSPAR™ 100% Acrylic White Interior Flat Latex and VALSPAR White Interior/Exterior Gloss Enamel Latex, both from Valspar Corp.) were analyzed to determine their percent solids levels, and determined to contain 58% and 61% solids, respectively, using the moisture balance method described above in the section entitled Percent Solids. In order to maintain a constant film thickness for subsequent testing, the paints were diluted to 20% solids by adding about 20g of the paint to 40 g of deionized water. Drawdowns of the Formulations in Table 12 and the diluted paints were made on LENETA Form 5C opacity charts and on 0.127 mm thick clear polyester sheets from GE Polymershapes using a No. 10 Bar from the Paul N. Gardner Co., to provide coatings having an approximate dry coating thickness of about 0.005 mm. The resulting coated films were allowed to air dry for at least 24 hours.

The black and white background regions of coated LENETA Form 5C charts were evaluated using a COLORQUEST XE color spectrophotometer as described above in the section entitled Coating Color Values. The measurement of the white region provided Whiteness Index values and the measurement of the black region provided L* values. The coated polyester sheets were measured to determine transmittance and absorbance at 500 nm as described above in the section entitled Transmittance and Absorbance, with the polyester sheet coated with Formulation 5 (unmodified GEMSTAR LASER™ finish) being used as a reference or background sample.

Drawdowns of the Formulations in Table 12 and the undiluted (that is, as supplied) paints were also made on LENETA Form 24B Gray Scale charts using a No. 10 Bar. For Formulations 5 and 5-1 through 5-4 a total of three layers were applied to the gray scale chart, with each layer being allowed to air dry before the next layer was applied. For the undiluted paints, one layer was applied to each gray scale chart, thereby yielding a dry coating thickness of about 0.015 mm, comparable to the coating thickness obtained by applying three layers of the 20% solids unmodified and modified floor finish compositions to the gray scale charts. The Hiding Power of each formulation was evaluated as described above in the section entitled Hiding Power.

The LENETA gray scale charts were also used for removability tests. The final coatings were allowed to dry for 24 hours before testing and evaluated to determine strippability using the procedure described above in the section entitled Strippability, a 1:32 dilution of the commercial stripper CARESTRIP LO, and a 2 minute contact time.

The results of these various measurements are set out below in Table 14.

**Table 14**

| Form. No. | Pigment | % Trans. | Absorb. At 500 nm | W.I.[B] | WI/Absorb. | L*[C] | Hiding Power | L*/Hiding Power | % Removal |
|---|---|---|---|---|---|---|---|---|---|
| 5[A]* | None | NM | NM | 75 .11 | NM | 28.73 | 1 | 28.73 | 100 |
| 5-1 | 38% ZnO | 46.7 | 0,331 | 74.79 | 226.2 | 37.15 | 1 | 37.15 | 100 |
| 5-2 | 62% ZnO | 38.5 | 0.414 | 74 92 | 181.0 | 37.32 | 1 | 3732 | 100 |
| 5-3 | 17% $TiO_2$ | 23.5 | 0.630 | 74.51 | 118.3 | 40.58 | 1 | 40.58 | 95-100 |
| 5-4 | 31% $TiO_2$ | 17.9 | 0.746 | 74.96 | 100.5 | 50.82 | 1 | 50.82 | 100 |
| Flat* White Latex | NA[D] | 3.2 | 1.493 | 72 05 | 48.3 | 69.05 | 4 | 17.3 | 0 |
| Gloss* White Enamel | NA | 1.9 | 1.729 | 76.25 | 44.1 | 61.30 | 3 | 20.4 | 0 |

A. Unmodified GEMSTAR LASER™ finish.
B. Over white background of opacity chart.
C. Over black background of opacity chart.
D. Not applicable.
* Comparative example.

The data in Table 14 show that Formulations 5-1 through 5-4 were strippable and jobsite-renewable whereas the commercial paint products were not strippable using a typical floor finish stripping solution. The ratios for Whiteness Index :absorbance and L*/Hiding Power for formulations 5-1 through 5-4 are significantly greater than the values exhibited by the commercial paints. Higher L*/Hiding Power ratios appeared to correlate well with the perceived desirability of appearance. The appearance of tiles coated with formulations 5-3 and 5-4 provided a desirable appearance. The observers particularly preferred the appearance of tiles coated with Formulations 5-3 and 5-4.

**Example 7**

Using the general method of Example 4, floor finish compositions containing ISI STAR floor finish or part A of TUKLAR MEDICAL floor finish (both from Ecolab Inc.) were combined with a variety of titanium dioxide pigment dispersions, using sufficient pigment to provide 2.77 % pigment solids in the floor finish compositions. Samples of the floor finishes without a pigment addition were used as controls. White and beige vinyl composition tiles were each ruled into quarters. Three coats of each formulation were applied to one-quarter of each tile, using a coating weight of about 0.6 to 0.7 g per coat and a drying time of at least 45 minutes between coats. The resulting finishes had sufficient translucency to allow the underlying tile to be discerned. Gloss values were measured after the top layers had completely dried. Color values were measured after allowing the coated tiles to stand overnight at room temperature. Set out below in Tables 17 and 18 (which respectively report results on white and beige tiles) are the formulation numbers, lightness inducing agent employed, 20° and 60° gloss values, gloss loss in comparison to the control formulations and the Whiteness Index values. The color values were measured using a MINISCAN XE Plus color spectrophotometer.

**Table 17: White Tiles**

| Formulation No. | Lightness Inducing Agent | 20° Gloss | 20° Gloss Loss vs. Control (%) | 60° Gloss | 60° Gloss Loss vs. Control (%) | Whiteness Index |
|---|---|---|---|---|---|---|
| 7-A[A]* | None | 23.6 | 0 | 65.4 | 0 | 41.06 |
| 7-1 | Ti-Pure R-746[C] | 20.9 | -11.4 | 63.2 | -3.4 | 56.78 |
| 7-2 | KEMIRA RD3[D] | 13.9 | -41.1 | 53.2 | -18.7 | 58.75 |
| 7-3 | KEMIRA 660[D] | 16.8 | -28.8 | 58.4 | -10.7 | 53.95 |
| 7-4 | KEMIRA RDE2[D] | 18.5 | -21.6 | 59.3 | -9.3 | 58.75 |
| 7-5 | KEMIRA RDI-S[D] | 16.1 | -31.8 | 57 | -12.8 | 55.15 |
| 7-B[B]* | None | 37 | 0 | 78.2 | 0 | 40.19 |
| 7-6 | Ti-Pure R-746[C] | 34.8 | -6.0 | 77.2 | -1.3 | 58.51 |

A. Unmodified ISI STAR finish.
B. Unmodified TUKLAR MEDICAL finish (Part A only).
C. From E. I. duPont de Nemours and Co.
D. From Kemira Pigments Oy.
* Comparative example.

**Table 18: Beige Tiles**

| Formulation No. | Lightness Inducing Agent | 20° Gloss | 20° Gloss Loss vs. Control (%) | 60° Gloss | 60° Gloss Loss vs. Control (%) | Whiteness Index |
|---|---|---|---|---|---|---|
| 7-A[A]* | None | 37.6 | 0 | 72.7 | 0 | 14.88 |

(continued)

| Formulation No. | Lightness Inducing Agent | 20° Gloss | 20° Gloss Loss vs. Control (%) | 60° Gloss | 60° Gloss Loss vs. Control (%) | Whiteness Index |
|---|---|---|---|---|---|---|
| 7-1 | Ti-Pure R-746[C] | 27 | -28.2 | 65 | -10,6 | 43.14 |
| 7-2 | KEMIRA RD3[D] | 22.7 | -39.6 | 61.7 | -15.1 | 47.70 |
| 7-3 | KEMIRA 660[D] | 22.5 | -40.2 | 61.8 | -15.0 | 41.72 |
| 7-4 | KEMIRA RDE2[D] | 24.1 | -35.9 | 62.5 | -14.0 | 45.44 |
| 7-5 | KEMIRA RDI-S[D] | 21.2 | -43.6 | 61 | -16.1 | 41.84 |
| 7-B[B*] | None | 45.4 | 0 | 78 | 0 | 16.49 |
| 7-6 | Ti-Pure R-746[C] | 39.4 | -13.2 | 75.5 | -3.2 | 47.01 |

A. Unmodified ISI STAR finish.
B. Unmodified TUKLAR MEDICAL finish (Part A only).
C. From E. I. duPont de Nemours and Co.
D. From Kemira Pigments Oy.
* Comparative example.

Various commercially available titanium dioxide pigments are believed to have different surface treatments or coatings, different dispersants, different particle sizes, and different forms, and those properties may affect Whiteness Index and gloss. The results in Tables 17 and 18 show that variation in the type of titanium dioxide employed could provide variation in lightness enhancement. Especially noticeable lightening and low gloss reduction was obtained for Formulation 7-6.

**Example 8**

A series of acrylic floor finish formulations containing different types and amounts of lightness inducing agents was prepared. The lightness inducing agents ACUSOL OP302P as employed in Example 6, WFD 5006 $TiO_2$ dispersion (73.3% solids, from Sun Chemical Corp.) or ROPAQUE ULTRA core-shell polymer emulsion (30% solids, from Rohm & Haas Co.) were added to TAJ MAHAL acrylic floor finish (20% solids, from Ecolab Inc.). Water was added to each formulation to maintain a constant 20% solids level to provide a consistent dry coating thickness. The formulations are shown below in Table 19.

**Table 19**

| Formulation No. | Lightness Inducing Agent | Lightness-Inducing Agent (wt.% in composition) | Added Water (%) | Lightness Inducing Agent in Coating (wt.% solid in dry coating) |
|---|---|---|---|---|
| 8* | None | 0.0 | 0.0 | 0.0 |
| 8-1 | ACUSOL OP302P | 12.5 | 12.5 | 25.0 |
| 8-2 | ACUSOL OP302P | 7.5 | 7.5 | 15.0 |
| 8-3 | WFD 5006 $TiO_2$ | 7.6 | 17.9 | 25.0 |
| 8-4 | WFD 5006 $TiO_2$ | 4.6 | 10.8 | 15.0 |

(continued)

| Formulation No. | Lightness Inducing Agent | Lightness-Inducing Agent (wt.% in composition) | Added Water (%) | Lightness Inducing Agent in Coating (wt.% solid in dry coating) |
|---|---|---|---|---|
| 8-5 | ROPAQUE ULTRA | 16.7 | 8.3 | 25.0 |
| 8-6 | ROPAQUE ULTRA | 10.0 | 5.0 | 15.0 |
| * Comparative example | | | | |

BYKO™ Charts Form AG-5304 (from BYK-Gardner and similar to LENETA Charts Form 5C) were coated with the above formulations using a No. 10 drawdown bar. One coat of each formulation was applied to each chart. The coatings were allowed to dry for at least 1 day and observed to be translucent. Color readings were taken from the black section of each chart using a COLORQUEST XE color spectrophotometer as described in the section entitled Coating Color Values. The results are shown below in Table 20.

**Table 20**

| Formulation No. | Lightness Inducing Agent | Lightness Inducing Agent in Coating (wt.% solid in dry coating) | L* | A* | B* |
|---|---|---|---|---|---|
| 8* | None | 0.0 | 27.34 | - 0.15 | - 0.99 |
| 8-1 | ACUSOL OP302P | 25.0 | 26.86 | 0.03 | - 1.09 |
| 8-2 | ACUSOL OP302P | 15.0 | 27.44 | - 0.07 | - 1.17 |
| 8-3 | WFD 5006 TiO$_2$ | 25.0 | 48.47 | - 1.18 | - 6.38 |
| 8-4 | WFD 5006 TiO$_2$ | 15.0 | 42.61 | -1.00 | -5.89 |
| 8-5 | ROPAQUE Ultra | 25.0 | 54.76 | - 1.07 | - 3.12 |
| 8-6 | ROPAQUE Ultra | 15.0 | 44.95 | - 0.80 | - 2.35 |
| * Comparative example. | | | | | |

The results in Table 20 show that at similar loading levels, ROPAQUE ULTRA opacifier has a much greater effect on the L* value (lightness value) of a floor finish coated over a black substrate than does ACUSOL OP302P opacifier or WFD 5006 TiO$_2$ pigment. Addition of ROPAQUE ULTRA opacifier provided a coating having a lighter, "whiter" appearance than the control coating or the coatings containing ACUSOL OP302P opacifier or WFD 5006 TiO$_2$ pigment. ROPAQUE ULTRA opacifier also appeared to be a more potent lightness inducing agent than TiO$_2$ added at the same weight percent.

**Example 9**

The Example 8 formulations were evaluated to determine their resistance to sedimentation and long-term storage. A measured amount of each formulation was transferred to a 50 mL centrifuge tube (from VWR International, catalog no. 21008-240). The samples were centrifuged at 1500 rpm for 10 minutes. Immediately after centrifuging, several milliliters of finish were drawn from the top of each tube and coated using a No. 10 drawdown bar onto a BYKO Charts Form AG-5304 as employed in Example 8. The remaining finish was decanted from the centrifuge tube and the sediment (if any) remaining in the bottom of the centrifuge tube was dried in a 50° C oven for at least one day. Once dry, the sediment was removed from the oven, cooled to room temperature and weighed.

In order to rate the stability of the different formulas, a percentage of lightness inducing agent lost upon centrifugation was determined by dividing the amount of residue remaining after centrifugation and drying by the total grams of lightness inducing agent in the floor finish, and multiplying by 100. Table 21 lists the centrifuge results for the Example 8 formulations.

**Table 21**

| Form. No. | Lightness Inducing Agent | Lightness Inducing Agent in Coating. (wt.% solid in dry coating) | Mass of Floor Finish in Centrifuge Tube (g) | Mass of Residue After Centrifuging, Decanting and Drying (g) | % Lightness Inducing Agent Lost |
|---|---|---|---|---|---|
| 8* | None | 0.0 | 45.2698 | 0.1055 | NA |
| 8-1 | ACUSOL OP302P | 25.0 | 45.7868 | 0.0863 | 3.77 |
| 8-2 | ACUSOL OP302P | 15.0 | 45.7958 | 0.0996 | 7.25 |
| 8-3 | WFD5006 $TiO_2$ | 25.0 | 47.1096 | 0.8229 | 34.94 |
| 8-4 | WFD5006 $TiO_2$ | 15.0 | 47.9867 | 0.5842 | 40.58 |
| 8-5 | ROPAQUE ULTRA | 25.0 | 45.7780 | 0.1233 | 5.39 |
| 8-6 | ROPAQUE ULTRA | 15.0 | 43.8113 | 0.1061 | 8.07 |

**[0141]** * Comparative example.

The results in Table 21 show that less lightness inducing agent was lost due to sedimentation in the formulations containing ROPAQUE ULTRA or ACUSOL OP302P opacifiers than in the formulation containing WFD 5006 $TiO_2$ pigment. These polymeric lightness inducing agent formulations should thus have better storage stability than the formulation containing WFD 5006 $TiO_2$ pigment.

The black areas of the coated BYKO charts were evaluated to determine their color values using a COLORQUEST XE color spectrophotometer as described above in the section entitled Coating Color Values. The change in L* value due to sedimentation (Delta L*) was calculated by subtracting the measured L* value after centrifuging from the initial L* value for each formulation. The results are shown below in Table 22.

**Table 22**

| Form. No. | Lightness Inducing Agent | Lightness Inducing Agent in Coating (%) | L* | A* | B* | Delta L* |
|---|---|---|---|---|---|---|
| 8* | None | 0.0 | 27.27 | -0.17 | 1.00 | 0.07 |
| 8-1 | ACUSOL OP302P | 25.0 | 27.31 | 0.22 | - 1.16 | -0.45 |
| 8-2 | ACUSOL OP302P | 15.0 | 27.35 | -0.02 | -1.19 | 0.09 |
| 8-3 | WFD 5006 $TiO_2$ | 25.0 | 41.35 | -0.95 | - 6.63 | 7.12 |
| 8-4 | WFD 5006 $TiO_2$ | 15.0 | 37.83 | -0.75 | - 5.96 | 4.78 |
| 8-5 | ROPAQUE ULTRA | 25.0 | 54.92 | -1.07 | -3.08 | -0.16 |
| 8-6 | ROPAQUE ULTRA | 15.0 | 45.08 | -0.80 | -2.44 | -0.13 |
| * Comparative example. | | | | | | |

The results in Table 22 show that the formulations containing ROPAQUE ULTRA opacifier retained their lightness inducing properties after centrifugation (as manifested by little or no change in the L* value on the black section of the BYKO chart). The results also show that the formulations containing WFD 5006 $TiO_2$ pigment had a higher $\Delta L^*$ and some loss of lightness inducing properties. The formulations containing ACUSOL OP302P opacifier also retained their lightness inducing properties after centrifugation but at lower L* values at the loading levels employed.

**Example 10 - Use of Sealer Over Terrazzo Tiles**

A series of sealer formulations were applied to precast 12" x 12" white terrazzo tiles (commercially available from Wausau Tile, cat. no. WT751CP) in order to assess the effect of a sealer on the whiteness index of coatings made with Formulation 11-a (see Example 11). Before coating, two terrazzo tiles were precleaned with a 10% solution of OASIS™ 299 cleaner (commercially available from Ecolab), rinsed with water, and towel dried. The terrazzo tiles were allowed to equilibrate for at least 3 hours at 42°F and 50°F, respectively. Once equilibrated, each terrazzo tile was divided into quarters (6" square sections), and 1.2 to 1.5g of RIVET™ floor finish sealer (commercially available from Ecolab Inc.) and TAJ MAHAL™ floor finish sealer (commercially available from Ecolab Inc.) were applied to a single section on each tile with a microfiber pad and allowed to dry at the appropriate temperature (42°F or 50°F) for at least 1.5 hours. After drying, two coats of Formulation 11-a (1.2g to 1.5g per section per coat) were applied to all sections on each tile, allowing at least 2.5 hours at the respective temperatures in between coats for drying. The coated tiles were then allowed to dry overnight (again, at the respective temperatures) and two coats of MARKETSTAR™ finish (25% solids, commercially available from Ecolab, at 1.2g to 1.5g per section per coat) were applied to all sections on each tile. Again, the coatings were allowed to dry for 2 hours in between coats at 42°F and 50°F. After the final coat of MARKETSTAR finish was applied, the tiles were allowed to dry overnight at the respective temperatures. The following day, the color readings of the various coatings over the white terrazzo substrate were recorded using a MINISCAN XE instrument as described in the section "Coating Color". The average whiteness index (WI) and lightness value (L*) of 8 distinct spots on each section are recorded in Table 23.

**Table 23**

| Run No. | Coating Temperature (°F) | Sealer | Average Whiteness Index (WI | Lightness Value (L*) |
|---------|--------------------------|--------|------------------------------|----------------------|
| 10-1 | 42 | Rivet | 75.70 | 91.26 |
| 10-2 | 42 | TAJ MAHAL | 74.24 | 91.13 |
| 10-3 | 42 | None | 71.34 | 90.13 |
| 10-4 | 50 | Rivet | 73.13 | 90.73 |
| 10-5 | 50 | TAJ MAHAL | 71.89 | 90.53 |
| 10-6 | 50 | None | 66.93 | 89.42 |

Table 23 shows that the presence of a sealer coat (Run Nos. 10-1, 10-2, 10-4, and 10-5) increases the overall whiteness index and lightness value of the coated terrazzo in comparison to coatings on terrazzo without a sealer (Run Nos. 10-3 and 10-6).

**Example 11**

Two acrylic floor finish formulations containing an organic pigment available under the name ROPAQUE™ ULTRA from Rohm & Haas Co. as a lightness inducing agent, were prepared according to the formulations identified in Table 24.

**Table 24**

| | Formulation 11-a | Formulation 11-b |
|---|------------------|------------------|
| Water | 38.08 | 37.70 |
| KATHON™ CG/ICP preservative[A] | 0.03 | 0.03 |
| ABEXTM 18S emulsifier[B] | 0.36 | 0.36 |
| MASURF™ FS-230 surfactant[C] | 0.85 | 0.84 |
| Diethylene Glycol Ethyl Ether | 1.95 | 1.93 |
| Propylene Glycol | 3.90 | 3.86 |
| Tributoxy Ethyl Phosphate | 1.30 | 1.29 |
| DURAGREEN™ MF-1[D] | 30.75 | 30.44 |

(continued)

| | Formulation 11-a | Formulation 11-b |
|---|---|---|
| OPAQUE™ ULTRA Opacifier[E] | 19.52 | 19.32 |
| ACUSOL™ 460N copolymer[F] | 0.10 | 0.10 |
| EPOLENE™ E43N wax[G] | 2.30 | 2.28 |
| A-C™ 325N[H] | 0.84 | 0.83 |
| SE-21 antifoam emulsion[I] | 0.02 | 0.02 |
| Fluorescein (2%) in 0.2M KOH[J] | 0.00 | 1.00 |
| **TOTALS** | **100.00** | **100.00** |

A. Preservative from Rohm and Haas Co.
B. Anionic surfactant from Rhone-Poulenc, Inc. Surfactants and Specialty Chemicals (35% solids).
C. Fluoroaliphatic amine oxide fluorosurfactant, from Mason Chemical Co. (1% active solution).
D. Zinc-free styrene acrylic emulsion from Rohm and Haas Co., made as described in U.S. Patent Nos. 5,574,090 and 6,586,516 (40.5% solids).
E. Opaque polymer particle emulsion from Rohm and Haas Co. (30% solids).
F. Hydrophobically modified maleic/olefin copolymer from Rohm and Haas Co. (25% solids).
G. Chemically modified polypropylene from Eastman Chemical Co. (40% solids).
H. Polyethylene wax from ChemCor (35% solids).
I. Antifoam emulsion from Wacker Silicones.
J. Fluorescein solution was prepared by dissolving 1 g of fluorescein free acid (Sigma Aldrich) in 50 ml of 0.2M KOH solution.

A section of laboratory hallway tiled with beige tiles was stripped as described previously and then coated with the above formulations at a wet coating rate of 2000 ft$^2$/gallon. A flat microfiber mop was used to apply all coatings and the application was done in a figure 8 pattern.

The solution color of Formulation 11-a was an opaque white, similar to a standard floor finish. It should be understood that many commercially available floor finish compositions have a generally milky white appearance when viewed in bulk. This milky white appearance is believed to be the result of the composition being in the form of an emulsion. As the composition is applied as a coating, the milky effect of the emulsion is less pronounced and the coating appears relatively clear and becomes even clearer as the coating composition dries. Upon coating Formulation 11-a, the applied film was clear and it was difficult to visually differentiate uncoated areas from coated areas, as well as thick from thin areas, of the beige substrate. After application, the composition was allowed to dry for at least 45 minutes, producing a whitening effect. It is believed that the whitening effect is a result of the presence of the opaque polymer particle emulsion (available under the name ROPAQUE™ Ultra Opacifier), and the whitening effect resulted as the coating dried. In addition, it has been observed that when the lightness inducing agent is an inorganic component such as TiO2, the whitening effect can be seen in the wet coating as the coating is applied to a floor.

The color of Formulation 11-b was a fluorescent yellow due to the inclusion of a small amount of fluorescein (0.02% by weight) in the formulation. During application of this formulation, it was very easy to differentiate coated areas from uncoated areas of the beige substrate because the coated areas were a bright yellow color. Moreover, those areas that had been coated with a slightly "thinner" layer of Formulation 11-b were not as yellow as surrounding areas. These thinner areas were intentionally left on the floor without redistributing the finish to achieve an even coating. The resulting coating was allowed to dry for at least 45 minutes. As the coating dried, the yellow color disappeared and the coating opacified, producing a whitening effect. Areas of the floor that had been coated with a thinner layer of floor finish showed less of a whitening effect.

**Example 12**

Formulations 11-a and 11-b were applied to sections of a beige vinyl composition tile floor in a local supermarket. The floor was stripped as described previously, using BLAST™ stripper (commercially available from Ecolab Inc.). The formulations were applied with a flat, microfiber mop at a wet coating rate of approximately 50 m$^2$/L. A figure 8 pattern was used to apply the finishes and the person applying the coating was instructed to apply the coating as evenly as possible. A single coat of Formulation 11-a was applied to a 8.5m$^2$ area of floor in an aisle of the supermarket. During the application of Formulation 11-a, it was not possible under the available lighting conditions to differentiate thin from thick areas of coating and, thus, the person applying the coating was not able to correct for imperfections. A single coat of Formulation 11-b was applied to an adjacent 8.5 m$^2$ floor area. The fluorescent yellow color of Formulation 11-b provided a clear visual indicator of the applied coating uniformity. The applicator was able to identify missed spots due to a lack of yellow color and correct for the error by applying more finish in that particular area. Moreover, areas having a very thin layer of floor finish were easily distinguished from areas with thicker layers. Again, the applicator was able to compensate for these imperfections by going back over the thin and thick areas with the mop to even out the finish. The above coated areas were allowed to dry for at least 60 minutes, at which point, a second coat of Formulation 11-a was applied to both sections as described previously. Again, the coated sections were allowed to dry, and two coats of MARKETSTAR finish were applied to both sections. After all coatings had dried, the floor sections were visually inspected. The first section, undercoated with Formulation 11-a appeared white and bright. Similarly, the second section, undercoated with Formulation 11-b appeared white and bright. The yellow color in this section had completely dissipated. The overall whiteness levels of the two sections were similar, but the section coated with Formulation 11-a did contain a few, isolated areas that were not as white as the surrounding areas. This was most likely the result of an uneven first coat application. Areas that were not as white as surrounding areas were assumed to have a thinner layer of floor finish. The thinner the coating, the less white the perceived appearance, leading to a "shadowed" appearance. Less white, or shadowed, areas were not found in the second section undercoated with Formulation 11-b because the person applying the finish was able to compensate for any unevenness in coating during application.

**Example 13 - Composition Properties**

A floor finish composition containing titanium dioxide with a total solids level of 20% was prepared using the ingredients set out in Table 25. Many of the components identified in Table 25 are previously described in the context of Example 10.

**Table 25**

|  | Formulation 13 |
|---|---|
| Water | 53.16 |
| KATHON™ CG/ICP | 0.05 |
| Zonyl FSJ[A] | 0.04 |
| DEE-FO™ PI 35[B] | 0.02 |
| ABEX 18S | 0.44 |
| Trimethyl pentanediol monoisobutyrate (Texanol) | 1.29 |
| Diethylene glycol monomethyl ether | 1.90 |
| Tributoxyethyl phosphate | 1.02 |
| Dibutyl Phthalate | 0.68 |
| RHOPLEX WL-91[C] | 10.85 |
| MORGLO2 (38%)[D] | 22.05 |
| Polyethylene 40[E] | 2.38 |
| Polyethylene Wax Emulsion 325G[F] | 0.64 |
| DuPont TIPURE R-746[G] | 5.48 |
| **TOTALS** | **100.00** |

A. Fluorosurfactant from DuPont (40% active).
B. Silicone defoamer from Ultra Additives (60% active).
C. Acrylic polymer emulsion from Rohm & Haas Co. (41% solids).
D. Acrylic styrene polymer emulsion from Omnova (38% solids).
E. Polyethylene wax dispersion from ChemCor (40% solids).
F. Polyethylene wax from ChemCor (35% solids).
G. TiO2 slurry from DuPont (76.5% solids).

Formulations 11-a and 13, two commercially available paints used in Example 5 (VALSPART™ 100% Acrylic White Interior Flat Latex and VALSPAR White Interior/Exterior Gloss Enamel Latex, both from Valspar Corp.), and a commercial primer coat (STEP ONE™ Drywall PVA Primer/Sealer from Conco Paints) are characterized in Table 26 according to their inherent solution properties. Also included in Table 26 are the properties of the two commercial paints and primer when diluted according to the manufacturers' recommended dilution rates. The recommended dilution rate of the two commercial paint samples is 8 oz water per gallon product and can be found on the product instructions located on the product container. The recommended dilution rate of the commercial primer was found on the product data sheet published by Conco Paints and represented 8 oz of water per gallon of product.

Table 26 lists the sample viscosities, measured as described in the section "Coating Solution Viscosity". The percent solids of Run Nos. 13-1 through 13-6 were analyzed using the moisture balance method as described in the section "Percent Solids." The percent solids of Formulations 11-a and 13 were calculated to be 20%. The specific gravity values were either taken from the product MSDS sheets, or were measured according to the section entitled "Specific Gravity." The binder:pigment ratio was experimentally determined for all products (with the exception of Formulation 11-a) as described in the section "Binder to Pigment Ratio". The power law index was determined according to the section "Coating Solution Rheology". An LV4 spindle and a 4 oz jar was used to measure the rheology run nos. 13-1 through 13-6 and the UL-Adapter was used to measure the rheological profile of run numbers 13-7 and 13-8.

**Table 26**

| Run No. | Product | Description | Viscosity (cps) | Solids | Specific Gravity | Blinder: Inorganic Pigment | Rheology (n) |
|---------|---------|-------------|-----------------|--------|------------------|----------------------------|--------------|
| 13-1 * | Valspar™ Gloss Enamel | High gloss paint | 7450 | 58 | 1.18 | 1.1 | 0.47 |
| 13-2 * | Diluted Valspar Gloss Enamel | 1 oz water to 16 oz Valspar gloss enamel | 4579 | 46[A] | 1.230 | 1.1 | 0.55 |
| 13-3 * | Valspar Flat Latex Paint | Flat paint | 4349 | 61 | 1.40 | 0.41 | 0.48 |
| 13-4 * | Diluted Valspar Flat Latex Paint | 1 oz water to 16 oz Valspar flat paint | 2809 | 53[A] | 1.373 | 0.40 | 048 |
| 13-5 * | STEPON™ Primer | PVA primer | 2589 | 43 | 1.31 | 0.32 | 0.601 |
| 13-6 * | Diluted STEPONET™ Primer | 1 oz waterto 16 oz STEPONE™ Primer | 1780 | 42[A] | 1.304 | 0.32 | 0.59 |
| 13-7 | Formulation 11-a | Flood finish with ROPAQUE | 4.1 | 20 | 1.023 | N.A.[B] | 0.96 |
| 13-8 | Formulation 13 | Floor finish with TiO2 | 4.8 | 20 | 1.037 | 2.5 | 0.97 |

A. Solids levels were measured on diluted products, and not calculated values.
B. N.A. = not applicable.
* Comparative example.

The data in Table 26 illustrates differences in the viscosity and solids content of Run Nos. 13-1 through 13-6 and Run Nos. 13-7 and 13-8. Floor finish compositions are typically applied using a string mop or flat mop pad (flocked, sponge, string or microfiber). As the solids level increases, the coating composition viscosity may increase and the coatings's ability to level may decrease. The mop drag or resistance to application of a coating composition also may increase significantly with increased solids.

Paints and primers appear to be formulated to provide a shear thinning effect (and to have a power law index (n) less than 0.9) for several reasons. For example, it is desirable for paints and primers to have a relatively high viscosity at rest to keep pigment dispersed in the composition, and to have a viscosity that is relatively low as shear is applied by, for example, brushing, rolling, or spraying the composition onto a surface such as a vertical wall. In addition, the lower viscosity after application of shear helps provide the paints or primers with a leveling effect. Paints and primers thus often include a viscosity modifier or rheology modifier to enhance their shear thinning characteristics, and to provide non-Newtonian shear thinning behavior.

**Example 14 - Coating Application Properties**

Table 27 lists various application properties of different compositions. The application methods, wet coating rate, wet coating thickness, dry time, and recoat time parameters for the commercially available products (Run Nos. 13-1; 13-3; and 13-5) were obtained from the application instructions on the product containers. With the exception of the application method for the commercial paints, the listed parameters for the diluted commercial products (Run Nos. 13-2; 13-4; and 13-6) appeared to be similar to those of the corresponding nondilute products. The application method for the two diluted Valspar paints was determined to be spray application as per the product instructions located on the product containers. The application method, wet coating rate, dry time, and recoat time for Run Nos. 11-a and 13 were comparable to those used for many conventional floor finishes. The wet and dry coating thicknesses were determined according to the section "Wet and Dry Coating Thickness." The percent solids values for the dry coating thickness calculations were taken from Table 26.

**Table 27**

| Run No. | Product | Application Method | Wet Coating Rate (ft$^2$/gallon) | Wet Coating Thickness (mils) | Dry Coating Thickness (mils) | Dry Time (tack free time) | Recoat Time (recommended) |
|---|---|---|---|---|---|---|---|
| 13-1 * | Valspar Gloss Enamel[1] | Brush, roller | 400 | 40 | 2.3 | 1 to 2 hours | Over-night |
| 13-2 * | Diluted Valspar Gloss Enamel[2] | Spray | 400 | 40 | 2.4 | 1 to 2 hours | Over-night |
| 13-3 * | Valspar Flat Latex Paint[1] | Brush, roller | 400 | 40 | 2.4 | 30 min | 4 hrs |
| 13-4 * | Dilated Valspar Flat Latex Paint[2] | Spray | 400 | 4.0 | 2.4 | 30 min | 4 hrs |
| 13-5 * | STEP-ONE Primer[3] | Brush, roller, spray | 250 to 350 | 4.6 to 6.4 | 2 to 2.8 | 30 to 60 min | 1hr or 4 hrs |
| 13-6 * | Diluted STEP-ONE Primer[4] | Brush, spray, roller | 250 to 350 | 4.6 to 6.4 | 2 to 2.8 | 30 to 60 min | 1hr or 4 hours |
| 13-7 | Formulation 11-a[5] | Mop or microfiber pad | 1500 to 2000 | 0.8 to 1.1 | 0.16 to 0.21 | 30 to 45 min | 45 to 60 min |
| 13-8 | Formulation 13[5] | Mop or microfiber pad | 1500 to 2000 | 0.8 to 1.1 | 0.16 to 0.21 | 30 to 45 min | 45 to 60 min |

1. As per Valspar instructions located on container.
2. With the exception of application method, the other listed diluted product properties were estimated to be similar to the listed nondiluted product properties.
3. As per instructions located on product container. There was a discrepancy in the recoat time listed for this product. The instructions on the product container listed the recoat time as 1 hour while the product data sheet listed the recoat time as 4 hours.
4. The listed diluted product properties were estimated to be similar to the listed nondiluted product properties.
5. The application method and other listed properties were comparable to those used for many conventional waterborne polyacrylic based floor finishes.
* Comparative example.

Formulations 11-a and 13 can be applied with a conventional string or flat mop, whereas Run Nos. 13-1 through 13-6 are intended to be brushed, rolled, or sprayed on the substrate. It is impractical to brush a floor finish coating onto a floor because of the large surface area which must be covered. Spraying a floor finish coating on a large area is generally not an acceptable practice in many environments such as facilities that are open to the public 24 hours a day (e.g., 24 hour grocery stores). Applying a floor finish coating with a roller may be a currently accepted practice for some specialty floor coatings. However, this method is not nearly as efficient as simply mop applying the coating and may also lead to surface defects commonly referred to as "orange peel" and cratering."

Run Nos. 13-1 through 13-6 are intended to be coated at a rate of 250 to 400 ft$^2$/gallon. These coating rates result in wet and dry coatings of 4 and 2 mils, respectively. Run Nos. 11-a and 13 are formulated to be applied at the coating rates of about 1500 to about 2000 ft$^2$/gallon. These rates result in wet and dry coating thicknesses less than about 1.2 and 0.25 mils, respectively. Those skilled in the art will appreciate that the disclosed lightened floor finish compositions may be applied to form much thicker wet and dry coatings if formulated to provide the desired lightening characteristics without undesirably hiding the underlying flooring substrate.

Often multiple layers of a floor finish will be applied in a several hour time span. This requires a relatively short turnaround time between coats. The recoat times of floor finish compositions as represented by Run Nos. 13-7 and 13-8 are 1 hour or less, allowing for multiple coats to be applied in a short time period. The paint examples represented by Run Nos. 13-1 through 13-4 have recoat times that sufficiently long (> 4 hours) that they would be difficult to employ in a conventional floor coating process.

## Example 15 - Dry Coating Properties

The lightness, hiding power, and leveling of the cured products listed in Tables 26 and 27, along with a sample of GEMSTAR LASER™ acrylic floor finish (20% nonvolatiles, commercially available from Ecolab Inc.) were analyzed and the results are shown in Table 28. For the purpose of this example, the various coatings were applied to achieve similar dry coating thicknesses. In actual practice, paints and primers are applied at much thicker coating thicknesses than floor finish compositions. Lightness, contrast ratio, and hiding power evaluations were carried out by applying one to three coats of each formulation on LENETA Form 5C Opacity and LENETA Gray Scale Form 24B charts (commercially available from the Leneta Company) using a #5, #7, or #10 drawdown bar (Paul N. Gardner, Co.). The number of coats and drawdown bar(s) were chosen so that the final dry coating thickness would be from 0.5 to 0.6 mils (0.013 mm to 0.015 mm). Table 28 lists the applied coating thickness for each run number. In the case when multiple coatings were applied to the same chart, each coat was allowed to dry for at least 30 minutes before recoating. The lightness values of the coatings over the black portion of the LENETA opacity charts were measured with a MINISCAN XE Plus as described in the section "Coating Color." The hiding power of the coatings on the LENETA gray scale charts was measured according to the section "Coating Hiding Power." The contrast ratios of the various coatings were measured and calculated according to the section "Coating Contrast Ratio." The leveling effect was determined by applying each formulation to a BYKO-Gardner Opacity Chart (Form AG-5304) with a #5 drawdown bar (0.5 wet mil). A single coat of each product was applied to the chart and the coatings were allowed to dry for at least 24 hours. After drying, the coatings were examined with a microscope and pictures were taken. A picture of a ruler at the same magnification was also taken. Using the ruler as a guide, a square box, 1 cm x 1 cm, was created and superimposed over the images of the various coatings. The approximate number of black lines present in the box for each image was recorded and is shown in the table below. This value gives an idea of how well the coating leveled. A value of 0 indicates that no ridges were present and that the coating leveled well. A value of 20 indicates that 20 ridges were present and the coating did not level.

**Table 28**

| Run No. | Product | Chart Coating Thickness (mils)[1] | Lightness Value (L) over Black | Hiding Power | L/ Hiding Power | Leveling on BYKO Opacity Chart, 0.5 mil wet coating thickness | CR$_{0.80}$ |
|---|---|---|---|---|---|---|---|
| 13-1* | Valspar Gloss Enamel | 0.58 | 81 | 4 | 20 | >20 | 069 |
| 13-2* | Diluted Valspar Gloss Enamel | 0.55 | 82 | 3 | 27 | 15 to 20 | 0.71 |
| 13-3* | Valspar Flat Latex Paint | 0.61 | 86 | 3 | 29 | 15 to 20 | 0.82 |

(continued)

| Run No. | Product | Chart Coating Thickness (mils)[1] | Lightness Value (L) over Black | Hiding Power | L/ Hiding Power | Leveling on BYKO Opacity Chart, 0.5 mil wet coating thickness | CR$_{0.80}$ |
|---|---|---|---|---|---|---|---|
| 13-4* | Diluted Valspar Flat Latex Paint | 0.53 | 84 | 3 | 28 | 15 to 20 | 0.74 |
| 13-5* | SIEPONE Primer | 0.60 | 85 | 3 | 28 | 15 to 20 | 0.78 |
| 13-6* | Diluted STEPONE Primer | 0.59 | 84 | 3 | 28 | 5 to 10 | 0.77 |
| 11-a | Form 11-a | 0.60 | 74 | 1 | 74 | 0 | 0.54 |
| 13 | Form 13 | 0.60 | 71 | 1 | 71 | 0 | 047 |
| 15* | GEMSTAR LASER Finish | 0.60 | 5 | 1 | 5 | 0 | -0.01 |
| 1. Applied at the same coating thicknesses and not at recommended application rates * Comparative example. | | | | | | | |

In general, lower contrast ratios indicate more translucent coatings which have the effect of lightening the substrate while not completely masking the underlying substrate surface. The higher the contrast ratio, the more opaque the coating. High contrast ratios indicate a masking effect on the substrate.

Table 28 shows various properties for the evaluated paints and primers (Run Nos. 13-1 through 13-6) and floor finish compositions (Run Nos. 11-a, 13, and 15). The evaluated paints and primers had lightness values in excess of 80 and hiding powers in excess of 3. Paints and primers typically are formulated to deliver enhanced color saturation with very high hiding. The ratio of the lightness value to hiding power for the evaluated paints and primers was less than 30. Conventional floor finishes such as the Run No. 15 finish typically are formulated to be clear or transparent, do not provide enhanced lightness or hiding power, and tend to have a very low lightness to hiding power ratio. The floor finish compositions of Run Nos. 11-a and 13 lightened the substrate while not masking the underlying pattern. The lightness values of Run Nos. 11-a and 13 when applied over the black portion of the opacity charts exceeded about 70, the hiding power over the Gray Scale charts was 1, and the ratio of lightness value to hiding power exceeded 70.

Differences in leveling power were observed using a 3000 ft$^2$/gal (0.5 wet mils) application rate. Such an application rate is not unusual for floor finishes which may in some formulations be applied at rates from about 250 ft$^2$/gallon to about 5000 ft$^2$/ gallon. The ability of a floor finish composition to level adequately at an intended application rate is desirable. If a coating does not level, mop lines and ridges may remain causing an unsightly or undesired appearance. Run Nos. 13-1 through 13-6 did not level adequately, whereas Run Nos. 11-a, 13, and 15 leveled well and were free of mop lines and ridges.

**Example 16 - Composition Properties**

A commercially available interior wood stain (MINWAX™ Water-Based Wood Stain, White Oak, from the Minwax Company), and a commercially available wood deck stain (CABOT Solid Color Decking Stain #1801, White Base, from Samuel Cabot Incorporated) are characterized in Table 29 according to their coating composition properties. The viscosities reported in Table 29 were measured as described in the section "Coating Solution Viscosity." The percent solids of Run Nos. 16-1 and 16-2 were analyzed using the moisture balance method as described in the section "Percent Solids." The percent solids of Run Nos. 16-3 and 16-4 were calculated to be 20%, and the specific gravity was measured according to the section "Specific Gravity." The specific gravity values of the commercial products were obtained from the product MSDS sheets. The binder:pigment ratio was experimentally determined for all products as described in the section "Binder to Pigment Ratio." The power law index values were determined according to the section "Coating Solution Rheology." An LV4 spindle and a 4 oz glass jar were used to measure the rheology profile of the CABOT Deck Stain. For the Minwax Wood Stain and Formulations 11-a and 13, the UL-Adapter was used for rheology measurements.

**Table 29**

| Run No. | Product | Description | Viscosity (cps) | % Solids | Specific Gravity | Binder: Pigment Ratio | Power Law Index (n) |
|---|---|---|---|---|---|---|---|
| 16-1 * | MINWAX Wood Stain-White Oak | Interior, water-based wood stain | 32.5 | 25 | 1.07 | 2.1 | 0.85 |
| 16-2 * | CABOT Deck Stain-white base | Exterior, 100% acrylic water-based, solid color deck stain | 3349 | 50 | 1.1 to 1.3 | 0.78 | 0.303 |
| 16-3 | Form. 11-a | Floor finish with ROPAQUE opacifier | 4.1 | 20 | 1.023 | N.A.[A] | 0.96 |
| 16-4 | Form. 13 | Floor Finish with $TiO_2$ | 4.8 | 20 | 1.037 | 2.5 | 0.97 |
| A. N.A. = not applicable. * Comparative example. | | | | | | | |

The Run No. 16-2 deck stain specific gravity is greater than 1.1 (indicative of significant pigment content and a product intended to hide an underlying substrate). Formulations 11-a and 13 (Run Nos. 16-3 and 16-4) have specific gravities less than 1.05. The deck stain binder:pigment ratio is less than one, indicating that there is more pigment than binder (by weight) in the formulation. Formulations 11-a and 13 contain lower pigment amounts and have higher binder:pigment ratios (greater than 2). The deck stain has a power law index **(n)** of 0.303, indicating that the formulation is shear thinning and, most likely, that rheology modifiers are present. The power law indices for Formulations 11-a and 13 are relatively Newtonian, at 0.96 and 0.97. Formulations 11-a and 13 behave in a more Newtonian manner than the deck stain and are neither shear thinning nor shear thickening, behavior consistent with the absence of rheology modifiers in their formulations.

**Example 17 - Application Properties**

Table 30 lists various application properties including application techniques, wet coating rate, dry time and recoat time, and the recommended use. Wet and dry coating thicknesses were determined according to the section "Wet and Dry Coating Thickness." The percent solids values for the dry coating thickness calculations were taken from Table 29. Properties and recommended uses for MINWAX Wood Stain and CABOT Deck Stain were obtained from product container instructions or product literature. The application method, wet coating rate, dry time, and recoat time for Formulations 11-a and 13 were comparable to those used for many conventional floor finishes.

Table 30

| Run No. | Product | Application Technique | Wet Coating Rate (ft²/gallon ) | Wet Coating Thickness (mils) | Dry Coasting Thickness (mills) | Dry time | Recoat Time | Recommended Use |
|---|---|---|---|---|---|---|---|---|
| 16-1 * | MINWAX Wood Stain- White Oak | Wipe on, wipe off | 400 | 4 | 1 | 3 hours | 2 hours | Not for floors |
| 16-2 * | CABOT Deck Stain- white base | Brush, roller, paint pad, or spray | 150 to 250 | 6.5 to 10.8 | 3 to 4 mils | 1 hour | 4 to 6 hours | Exterior only |
| 16-3 | Form 11-a | Mop or microfiber pad | 1500 to 2000 | 0.8 top 1.1 | 0 16 to 0.21 | 30 to 45 min. | 45 to 60 min. | interior floors |
| 16-4 | Form. 13 | Mop or microfiber pad | 1500 to 2000 | 0.8 to 1.1 | 0 16 to 0.21 | 30 to 45 min. | 45 to 60 min. | Interior floors |
| * Comparative example. | | | | | | | | |

The viscosity of CABOT deck stain is greater than 3000 cps, and is too high to be mop-applied to a floor. The MINWAX wood stain product is applied using a method typically employed for many stains in which the coating is first applied to a surface and then quickly wiped away. Such a process does not lend itself to coating large areas and coating a floor in such a manner would be impractical. The product instructions for MINWAX wood stain (available at http://www.minwax.com/products/woodstain/waterbased-direct.cfm) say that "Minwax® Water-Based Wood Stain is not recommended for use on floors."

Recoat times for MINWAX Wood Stain and CABOT Deck Stain are greater than 2 and 4 hours, respectively. Recoat times of two hours or longer may be impractical in many commercial floor coating applications because multiple hardened coatings may have to be applied to the floor in a single night. Formulations 11-a and 13 have shorter recoat times, and are especially well-suited for commercial floor coating applications.

**Example 18 - Dry Coating Properties**

The lightness, hiding power, contrast ratio, leveling on vinyl tiles, tack-free time, glass transition curve shape, and glass transition temperature of the cured products listed in Tables 29 and 30, along with a sample of GEMSTAR LASER™ acrylic floor finish (20% nonvolatiles, commercially available from Ecolab, Inc.) were analyzed and the results are shown in Table 32. For the purpose of this example, coatings were applied at similar dry coating thicknesses of about 0.5 to 0.6 mils. In practical applications, the Minwax Wood Stain and the CABOT Deck Stain are designed to be applied at much thicker coating thicknesses. However, for comparative purposes of the lightness/hiding power of the cured coatings, similar coating thicknesses were used.

Lightness, contrast ratio, and hiding power evaluations were carried out by applying up to three coats of each formulation on LENETA Form 5C Opacity and LENETA Gray Scale Form 24B charts (commercially available from the Leneta Company) with a #10 drawdown bar (Paul N. Gardner, Co.). The number of coats was varied such that the final dry coating thickness would be from 0.5 to 0.6 mils (0.013 mm to 0.015 mm). Table 32 lists the applied chart coating thicknesses. In the case where multiple coatings were applied to the same chart, each coat was allowed to dry for at least 30 minutes before recoating. The lightness values of the coatings over the black portion of the LENETA opacity charts were measured with a MINISCAN XE Plus color spectrophotometer as described in the section "Coating Color." The hiding power of the coatings on the LENETA gray scale charts was measured according to the section "Coating Hiding Power." The ratio of lightness to hiding power was calculated by dividing the lightness value by the hiding power. The contrast ratios of the various coatings were measured and calculated according to the section "Coating Contrast Ratio." Leveling on a vinyl substrate was determined using the above-mentioned X Test. Vinyl 12" x 12" Forum SO-22 black tiles were wiped with mineral spirits and soapy water to remove any factory applied finishes. The tiles were rinsed well with water and allowed to dry. After drying, each tile was divided into fourths (6" X 6" squares) and to each square, 0.5 to 0.6g of the compositions listed in Table 32 were applied using a 1" x 2" piece of microfiber pad. After the coating was evenly applied over the 6" x 6" square, the microfiber pad was used to draw an "X" across the entire coating area. The coating was then allowed to dry and the visible presence of the "X" was rated according to Table 31.

**Table 31**

| Rating | Description |
|---|---|
| Excellent | No "X" detectable |
| Very Good | Faint outline of the "X" but no ridges are in the film |
| Good | Plain outline of the "X", no ridges detectable |
| Fair | Plain outline of the "X" and ridges detectable. |
| Poor | Outline of the "X", ridges, and substantial dewetting or ridging over the entire coated area. |

The "tack-free" times were determined by the following method. Two black vinyl composition tiles were prepared as described in the section "Tile Preparation." Each tile was ruled into thirds (4" x 12" sections) and 0.8 to 0.9g of the solution was applied to each section using a microfiber pad. At periodic time intervals from the time of application, the coatings were evaluated by placing a small (~1 cm square) piece of cotton on the coating surface. A 2 kg weight was placed over the cotton for 30 seconds, after which the weight was removed and the cotton was lightly brushed away from the surface. The amount of cotton that adhered to the surface was visually determined. The "tackier" the coating, the more cotton adhered to the surface. A coating that was "tack-free" had no residual cotton on the surface. The test was initiated 30 minutes after coating the substrate and was terminated two hours later, whether or not the coating was "tack-free."

The differential scanning calorimetry (DSC) profiles of the two commercial stains were acquired. For DSC, 6" x 8" glass plates were used as the substrate. Each plate was cleaned well with water and isopropyl alcohol and allowed to dry. The plates were divided in half (4" x 6" sections) and ~0.3 g of the coating formulations listed in Table 32 were applied to each section with a microfiber pad. The coatings were allowed to dry for 45 to 55 minutes. Once dry, the coating was scraped off the glass using a razor, the scrapings were immediately loaded into aluminum, non-hermetic sample DSC pans, and the pans were sealed. The loaded sample mass ranged from 14 mg to 28 mg. A sealed, empty pan was used as the reference for the DSC scan. The samples were run on a Q100 DSC (TA Instruments), beginning at -50°C and ramping to 150°C, at a rate of 10°C/min. The glass transition temperature (Tg) of each coating was determined by the computer (TA Universal Analysis Software) as the inflection point in the DSC curve. The measured glass transition temperatures are listed and a qualitative description of the curve shape at the glass transition temperature was noted in Table 32. The letter S denotes a sharp transition. A sharp transition represents a coating in a softer (more rubbery) state at lower temperature. This generally represents a tackier surface or a surface that may more easily attract dirt. The letter B denotes a broad transition that indicates a higher temperature to reach a soft (rubbery) state.

Table 32

| Run No. | Product | Chart Coating Thickness (mils)[1] | Lightness Value (L) over Black | Hiding Power | L/Hiding Power | Leveling on Vinyl | Tack Free Time (dry walkable) | DSC Curve Shape | Tg (°C) [2] | CR$_{0.80}$ |
|---|---|---|---|---|---|---|---|---|---|---|
| 16-1 * | MINWAX Wood Strain-White Oak | 0.50 | 67 | 1 | 67 | Poor | >2 hrs[3] | S | -2 | 0.42 |
| 16-2 * | CABOT Deck Stain-white base | 0.50 | 80 | 3 | 27 | Poor | < 30 min | S | 7 | 065 |
| 16-3 | Form. No. 11-a | 0.60 | 74 | 1 | 74 | Good | < 30 min | B | 57 | 0.54 |
| 16-4 | Form. No 13 | 0.60 | 71 | 1 | 71 | Very good | < 30 min. | B | 20 | 0.47 |
| 16-5 * | GEMSTAR LASER Finish | 060 | 5 | 1 | 5 | Very good | 30 to 45 min. | B | 23 | -0.01 |

1. Applied at similar coating thickness and not at recommended application rate.
2. Coating cured 1 hour.
3. Test terminated at 2 hours.
* Comparative example.

The ratio of lightness value to hiding power (L/HP) for Formulations 11-a and 13 was greater than 70. The L/HP ratio indicates how well a coating lightens a surface while simultaneously allowing the substrate to be seen (*viz.,* remain translucent). A conventional floor finish such as GEMSTAR LASER finish is not designed to impart lightness to a substrate and has a very low lightness value. The Deck Stain was designed to whiten and hide the underlying substrate, and has a high lightness value and hiding power, and a low L/HP ratio. Formulations 11-a and 13 lighten the substrate while remaining translucent. These formulations have high lightness values in comparison to the conventional floor finish (GEMSTAR LASER and low hiding power in comparison to the Deck Stain.

Table 32 shows leveling results for coatings on vinyl. The results show that the GEMSTAR LASER finish and Formulation Nos. 11-a and 13 exhibited good to very good leveling on vinyl. The two wood stain coatings did not level well on vinyl.

Table 32 also shows tack free times. A typical floor coating process may involve application of multiple (e.g., 2 or more, 3 or more, or 4 or more) layers of finish in a single night. This requires that the coating dry quickly so that it can be recoated. Not only must the coating film be "dry to the touch" but it must also be "tack-free." If the coating is still tacky it may pick up dirt or footprints when the applicator walks on it to apply the next coat. After two hours, Minwax Wood Stain remained tacky, and thus would be difficult to use for multiple coat floor coating processes.

Wood stains are sometimes formulated with oils or polymer resins designed to penetrate the substrate, and may have relatively low glass transition temperature values (e.g., below about 10° C) and may remain tacky at room temperature. Floor finishes are typically formulated primarily from higher molecular weight polymer resins (e.g., with number average molecular weights of 1,000,000 or more) and may have glass transition temperature values near to or greater than room temperature (e. g., more than 10° C, more than 15° C or more than 20° C). Such higher glass transition temperature values may allow quicker recoat times and provide reduced dirt pickup during the coating lifetime. Formulations 11-a and 13 have glass transition temperature values greater than 10°C.

**Example 19 - Soluble Salts**

Formulations were prepared comparing PADLOCK™ floor finish without sodium citrate dihydrate (Formulation No. 19-1) and with sodium citrate dihydrate (Formulation No. 19-2). After salt addition, Formulation 19-2 was mixed well with a magnetic stirrer. Table 33 lists the various formulations along with the specific salt added and the level of the salt in the dried coating.

**Table 33**

| Formulation No. | Finish | Grams of Finish | Salt | Grams of salt (100% active) | Level (% solid salt to solid coating) |
|---|---|---|---|---|---|
| 19-1* | PADLOCK Finish | 15 | None | 0 | 0 |
| 19-2 | PADLOCK Finish | 15 | Sodium Citrate Dihydrate | 2.5 | 51.0 |
| * Comparative example. | | | | | |

The formulations in Table 33 were coated on white vinyl composition tiles prepared according to the section "Tile Preparation." The coatings were applied with a microfiber pad at 1050 ft$^2$/gallon. A single coat of each formulation was applied to the substrate and allowed to dry overnight. The coating color measurements were recorded using a Hunter MINISCAN XE as described in the section "Coating Color." Table 34 lists the applied wet coating rate as well as the lightness (L*) and whiteness index (WI) values for the dried coatings.

**Table 34**

| Formulation No. | Wet Ctg. Rate (ft$^2$/gallon) | L* | WI |
|---|---|---|---|
| 19-1 | 1050 | 86.42 | 43.33 |
| 19-2 | 1050 | 87.16 | 145.88 |

Table 34 illustrates that the addition of sodium citrate dihydrate to PADLOCK™ floor finish (Formulation 19-5) results in an increase of 2.55 points in the coating whiteness index over the control PADLOCK™ (Formulation 19-1) coating.

**Example 20 - Organic Titanates**

A 40% solids coating solution based on the polyol BAYHYDROL XP 2542 (commercially available from Bayer) was prepared and the formula is given in Table 35. The formulation was prepared by adding the materials in the order listed and mixing well with an overhead mixer. After thorough mixing, the coating solution was allowed to sit for several days.

### Table 35: Formulation 20-1

| Raw Material | Weight % |
|---|---|
| BAYHYDROL XP 2542[A] | 79.3 |
| DI Water | 20.0 |
| Tego Foamer 822[B] | 0.56 |
| BYK 348[C] | 0.30 |
| Total | 100 |
| A. Polyol commercially available from Bayer Corp., 50% solids. B. Silicone defoamer, commercially available from Tego, 27% solids. C. Surfactant, wetting aid commercially available from BYK, 52% solids. | |

Several floor finish formulations containing organic titanates or organic zirconates were prepared by adding none, TYZOR LA (water-based lactic acid titanium chelate ammonium salt, 8% titanium, commercially available from DuPont), TYZOR 217 (aqueous sodium zirconium lactate, 5.4% zirconium, commercially available from DuPont), TYZOR 212 (zirconium chelate, 12% $ZrO_2$, commercially available from DuPont), or TYZOR TEAZ (organic zirconium chelate with triethanolamine as chelating agent, 17.8% $ZrO_2$) to the formulation given in Table 35 (Formulation 20-1) or to Rivet™ floor finish (acrylic floor finish, 16% solids, commercially available from Ecolab Inc.). The amounts of organic titanate added to each coating solution are listed in Table 36.

### Table 36

| Formulation No. | Finish | g Finish | Organic Titanate | g organic titanate |
|---|---|---|---|---|
| 20-2* | Form. 20-1 | 5.0 | None | 0 |
| 20-3 | Form. 20-1 | 5.0 | TYZOR LA | 0.15 |
| 20-4 | Form. 20-1 | 5.0 | TYZOR 217 | 0.15 |
| 20-5 | Form. 20-1 | 5.0 | TYZOR 212 | 0.15 |
| 20-6 | Form. 20-1 | 5.0 | TYZOR TEAZ | 0.15 |
| 20-7 | Rivet | 5.0 | TYZOR LA | 0.40 |
| 20-8 | Form. 20-1 | 5.0 | TYZOR LA | 0.40 |
| * Comparative example. | | | | |

0.5 to 1 g of the formulations listed in Table 36 were applied to 1.25 in. x 2.5 in. areas of precleaned glass slides using the end of a transfer pipette to distribute the coating over the surface. The coatings were allowed to dry for 5 hours and then were visually evaluated. The visual appearances of the dried coatings are listed in Table 37.

### Table 37

| Formulation | No. of Coats | Visual Appearance |
|---|---|---|
| 20-2 | 1 | Clear |
| 20-2 | 2 | White |
| 20-3 | 1 | Slightly white |
| 20-4 | 1 | Very light white haze |

(continued)

| Formulation | No. of Coats | Visual Appearance |
|---|---|---|
| 20-5 | 1 | Clear |
| 20-6 | 1 | Clear |
| 20-7 | 1 | Very slight white |
| 20-8 | 1 | White |

Table 37 illustrates that the addition of the TYZOR LA and TYZOR 217 organic titanate materials to the polyol based formulation 20-1 provides a whitening effect to the substrate on which it is coated. Furthermore, adding the TYZOR LA material to the Rivet™ floor finish provides a similar whitening effect.

Various modifications and alterations of this invention will be apparent to those skilled in the art without departing from the scope and spirit of this invention. It should be understood that this invention is not limited to the illustrative embodiments set forth above.

## Claims

1. A floor finish composition comprising a film former, 1 wt. % to 30 wt. % of a lightness inducing agent, and a diluent, wherein the lightness inducing agent is present in an amount sufficient for the composition to provide, when evaluated using a hardened finish having a thickness of about 0.005 mm on a LENETA Form 5C Opacity chart and a MINISCAN XE Plus color spectrophotometer having 45° illumination and a 0° viewing geometry:

    a) an increased lightness value L* on the black portion of the chart and
    b) a contrast ratio ($CR_{0.80}$) less than about 0.7 when evaluated on the black and white portions of the chart.

2. A floor finish composition according to claim 1, wherein the film former comprises at least one of polyacrylate polymer, polyacrylate polymer forming components, polyacrylic polymer, polyacrylic polymer forming components, or mixtures thereof.

3. A floor finish composition according to claim 2, wherein the film former comprises a metal containing film former.

4. A floor finish composition according to claim 2, wherein the film former comprises a metal-free film former.

5. A floor finish composition according to claim 1, wherein the film former comprises at least one of polyurethane polymer, epoxy polymer, aziridine crosslinkable polymer, carbodiimide crosslinkable polymer, wax emulsion, chloropolymer, fluoropolymer, polyvinyl alcohol polymer, polyvinylpyrrolidone polymer, polyimide polymer, polyamide polymer, polycarbonate polymer, cellulose polymer, radiation cured polymer, or mixture thereof.

6. A floor finish composition according to claim 1, wherein the diluent is present in an amount less than about 5 wt.% diluent.

7. A floor finish composition according to claim 1, wherein the composition comprises about 30 wt.% to about 97 wt.% of the diluent.

8. A floor finish composition according to claim 1, wherein the composition comprises about 40 wt.% to about 90 wt.% of the diluent.

9. A floor finish composition according to claim 1, wherein the composition comprises about 70 wt.% to about 85 wt.% of the diluent.

10. A floor finish composition according to claim 1, wherein at least a portion of the diluent comprises an organic solvent.

11. A floor finish composition according to claim 1, wherein the composition comprises about 1 wt.% to about 20 wt.% of the lightness inducing agent.

12. A floor finish composition according to claim 1, wherein the composition comprises about 3 wt.% to about 15 wt.% of the lightness inducing agent.

13. A floor finish composition according to claim 1, wherein the lightness inducing agent comprises a polymer system.

14. A floor finish composition according to claim 13, wherein the polymer system comprises at least one of a core-shell polymer system or a sheathed polymer system.

15. A floor finish composition according to claim 1, wherein the lightness inducing agent comprises a "pigment white" according to the Society of Dyers and Colourists *Colour Index.*

16. A floor finish composition according to claim 1, wherein the lightness inducing agent comprises a diluent soluble lightness inducing agent having a level of solubility in the diluent of at least 10 g/L.

17. A floor finish composition according to claim 1, wherein the lightness inducing agent comprises an organometallic compound that reacts with hydroxyl or carboxyl groups on the film former.

18. A floor finish composition according to claim 17, wherein the organometallic compound comprises at least one of organic titanates, organic zirconates, or mixtures of organic titanates and organic zirconates.

19. A floor finish composition according to claim 1, wherein the lightness inducing agent comprises titanium dioxide.

20. A floor finish composition according to claim 1, wherein the lightness inducing agent comprises a combination of an inorganic pigment and a polymer system.

21. A floor finish composition according to claim 1, further comprising about 0.001 wt.% to about 5 wt.% of a visible indicator.

22. A floor finish composition according to claim 22, wherein the indicator comprises at least one of acid/base indicators, fluorescent indicators, redox indicators, metallochromic indicators, or photon sensitive dyes.

23. A floor finish composition according to claim 1, further comprising fluorescein or fluorescein derivative.

24. A floor finish composition according to claim 1, wherein the composition further comprises about 0.005 wt.% to about 5 wt.% dispersing agent.

25. A floor finish composition according to claim 1, wherein the composition further comprises about 0.1 wt.% to about 10 wt.% plasticizer.

26. A floor finish composition according to claim 1, wherein the composition has a solids level of about 3 wt.% to about 50 wt.%.

27. A floor finish composition according to claim 1, wherein the composition has a solids level of about 5 wt.% to about 40 wt.%.

28. A floor finish composition according to claim 1, wherein the composition has a solids level of about 8 wt.% to about 30 wt.%.

29. A floor finish composition according to claim 1, wherein the composition provides a tack-free time of less than about 2 hours when applied to a LENETA Form 5C Opacity chart using a No. 20 drawdown bar (from Paul N. Gardner Co.).

30. A floor finish composition according to claim 1, wherein the composition provides a tack-free time of less than about 1.5 hours when applied to a LENETA Form 5C Opacity chart using a No. 20 drawdown bar (from Paul N. Gardner Co.).

31. A floor finish composition according to claim 1, wherein the composition provides a tack-free time of less than about 1 hour when applied to a LENETA Form 5C Opacity chart using a No. 20 drawdown bar (from Paul N. Gardner Co.).

32. A floor finish composition according to claim 1, wherein the floor finish composition has a viscosity of less than about 100 cps.

33. A floor finish composition according to claim 1, wherein the floor finish composition has a viscosity of less than about 50 cps.

34. A floor finish composition according to claim 1, wherein the composition provides the contrast ratio ($CR_{0.80}$) of about 0.1 to about 0.6.

35. A floor finish composition according to claim 1, wherein the lightness value L* is greater than about 10.

36. A floor finish composition according to claim 1, wherein the lightness value L* is greater than about 20.

37. A floor finish composition according to claim 1, wherein the lightness inducing agent is provided in the composition in an amount sufficient to provide a hardened finish having a thickness of about 0.005 mm on a black portion of a LENETA Form 5C Opacity chart having increased whiteness index WI measured using a MINISCAN XE Plus color spectrophotometer.

38. A floor finish composition according to claim 37, wherein the whiteness index is at least about 5.

39. A floor finish composition according to claim 37, wherein the whiteness index is at least about 10.

40. A floor finish composition according to claim 1, wherein the composition exhibits a lightness value L*/hiding power ratio of greater than about 35, wherein the lightness value L* is determined based upon a dry coating of the composition having a thickness of about 0.015 mm on a LENETA Form 5C Opacity chart and using a MINISCAN XE Plus color spectrophotometer, and the hiding power is determined based upon a dry coating of the composition having a thickness of about 0.015 mm on a LENETA Form 24B Gray Scale chart.

41. A laminate comprising:

    a) a flooring substrate; and
    b) a lightened dry coating layer provided over the flooring substrate;

    wherein the lightened dry coating layer comprises a result of applying a floor finish composition according to claims 1 to 40.

42. A laminate according to claim 41, wherein the flooring substrate comprises at least one of vinyl sheet flooring, linoleum, rubber sheeting, vinyl composite tile, rubber tile, cork, synthetic sports floor, stone, marble, wood, ceramic tile, grout, terrazzo or dry shake floor, or vinyl asbestos tile.

43. A laminate according to claim 41, further comprising a sealing layer between the flooring substrate and the lightened dry coating layer.

44. A laminate according to claim 43, further comprising an overcoat layer provided over the lightened dry coating layer.

45. A laminate according to claim 44, wherein the overcoat layer does not include a lightness inducing agent.

46. A laminate according to claim 41, wherein the lightened dry coating layer is provided as part of a sealing layer.

47. A laminate according to claim 41, further comprising a plurality of lightened dry coating layers provided over the flooring substrate.

48. A laminate according to claim 41, further comprising an undercoat layer provided between the flooring substrate and the lightened dry coating layer.

49. A laminate according to claim 41, wherein the lightened dry coating layer comprises at least one of acid/base indicators, fluorescent indicators, redox indicators, metallochromic indicators, or photon sensitive dyes.

50. A laminate according to claim 41, wherein the lightened dry coating comprises a fluorescein or a fluorescein derivative.

**51.** A method for treating a floor, the method comprising steps of:

a) stripping a finish from a flooring substrate to provide a stripped flooring substrate; and
b) applying a floor finish composition according to claims 1 to 40 over the stripped flooring substrate.

**52.** A method for treating a floor, the method comprising steps of:

a) cleaning a finish on a flooring substrate to provide a cleaned finish; and
b) applying a floor finish composition according to claims 1 to 40 over the cleaned finish.

**53.** A method according to claims 51 or 52, wherein the step of applying a floor finish composition comprises applying the floor finish composition with a mop.

**54.** A method according to claim 53, wherein the mop comprises a flat mop or a string mop when applying the floor finish composition over the cleaned finish, or a string mop or a microfiber mop when applying the floor finish composition over the stripped flooring substrate.

**55.** A method according to claims 51 or 52, wherein the step of applying a floor finish composition over a cleaned finish or over a stripped flooring substrate comprises applying the floor finish composition at a rate of about 250 ft$^2$/gal to about 5,000 ft$^2$/gal.

**56.** A method according to claims 51 or 52, wherein the step of applying a floor finish composition over a cleaned finish or over a stripped flooring substrate comprises applying the floor finish composition at a rate of about 500 ft$^2$/gal to about 3,000 ft$^2$/gal.

**57.** A method according to claims 51 or 52, wherein the step of applying a floor finish composition over a cleaned finish or over a stripped flooring substrate comprises applying the floor finish composition at a rate of about 300 ft$^2$/gal to about 800 ft$^2$/gal.

**58.** A method according to claims 51 or 52, further comprising a step of:

(a) allowing the floor finish composition to dry to form a dried coating; and
(b) applying a floor finish composition over the dried coating.

**59.** A method according to claim 58, wherein the floor finish composition applied over the dried coating comprises a lightness inducing agent.

**60.** A method according to claim 58, wherein the floor finish composition applied over the dried coating does not include a lightness inducing agent.

**61.** A method according to claims 51 or 52, wherein the floor finish composition provides a tack-free time of less than about 2 hours.

**62.** A kit comprising:

(a) a floor finish composition according to claims 1 to 40
and
(b) at least one of a mop, an applicator head, a masking material, safety equipment, container opener, a backpack for holding the floor finish composition, instructions for using the floor finish composition, or mixing tools.

**63.** A kit comprising film former provided in a first container, lightness inducing agent provided in a second container, and diluent provided in the first, second or both containers, together with instructions for mixing part or all of the contents of the first and second containers at an intended use site to provide a lightened floor finish composition according to claims 1 to 40.

**64.** A kit according to claim 63, further comprising at least one of a mop, an applicator head, a masking material, safety equipment, container opener, backpack for holding the floor finish composition, instructions for using the floor finish composition, or mixing tools.

**Patentansprüche**

1. Bodenlackzusammensetzung, umfassend einen Filmbildner, 1 Gew.-% bis 30 Gew.-% eines Helligkeit-induzierenden Mittels, und ein Verdünnungsmittel, wobei das Helligkeit-induzierende Mittel in einer Menge vorhanden ist, die für die Zusammensetzung ausreichend ist, um, wenn sie unter Verwendung einer gehärteten Oberfläche mit einer Dicke von etwa 0,005 mm auf einem LENETA Form 5C Deckkraft-Diagramm und einem MINISCAN XE Plus Farbspektrophotometer mit 45° Beleuchtung und einer 0° Betrachtungsgeometrie ausgewertet wird, bereitzustellen:

   a) einen erhöhten Helligkeitswert L* auf dem schwarzen Bereich des Diagramms und
   b) ein Kontrastverhältnis ($CR_{0,80}$) von weniger als etwa 0,7, wenn es auf den Schwarz-Weiß-Bereichen des Diagramms ausgewertet wird.

2. Bodenlackzusammensetzung nach Anspruch 1, wobei der Filmbildner mindestens eines von Polyacrylatpolymer, Polyacrylatpolymer bildende Komponenten, Polyacrylpolymer, Polyacrylpolymer bildende Komponenten, oder Gemischen davon umfasst.

3. Bodenlackzusammensetzung nach Anspruch 2, wobei der Filmbildner einen Metall enthaltenden Filmbildner umfasst.

4. Bodenlackzusammensetzung nach Anspruch 2, wobei der Filmbildner einen metallfreien Filmbildner umfasst.

5. Bodenlackzusammensetzung nach Anspruch 1, wobei der Filmbildner mindestens eines von Polyurethanpolymer, Epoxidpolymer, Aziridin quervernetzbares Polymer, Carbodilmid quervernetzbares Polymer, Wachsemulsion, Chlorpolymer, Fluorpolymer, Polyvinylalkoholpolymer, Polyvinylpyrrolidonpolymer, Polyimidpolymer, Polyamidpolymer, Polycarbonatpolymer, Cellulosepolymer, strahlungsgehärtetes Polymer, oder ein Gemisch davon umfasst.

6. Bodenlackzusammensetzung nach Anspruch 1, wobei das Verdünnungsmittel in einer Menge von weniger als etwa 5 Gew.-% Verdünnungsmittel vorliegt.

7. Bodenlackzusammensetzung nach Anspruch 1, wobei die Zusammensetzung etwa 30 Gew.-% bis etwa 97 Gew.-% des Verdünnungsmittels umfasst.

8. Bodenlackzusammensetzung nach Anspruch 1, wobei die Zusammensetzung etwa 40 Gew.-% bis etwa 90 Gew.-% des Verdünnungsmittels umfasst.

9. Bodenlackzusammensetzung nach Anspruch 1, wobei die Zusammensetzung etwa 70 Gew.-% bis etwa 85 Gew.-% des Verdünnungsmittels umfasst.

10. Bodenlackzusammensetzung nach Anspruch 1, wobei mindestens ein Teil des Verdünnungsmittels ein organisches Lösungsmittel umfasst.

11. Bodenlackzusammensetzung nach Anspruch 1, wobei die Zusammensetzung etwa 1 Gew.-% bis etwa 20 Gew.-% des Helligkeit-induzierenden Mittels umfasst.

12. Bodenlackzusammensetzung nach Anspruch 1, wobei die Zusammensetzung etwa 3 Gew.-% bis etwa 15 Gew.-% des Helligkeit-induzierenden Mittels umfasst.

13. Bodenlackzusammensetzung nach Anspruch 1, wobei das Helligkeit-induzierende Mittel ein Polymersystem umfasst.

14. Bodenlackzusammensetzung nach Anspruch 13, wobei das Polymersystem mindestens eines von einem Kern-Hülle-Polymersystem oder einem umhüllten Polymersystem umfasst.

15. Bodenlackzusammensetzung nach Anspruch 1, wobei das Helligkeit-induzierende Mittel ein "Pigmentweiß" gemäß des Society of Dyers and Colourists *Color Index* umfasst.

16. Bodenlackzusammensetzung nach Anspruch 1, wobei das Helligkeit-induzierende Mittel ein Verdünnungsmittellösliches Helligkeit-induzierendes Mittel mit einem Löslichkeitsniveau im Verdünnungsmittel von mindestens 10 g/L umfasst.

17. Bodenlackzusammensetzung nach Anspruch 1, wobei das Helligkeit-induzierende Mittel eine organometallische Verbindung umfasst, die mit Hydroxyl-oder Carboxylgruppen auf den Filmbildner reagiert.

18. Bodenlackzusammensetzung nach Anspruch 17, wobei die organometallische Verbindung mindestens eines von organischen Titanaten, organischen Zirkonaten, oder Gemischen von organischen Titanaten und organischen Zirkonaten umfasst.

19. Bodenlackzusammensetzung nach Anspruch 1, wobei das Helligkeit-induzierende Mittel Titandioxid umfasst.

20. Bodenlackzusammensetzung nach Anspruch 1, wobei das Helligkeit-induzierende Mittel eine Kombination aus einem anorganischen Pigment und einem Polymersystem umfasst.

21. Bodenlackzusammensetzung nach Anspruch 1, ferner umfassend etwa 0,001 Gew.-% bis etwa 5 Gew.-% eines sichtbaren Indikators.

22. Bodenlackzusammensetzung nach Anspruch 22, wobei der Indikator mindestens eines von Säure/Base-Indikatoren, Fluoreszenzindikatoren, Redoxindikatoren, metallochrome Indikatoren oder Photonen-empfindliche Farbstoffe umfasst.

23. Bodenlackzusammensetzung nach Anspruch 1, ferner umfassend Fluorescein oder Fluoresceinderivat.

24. Bodenlackzusammensetzung nach Anspruch 1, wobei die Zusammensetzung ferner etwa 0,005 Gew.-% bis etwa 5 Gew.-% Dispergiermittel umfasst.

25. Bodenlackzusammensetzung nach Anspruch 1, wobei die Zusammensetzung ferner etwa 0,1 Gew.-% bis etwa 10 Gew.-% Weichmacher enthält.

26. Bodenlackzusammensetzung nach Anspruch 1, wobei die Zusammensetzung einen Feststoffgehalt von etwa 3 Gew.-% bis etwa 50 Gew.-% aufweist.

27. Bodenlackzusammensetzung nach Anspruch 1, wobei die Zusammensetzung einen Feststoffgehalt von etwa 5 Gew.-% bis etwa 40 Gew,-% aufweist.

28. Bodeniackzusammensetzung nach Anspruch 1, wobei die Zusammensetzung einen Feststoffgehalt von etwa 8 Gew.-% bis etwa 30 Gew.-% aufweist.

29. Bodenlackzusammensetzung nach Anspruch 1, wobei die Zusammensetzung eine klebfreie Zeit von weniger als etwa 2 Stunden bereitstellt, wenn sie auf ein LENETA Form 5C Deckkraft-Diagramm unter Verwendung einer Abzugsstange Nr. 20 (von Paul N. Gardner Co.) aufgetragen wird.

30. Bodenlackzusammensetzung nach Anspruch 1, wobei die Zusammensetzung ein klebfreie Zeit von weniger als etwa 1,5 Stunden bereitstellt, wenn sie auf ein LENETA Form 5C Deckkraft-Diagramm unter Verwendung einer Abzugsstange Nr. 20 (von Paul N, Gardner Co.) aufgetragen wird.

31. Bodenlackzusammensetzung nach Anspruch 1, wobei die Zusammensetzung eine klebfreie Zeit von weniger als etwa 1 Stunde bereitstellt, wenn sie auf ein LENETA Form 5C Deckkraft-Diagramm unter Verwendung einer Abzugsstange Nr. 20 (von Paul N. Gardner Co.) aufgetragen wird.

32. Bodenlackzusammensetzung nach Anspruch 1, wobei die Bodenlackzusammensetzung eine Viskosität von weniger als etwa 100 cps aufweist.

33. Bodenlackzusammensetzung nach Anspruch 1, wobei die Bodenlackzusammensetzung eine Viskosität von weniger als etwa 50 cps aufweist.

34. Bodenlackzusammensetzung nach Anspruch 1, wobei die Zusammensetzung das Kontrastverhältnis ($CR_{0,80}$) von etwa 0,1 bis etwa 0,6 bereitstellt.

35. Bodenlackzusammensetzung nach Anspruch 1, wobei der Helligkeitswert L* größer als etwa 10 ist.

36. Bodenlackzusammensetzung nach Anspruch 1, wobei der Helligkeitswert L* größer als etwa 20 ist.

37. Bodenlackzusammensetzung nach Anspruch 1, wobei das Helligkeit-induzierende Mittel in der Zusammensetzung in einer ausreichenden Menge bereitgestellt wird, um einen gehärteten Lack mit einer Dicke von etwa 0,005 mm auf einem schwarzen Bereich eines LENETA Form 5C Deckkraft-Diagramms mit erhöhtem Weißgradindex WI bereitzustellen, gemessen mit einem MINISCAN XE Plus Farbspektrophotometer.

38. Bodenlackzusammensetzung nach Anspruch 37, wobei der Weißgradindex mindestens ungefähr 5 beträgt.

39. Bodenlackzusammensetzung nach Anspruch 37, wobei der Weißgradindex mindestens ungefähr 10 beträgt.

40. Bodenlackzusammensetzung nach Anspruch 1, wobei die Zusammensetzung einen Helligkeitswert L*/Deckkraftverhältnis von größer als etwa 35 aufzeigt, wobei der Helligkeitswert L* auf der Grundlage einer Trockenbeschichtung der Zusammensetzung mit einer Dicke von Etwa 0,015 mm auf einem LENETA Form 5C Deckkraft-Diagramm und unter Verwendung eines MINISCAN XE Plus Farbspektrophotometers bestimmt wird, und wobei die Deckkraft bestimmt wird auf der Grundlage einer trockenen Beschichtung der Zusammensetzung mit einer Dicke von etwa 0,015 mm auf einem LENETA Form 24B Graustufendiagramm.

41. Laminat, umfassend:

a) ein Bodenbelagsubstrat; und
b) eine aufgehellte Trockenbeschichtungsschicht, die über dem Bodensubstrat vorgesehen ist; wobei die aufgehellte Trockenbeschichtungsschicht das Ergebnis des Aufbringens einer Bodenlackzusammensetzung nach den Ansprüchen 1 bis 40 ist.

42. Laminat nach Anspruch 41, wobei das Bodenbelagsubstrat mindestens eines aus Vinylplattenbodenbelag, Linoleum, Kautschukfolierung, Vinyl-Verbundfliese, Gummifliese, Kork, synthetischer Sportboden, Stein, Marmor, Holz, Keramikfliese, Fugenmörtel, Terrazzo oder trocken gerüttelter Boden oder Vinylasbestfliesen umfasst.

43. Laminat nach Anspruch 41, ferner umfassend eine Versiegelungsschicht zwischen dem Bodenbelagsubstrat und der aufgehellten Trockenbeschichtungsschicht.

44. Laminat nach Anspruch 43, ferner umfassend eine Überzugsschicht, die über der aufgehellten Trockenbeschichtungsschicht vorgesehen ist.

45. Laminat nach Anspruch 44, wobei die Überzugsschicht kein Helligkeit-induzierendes Mittel enthält.

46. Laminat nach Anspruch 41, wobei die aufgehellte Trockenbeschichtungsschicht als Teil einer Versiegelungsschicht vorgesehen ist.

47. Laminat nach Anspruch 41, ferner umfassend eine Mehrzahl von aufgehellten Trockenbeschichtungsschichten, die über dem Bodensubstrat vorgesehen sind.

48. Laminat nach Anspruch 41, ferner umfassend eine Unterbeschichtungsschicht, die zwischen dem Bodenbelagsubstrat und der aufgehellten Trockenbeschichtungsschicht vorgesehen ist.

49. Laminat nach Anspruch 41, wobei die aufgehellte Trockenbeschichtungsschicht mindestens eines von Säure/Base-Indikatoren, Fluoreszenzindikatoren, Redoxindikatoren, metallochrome Indikatoren oder photonenempfindliche Farbstoffe umfasst.

50. Laminat nach Anspruch 41, wobei die aufgehellte Trockenbeschichtung ein Fluorescein oder ein Fluoresceinderivat umfasst.

51. Verfahren zum Behandeln eines Bodens, wobei das Verfahren die Schritte umfasst von:

a) Abstreifen eines Lacks von einem Bodenbelagsubstrat, um ein abgestreiftes Bodenbelagsubstrat bereitzustellen; und

b) Aufbringen einer Bodenlackzusammensetzung nach den Ansprüchen 1 bis 40 über das abgestreifte Bodenbelagsubstrats

52. Verfahren zum Behandeln eines Bodens, wobei das Verfahren die Schritte umfasst von:

a) Reinigen einer Lackschicht auf einem Bodenbelagsubstrat, um einen gereinigten Lack bereitzustellen; und
b) Aufbringen einer Bodenlackzusammensetzung nach den Ansprüchen 1 bis 40 über den gereinigten Lack.

53. Verfahren nach den Ansprüchen 51 oder 52, wobei der Schritt des Aufbringens einer Bodenlackzusammensetzung das Aufbringen der Bodenlackzusammensetzung mit einem Mopp umfasst.

54. Verfahren nach Anspruch 53, wobei der Mopp einen flachen Mopp oder einen Fasermopp umfasst, wenn die Bodenlackzusammensetzung über den gereinigten Lack aufgebracht wird, oder einen Fasermopp oder einen Mikrofasermopp, wenn die Bodenlackzusammensetzung über das abgestreifte Bodensubstrat aufgebracht wird.

55. Verfahren nach den Ansprüchen 51 oder 52, wobei der Schritt des Aufbringens einer Bodenlackzusammensetzung über einen gereinigten Lack oder über ein abgestreiftes Boodenbelagsubstrat Aufbringen der Bodenlackzusammensetzung bei einer Rate von etwa 250 Fuß$^2$/gal bis etwa 5.000 Fuß$^2$/gal umfasst.

56. Verfahren nach den Ansprüchen 51 oder 52, wobei der Schritt des Aufbringens einer Bodenlackzusammensetzung über einen gereinigten Lack oder über ein abgestreiftes Boodenbelagsubstrat Aufbringen der Bodenlackzusammensetzung bei einer Rate von etwa 500 Fuß$^2$/gal bis etwa 3.000 Fuß$^2$/gal umfasst.

57. Verfahren nach den Ansprüchen 51 oder 52, wobei der Schritt des Aufbringens einer Bodenlackzusammensetzung über einen gereinigten Lack oder über ein abgestreiftes Boodenbelagsubstrat Aufbringen der Bodenlackzusammensetzung bei einer Rate von etwa 300 Fuß$^2$/gal bis etwa 800 Fuß$^2$/gal umfasst.

58. Verfahren nach den Ansprüchen 51 oder 52, ferner umfassend einen Schritt von:

(a) Zulassen, dass die Bodenlackzusammensetzung trocknet, um eine getrocknete Beschichtung zu bilden; und
(b) Aufbringen einer Bodenlackzusammensetzung über die getrocknete Beschichtung.

59. Verfahren nach Anspruch 58, wobei die über die getrocknete Beschichtung aufgebrachte Bodenlackzusammensetzung ein Helligkeit-induzierendes Mittel enthält.

60. Verfahren nach Anspruch 58, wobei die über die getrocknete Beschichtung aufgebrachte Bodenlackzusammensetzung kein Helligkeit-induzierendes Mittel enthält.

61. Verfahren nach den Ansprüchen 51 oder 52, wobei die Bodenlackzusammensetzung eine klebfreie Zeit von weniger als etwa 2 Stunden bereitstellt.

62. Kit, umfassend:

(a) eine Bodenlackzusammensetzung nach den Ansprüchen 1 bis 40 und
(b) zumindest eines von einem Mopp, einem Applikationskopf, einem Maskiermaterial, Sicherheitsausrüstung, einem Behälteröffner, einem Rucksack zum Halten der Bodenlackzusammensetzung, Instruktionen zum Verwenden der Bodenlackzusammensetzung, oder Mischwerkzeuge.

63. Kit, umfassend einen Filmbildner, der in einem ersten Behälter vorgesehen ist, ein Helligkeit-induzierendes Mittel, das in einem zweiten Behälter vorgesehen ist, und ein Verdünnungsmittel, das in dem ersten, zweiten oder beiden Behältern bereitgestellt ist, zusammen mit Anweisungen zum Mischen eines Teils oder des gesamten Inhalts des ersten und des zweiten Behälter an einer beabsichtigten Gebrauchsstelle, um eine erleichterte Bodenlackzusammensetzung nach den Ansprüchen 1 bis 40 bereitzustellen.

64. Kit nach Anspruch 63, ferner umfassend mindestens eines aus einem Mopp, einem Applikationskopf, einem Maskiermaterial, Sicherheitsausrüstung, einem Behälteröffner, einem Rucksack zum Halten der Bodenlackzusammensetzung, Instruktionen zum Verwenden der Bodenlackzusammensetzung, oder Mischwerkzeuge.

**Revendications**

1. Composition de revêtement de sols comprenant un agent filmogène, 1 % en poids à 30 % ou poids d'un agent inducteur de luminosité, et un diluant, dans lequel l'agent inducteur de luminosité est présent en quantité suffisante pour que la composition fournisse, lorsqu'elle est évaluée en utilisant un revêtement durci ayant une épaisseur d'environ 0,005 mm sur une carte d'opacité LENETA formule 5C et un spectrophotomètre MINISCAN XE Plus color ayant un éclairage à 45° et une géométrie de vision de 0° :

   a) une valeur de luminosité accrue L* sur la partie noire de la carte et
   b) un rapport de contraste ($CR_{0,80}$) inférieur à environ 0,7 lorsqu'il est évalué sur les parties noire et blanche de la carte.

2. Composition de revêtement de sols selon la revendication 1, dans laquelle l'agent filmogène comprend au moins un polymère de polyacrylate, des composés formateurs de polymère de polyacrylate, un polymère polyacrylique, des composants formateurs de polymère polyacrylique ou leurs mélanges.

3. Composition de revêtement de sols selon la revendication 2, dans laquelle l'agent filmogène comprend un agent filmogène contenant un métal.

4. Composition de revêtement de sols selon la revendication 2, dans laquelle l'agent filmogène comprend un agent filmogène sans métal.

5. Composition de revêtement de sols selon la revendication 1, dans laquelle l'agent filmogène comprend au moins l'un(e) d'un polymère de polyuréthane, d'un polymère d'époxyde, d'un polymère réticulable d'aziridine, d'un polymère réticulable de carbodiimide, d'une émulsion de cire, d'un chloropolymère, d'un fluoropolymère, d'un polymère d'alcool polyvinylique, d'un polymère de polyvinylpyrrolidone, d'un polymère de polyimide, d'un polymère de polyamide, d'un polymère de polycarbonate, d'un polymère de cellulose, d'un polymère durci par rayonnement ou un de leurs mélanges.

6. Composition de revêtement de sols selon la revendication 1, dans laquelle le diluant est présent en quantité inférieure à environ 5 % en poids de diluant.

7. Composition de revêtement de sols selon la revendication 1, dans laquelle la composition comprend environ 30 % en poids à environ 97 % en poids du diluant.

8. Composition de revêtement de sols selon la revendication 1, dans laquelle la composition comprend environ 40 % en poids à environ 90 % en poids du diluant.

9. Composition de revêtement de sols selon la revendication 1, dans laquelle la composition comprend environ 70 % en poids à environ 85 % en poids du diluant.

10. Composition de revêtements de sols selon la revendication 1, dans laquelle au moins une partie du diluant comprend un solvant organique.

11. Composition de revêtement de sols selon la revendication 1, dans laquelle la composition comprend environ 1 % en poids à environ 20 % en poids d'agent inducteur de luminosité.

12. Composition de revêtement de sols selon la revendication 1, dans laquelle la composition comprend environ 3 % en poids à environ 15 % en poids de l'agent inducteur de luminosité.

13. Composition de revêtement de sols selon la revendication 1, dans laquelle l'agent inducteur de luminosité comprend un système polymère.

14. Composition de revêtement de sols selon la revendication 13, dans laquelle le système polymère comprend au moins l'un d'un système polymère noyau-coque ou d'un système polymère gainé.

15. Composition de revêtement de sols selon la revendication 1, dans laquelle l'agent inducteur de luminosité comprend un « blanc pigmentaire » selon la Society of Dyers and Colourists Colour Index.

16. Composition de revêtement de sols selon la revendication 1, dans laquelle l'agent inducteur de luminosité comprend un agent inducteur de luminosité soluble dans le diluant ayant un niveau de solubilité dans le diluant d'au moins 10 g/L.

17. Composition de revêtement de sols selon la revendication 1, dans laquelle l'agent inducteur de luminosité comprend un composé organométallique qui réagit avec des groupements hydroxyle ou carboxyle sur l'agent filmogène.

18. Composition de revêtement de sols selon la revendication 17, dans laquelle le composé organométallique comprend au moins l'un de titanates organiques, de zirconates organiques ou de mélanges de titanates organiques et de zirconates organiques.

19. Composition de revêtement de sols selon la revendication 1, dans lequel l'agent inducteur de luminosité comprend du dioxyde de titane.

20. Composition de revêtement de sols selon la revendication 1, dans laquelle l'agent inducteur de luminosité comprend une combinaison d'un pigment inorganique et d'un système polymère.

21. Composition de revêtement de sols selon la revendication 1, comprenant en outre environ 0,001 % en poids à environ 5 % en poids d'un indicateur visible.

22. Composition de revêtement de sols selon la revendication 22, dans lequel l'indicateur comprend au moins l'un d'indicateurs acide/base, d'indicateurs fluorescents, d'indicateurs redox, d'indicateurs métallochromiques ou de colorants sensibles aux photons.

23. Composition de revêtement de sols selon la revendication 1, comprenant en outre de la fluorescéine ou un dérivé de fluorescéine.

24. Composition de revêtement de sols selon la revendication 1, dans laquelle la composition comprend en outre environ 0,005 % en poids à environ 5 % en poids d'un agent dispersant.

25. Composition de revêtement de sols selon la revendication 1, dans laquelle la composition comprend en outre environ 0,1 % en poids à environ 10 % en poids de plastifiant.

26. Composition de revêtement de sols selon la revendication 1, dans laquelle la composition a un niveau de solides d'environ 3 % en poids à environ 50 % en poids.

27. Composition de revêtement de sols selon la revendication 1, dans laquelle la composition a un niveau de solides d'environ 5 % en poids à environ 40 % en poids.

28. Composition de revêtement de sols selon la revendication 1, dans laquelle la composition a un niveau de solides d'environ 8 % en poids à environ 30 % en poids.

29. Composition de revêtement de sols selon la revendication 1, dans laquelle la composition fournit un temps sec au toucher inférieur à environ 2 heures lorsqu'elle est appliquée à une carte d'opacité LENETA Formule 5C en utilisant une barre d'application n° 20 (de Paul N. Gardner Co.).

30. Composition de revêtement de sols selon la revendication 1, dans laquelle la composition fournit un temps sec au toucher de moins d'environ 1,5 heure lorsqu'elle est appliquée à une carte d'opacité LENETA Formule 5C en utilisant une barre d'application n° 20 (de Paul N. Gardner Co.).

31. Composition de revêtement de sols selon la revendication 1, dans laquelle la composition fournit un temps sec au toucher de moins d'environ 1 heure lorsqu'elle est appliquée à une carte d'opacité LENETA Formule 5C en utilisant une barre d'application n° 20 (de Paul N. Gardner Co.)..

32. Composition de revêtement de sols selon la revendication 1, dans laquelle la composition de revêtement de sols a une viscosité inférieure à environ 100 cps.

33. Composition de revêtement de sols selon la revendication 1, dans laquelle la composition de revêtement de sols a une viscosité inférieure à environ 50 cps.

**34.** Composition de revêtement de sols selon la revendication 1, dans laquelle la composition fournit le rapport de contraste ($CR_{0,80}$) d'environ 0,1 à environ 0,6.

**35.** Composition de revêtement de sols selon la revendication 1, dans laquelle la valeur de luminosité L* est supérieure à environ 10.

**36.** Composition de revêtement de sols selon la revendication 1, dans laquelle la valeur de luminosité L* est supérieure à environ 20.

**37.** Composition de revêtement de sols selon la revendication 1, dans laquelle l'agent inducteur de luminosité est fourni dans la composition en quantité suffisante pour fournir un revêtement durci ayant une épaisseur d'environ 0,005 mm sur une partie noire d'une carte d'opacité LENETA Formule 5C ayant un indice de blancheur accrue WI mesuré en utilisant un spectromètre MINISCAN XE Plus color.

**38.** Composition de revêtement de sols selon la revendication 37, dans laquelle l'indice de blancheur est d'au moins environ 5.

**39.** Composition de revêtement de sols selon la revendication 37, dans laquelle l'indice de blancheur est d'au moins environ 10.

**40.** Composition de revêtement de sols selon la revendication 1, dans laquelle la composition présente un rapport de la valeur de luminosité L* au pouvoir couvrant de plus d'environ 35, dans laquelle la valeur de luminosité L* est déterminée sur la base d'un revêtement sec de la composition ayant une épaisseur d'environ 0,015 mm sur une carte d'opacité LENETA Formule 5C et en utilisant un spectromètre MINISCAN XE Plus color et le pouvoir couvrant est déterminé sur la base d'un revêtement sec de la composition ayant une épaisseur d'environ 0,015 mm sur une carte d'échelle des gris LENETA Formule 24B.

**41.** Stratifié comprenant :

       a) un substrat de revêtement du sol ; et
       b) une couche de revêtement sec éclaircie pourvue sur le substrat de revêtement du sol ;

dans lequel la couche de revêtement sec éclaircie comprend un résultat d'application d'une composition de revêtement de sols selon les revendications 1 à 40.

**42.** Stratifié selon la revendication 41, dans lequel le substrat de revêtement du sol comprend au moins l'un(e) d'un revêtement de feuille de vinyle, d'un linoléum, d'un revêtement de sol de caoutchouc, d'une tuile composite de vinyle, d'une tuile de caoutchouc, de liège, de revêtement de sport synthétique, de pierre, de marbre, de bois, de tuile céramique, de mortier, de terrazzo ou d'un revêtement de sol d'écailles à sec ou encore d'une tuile d'asbeste vinylique.

**43.** Stratifié selon la revendication 41, comprenant en outre une couche de scellage entre le substrat de revêtement de sol et la couche de revêtement sèche éclaircie.

**44.** Stratifié selon la revendication 43, comprenant en outre une surcouche disposée par-dessus la couche de revêtement sèche éclaircie.

**45.** Stratifié selon la revendication 44, dans lequel la surcouche ne comprend pas un agent inducteur de luminosité.

**46.** Stratifié selon la revendication 41, dans lequel la couche de revêtement sèche éclaircie est fournie sous la forme d'une partie d'une couche d'étanchéité.

**47.** Stratifié selon la revendication 41, comprenant en outre une pluralité de couches de revêtement sèches éclaircies disposées sur le substrat de revêtement du sol.

**48.** Stratifié selon la revendication 41, comprenant en outre une sous-couche fournie entre le substrat de revêtement du sol et la couche de revêtement sèche éclaircie.

**49.** Stratifié selon la revendication 41, dans lequel la couche de revêtement sèche éclaircie comprend au moins l'un d'indicateurs d'acide/base, d'indicateurs fluorescents, d'indicateurs redox, d'indicateurs métallochromiques ou de colorants sensibles aux photons.

**50.** Stratifié selon la revendication 41, dans lequel le revêtement sec éclairci comprend de la fluorescéine ou un additif de fluorescéine.

**51.** Procédé de traitement d'un sol, le procédé comprenant les étapes consistant à :

a) dégarnir un revêtement d'un substrat de revêtement de sol pour fournir un substrat de revêtement de sol dégagé ; et
b) appliquer une composition de revêtement de sols selon les revendications 1 à 40 par-dessus le substrat de sol dégagé.

**52.** Procédé de traitement d'un sol, le procédé comprenant les étapes consistant à :

a) nettoyer un revêtement sur un substrat de revêtement de sol pour fournir un revêtement nettoyé ; et
b) appliquer une composition de revêtement de sols selon les revendications 1 à 40 par-dessus le revêtement nettoyé.

**53.** Procédé selon les revendications 51 ou 52, dans lequel l'étape d'application d'une composition de revêtement de sols comprend l'application de la composition de revêtement de sols avec un balai.

**54.** Procédé selon la revendication 53, dans lequel le balai comprend un balai plat ou un balai à bandes lors de l'application de la composition de revêtement de sols par-dessus le revêtement nettoyé ou un balai à bandes ou un balai à microfibres lors de l'application de la composition de revêtement de sols par-dessus le substrat de revêtement de sol dégagé.

**55.** Procédé selon les revendications 51 ou 52, dans lequel l'étape d'application d'une composition de revêtement de sols par-dessus un revêtement nettoyé ou par-dessus un substrat de revêtement de sol dégagé comprend l'application de la composition de revêtements de sols à raison d'environ 250 ft$^2$/gal à environ 5 000 ft$^2$/gal.

**56.** Procédé selon les revendications 51 ou 52, dans lequel l'étape d'application d'une composition de revêtement de sols par-dessus un revêtement nettoyé ou par-dessus un substrat de revêtement de sol dégagé comprend l'application de la composition de revêtement de sols à raison d'environ 500 ft$^2$/gal à environ 3 000 ft$^2$/gal.

**57.** Procédé selon les revendications 51 ou 52, dans lequel l'étape d'application d'une composition de revêtement de sols par-dessus un revêtement nettoyé ou un substrat de revêtement de sol dégagé comprend l'application de la composition de revêtement de sols à raison d'environ 300 ft$^2$/gal à environ 800 ft$^2$/gal.

**58.** Procédé selon les revendications 51 ou 52, comprenant en outre une étape consistant à :

(a) permettre à la composition de revêtement de sols de sécher pour former un revêtement sec ; et
(b) appliquer une composition de revêtement de sols par-dessus le revêtement séché.

**59.** Procédé selon la revendication 58, dans lequel la composition de revêtement de sols appliquée par-dessus le revêtement séché comprend un agent inducteur de luminosité.

**60.** Procédé selon la revendication 58, dans lequel la composition de revêtement de sols appliquée par-dessus le revêtement séché n'inclut pas d'agent inducteur de luminosité.

**61.** Procédé selon les revendications 51 ou 52, dans lequel la composition de revêtement de sols fournit un temps sec au toucher inférieur à environ 2 heures.

**62.** Kit comprenant ;

(a) une composition de revêtement de sols selon les revendications 1 à 40
et

(b) au moins l'un d'un balai, d'une tête d'application, d'un matériau de masquage, d'un équipement de sécurité, d'un ouvreur de conteneur, d'un sac à dos pour contenir la composition de revêtement de sols, des instructions pour utiliser la composition de revêtement de sols ou des outils de mélange.

**63.** Kit comprenant un agent filmogène disposé dans un premier conteneur, un agent inducteur de luminosité fourni dans un second conteneur et un diluant fourni dans le premier, le deuxième ou les deux conteneurs conjointement avec des instructions pour mélanger une partie ou la totalité du contenu du premier et du second conteneur sur un site à usage prévu pour fournir une composition de revêtement de sols éclaircie selon les revendications 1 à 40.

**64.** Kit selon la revendication 63, comprenant en outre au moins l'un ou l'autre d'une balai, d'une tête d'application, d'un matériau de masquage, d'un équipement de sécurité, d'un ouvreur de conteneur, d'un sac à dos pour contenir la composition de revêtement de sols, des instructions pour utiliser la composition de revêtement de sols ou des outils de mélange.

## FIG.1

(a)

(b)

(c)

**FIG.2**

**FIG.3**

**FIG.4**

**FIG.5**

# FIG. 6

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4680237 A
- US 5284705 A
- US 5851618 A
- US 6472027 B
- US 4371398 A
- US 5445670 A
- US 4427836 A
- US 4594363 A
- US 10857593 B
- US 4517330 A
- US 4999216 A
- US 5091211 A
- US 5319018 A
- US 5453451 A
- US 5773487 A
- US 5830937 A
- US 6096383 A
- US 6197844 B
- US 6228433 B
- US 6316535 B1
- US 6544942 B1
- US 20020028621 A1
- WO 10755972 A
- WO 10755975 A
- WO 10755976 A
- US 65742000 A
- US 5315734 A
- US 5390390 A
- US 5680667 A
- US 5887311 A
- US 6695516 B
- US 6550998 B
- US 5574090 A

**Non-patent literature cited in the description**

- pigment whites. Society of Dyers and Colourists Colour Index
- **BROOKFIELD.** More Solutions to Sticky Problems. Brookfield Engineering Labs, Inc, 1-50
- **D. B. BROWN ; M. R. ROSEN.** The Rheology Modifier Handbook. ChemTec, 1999
- Merck Index. Merck Research Laboratories, 1996
- Lange's Handbook of Chemistry. McGraw-Hill, Inc, 1999
- CRC Handbook of Chemistry and Physics. CRC Press, 1991
- CRC Handbook of Chemistry and Physics. CRC Press, 8-15